(19) Europäisches Patentamt / European Patent Office / Office européen des brevets

(11) **EP 4 678 083 A1**

(12) **EUROPEAN PATENT APPLICATION**
published in accordance with Art. 153(4) EPC

(43) Date of publication:
**14.01.2026 Bulletin 2026/03**

(21) Application number: **24856591.3**

(22) Date of filing: **21.05.2024**

(51) International Patent Classification (IPC):
**A47L 11/40** (2006.01)  **G05B 11/28** (2006.01)
**H02P 27/08** (2006.01)

(52) Cooperative Patent Classification (CPC):
**A47L 11/40; G05B 11/28; H02P 27/08**

(86) International application number:
**PCT/KR2024/006869**

(87) International publication number:
**WO 2025/041971 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 24.08.2023 KR 20230111518
08.12.2023 KR 20230178040

(71) Applicant: **Samsung Electronics Co., Ltd**
**Suwon-si, Gyeonggi-do 16677 (KR)**

(72) Inventors:
• **CHO, Yoonkyung**
  **Suwon-si, Gyeonggi-do 16677 (KR)**
• **KIM, Soohoon**
  **Suwon-si, Gyeonggi-do 16677 (KR)**
• **SEON, Juhan**
  **Suwon-si, Gyeonggi-do 16677 (KR)**
• **LEE, Seongu**
  **Suwon-si, Gyeonggi-do 16677 (KR)**
• **LEE, Ahyoung**
  **Suwon-si, Gyeonggi-do 16677 (KR)**
• **LEE, Yeongju**
  **Suwon-si, Gyeonggi-do 16677 (KR)**
• **JEONG, Jaeshik**
  **Suwon-si, Gyeonggi-do 16677 (KR)**

(74) Representative: **Walaski, Jan Filip**
**Venner Shipley LLP**
**200 Aldersgate**
**London EC1A 4HD (GB)**

(54) **CLEANER INCLUDING WET MOP BRUSH**

(57)    A vacuum cleaner includes a cleaner main body including a battery, and a wet mop brush driven by power supplied from the battery. The wet mop brush may include at least one mop pad provided on a bottom of a brush body to contact a surface to be cleaned, a motor configured to rotate the at least one mop pad, a heater configured to heat water supplied from a water tank to a heating tank, a sprayer configured to spray the water heated by the heater toward the surface to be cleaned, a pump configured to provide pressure for moving the water from the water tank to the sprayer, and a processor configured to adjust an amount of power supplied to at least one of the motor, the heater, or the pump based on a first current threshold available in the wet mop brush.

FIG. 1

## Description

### 1. Technical Field

An embodiment of the disclosure relates to a vacuum cleaner including a wet mop brush, and more particularly to a vacuum cleaner including a wet mop brush configured to spray water heated by a heater and an operation method of the vacuum cleaner.

### 2. Background Art

A cordless vacuum cleaner is a type of vacuum cleaner operated by charging a battery built into the vacuum cleaner itself without the need to connect a wire to a power outlet. The cordless vacuum cleaner includes a suction motor for generating suction power, and may suck in foreign substances such as dust along with air from a cleaner head (brush) by using the suction power generated by the suction motor, and separate the sucked in foreign substances from the air to collect the foreign substances.

### Summary of Invention

According to an embodiment, a vacuum cleaner may include a cleaner main body including a battery, and a wet mop brush detachably connected to the cleaner main body and driven by power supplied from the battery. According to an embodiment, the wet mop brush may include at least one mop pad provided on a bottom of a brush body to contact a surface to be cleaned, a motor configured to rotate the at least one mop pad, a heater configured to heat water supplied from a water tank to a heating tank, a sprayer configured to spray the water heated by the heater toward the surface to be cleaned, a pump configured to provide pressure for moving the water from the water tank to the sprayer, and at least one processor configured to adjust an amount of power supplied to at least one of the motor, the heater, or the pump based on a first current threshold available in the wet mop brush.

According to an embodiment, the wet mop brush may include at least one mop pad provided on a bottom of a brush body to contact a surface to be cleaned, a motor configured to rotate the at least one mop pad, a heater configured to heat water supplied from a water tank to a heating tank, a sprayer configured to spray the water heated by the heater toward the surface to be cleaned, a pump configured to provide pressure for moving the water from the water tank to the sprayer, and at least one processor configured to adjust an amount of power supplied to the heater based on a first current threshold available in the wet mop brush.

### Brief Description of Drawings

The above and other aspects, features, and advantages of the embodiments will be more apparent from the following description taken in conjunction with the accompanying drawings, in which:

FIG. 1 is a graphic diagram illustrating a vacuum cleaner, according to an embodiment.
FIG. 2 is a graphic diagram illustrating a cleaner main body, according to an embodiment.
FIG. 3 is a graphic diagram illustrating an operation of at least one processor, according to an embodiment.
FIG. 4 is a schematic diagram illustrating an operation of detecting a type of a brush device, according to an embodiment.
FIG. 5A is a schematic block diagram illustrating functions of a vacuum cleaner for signal line communication, according to an embodiment.
FIG. 5B is a schematic block diagram illustrating functions of a vacuum cleaner including an extension pipe, according to an embodiment.
FIG. 6 is a schematic diagram illustrating a circuit of a vacuum cleaner for signal line communication, according to an embodiment.
FIG. 7 is a perspective view of a wet mop brush, according to an embodiment.
FIG. 8 is an exploded, perspective view showing a portion of the wet mop brush of FIG. 7, according to an embodiment.
FIG. 9 is a perspective view illustrating a bottom surface of the wet mop brush of FIG. 7, according to an embodiment.
FIG. 10 is a graphic diagram illustrating a portion of a wet mop brush, according to an embodiment.
FIG. 11 is a front view of a heating module of a wet mop brush, according to an embodiment.
FIG. 12 is an exploded perspective view of the heating module of FIG. 11, according to an embodiment.
FIG. 13 is a schematic block diagram for describing functions of a wet mop brush, according to an embodiment.
FIG. 14 is a graphic diagram for describing pulse width modulation (PWM) control performed by a wet mop brush, according to an embodiment.

FIG. 15 is a flowchart of a method, performed by a wet mop brush, of adjusting the amount of power supplied to each load based on a current threshold, according to an embodiment.

FIG. 16 is a flowchart of a method, performed by a wet mop brush, of adjusting the amount of power supplied to each load based on a reference current set for each load, according to an embodiment.

FIG. 17 is a diagram illustrating an operation in which a wet mop brush adjusts the amount of power supplied to a heater or motor, according to an embodiment.

FIG. 18 is a flowchart of a method, performed by a wet mop brush, of controlling a heater based on a temperature of water stored in a heating tank, according to an embodiment.

FIG. 19 is a graphic diagram illustrating an operation in which a vacuum cleaner displays a screen associated with a hot water function, according to an embodiment.

FIG. 20 is a graphic diagram illustrating an operation in which a vacuum cleaner provides a lukewarm water mode and a high-temperature water mode, according to an embodiment.

FIG. 21 is a graphic diagram illustrating an operation in which a vacuum cleaner outputs information related to preheating, according to an embodiment.

FIG. 22 is a flowchart of a method, performed by a vacuum cleaner, of outputting a notification related to a water tank, according to an embodiment.

FIG. 23 is a flowchart of a method, performed by a wet mop brush, of adjusting the amount of power supplied to a motor, according to an embodiment.

FIG. 24 is a flowchart of an operation method of a wet mop brush in a manual spraying mode, according to an embodiment.

FIG. 25 is a graphic diagram illustrating an operation in which a wet mop brush drives a pump in a manual spraying mode, according to an embodiment.

FIG. 26 is a flowchart of an operation method of a wet mop brush in an automatic spraying mode, according to an embodiment.

FIG. 27 is a graphic diagram illustrating an operation of a vacuum cleaner in conjunction with a server device, according to an embodiment.

FIG. 28 is a graphic diagram illustrating a graphical user interface (GUI) related to setting a spray amount, spray intensity, spray time, or water temperature, according to an embodiment.

Mode(s) for Carrying out the Invention

Terms used in the disclosure will now be briefly described and an embodiment of the invention will be described in detail.

As the terms used herein, general terms that are currently widely used are selected by taking into account functions in an embodiment of the invention, but the terms may be changed according to an intention of one of ordinary skill in the art, precedent cases, advent of new technologies, etc. Furthermore, specific terms may be arbitrarily selected by the applicant, and in this case, the meaning of the selected terms will be described in detail in the detailed description of a corresponding embodiment of the disclosure. Thus, the terms used herein should be defined not by simple appellations thereof but based on the meaning of the terms together with the overall description of the disclosure.

Throughout the disclosure, the expression "at least one of a, b or c" indicates only a, only b, only c, both a and b, both a and c, both b and c, all of a, b, and c, or variations thereof.

Throughout the disclosure, when a part "includes" or "comprises" an element, unless there is a particular description contrary thereto, the part may further include other elements, not excluding the other elements. Furthermore, terms, such as "portion," "module," etc., used herein indicate a unit for processing at least one function or operation, and may be embodied as hardware or software or a combination of hardware and software.

Embodiments will be described more fully hereinafter with reference to the accompanying drawings so that the embodiments may be easily implemented by one of ordinary skill in the art of the disclosure. However, an embodiment may be implemented in different forms, and the invention should not be construed as being limited to an embodiment set forth herein. In addition, parts not related to descriptions may be omitted to clearly explain an embodiment of the invention in the drawings, and like reference numerals denote like elements throughout.

While such terms as "first" and "second" may be used to describe various elements, such elements must not be limited to the above terms. The above terms are used to distinguish one element from another.

The singular forms "a," "an," and "the" as used herein are intended to include the plural forms as well unless the context clearly indicates otherwise.

It will be understood that the terms "comprise," "comprising," "include" and/or "including" as used herein specify the presence of stated features or elements but do not preclude the addition of one or more other features or elements.

It will be further understood that, when a layer, region, or element is referred to as being "on" another layer, region, or element, it can be directly or indirectly on the other layer, region, or element. That is, for example, intervening layers, regions, or elements may be present.

Sizes of elements in the drawings may be exaggerated or reduced for convenience of explanation. As an example, the size and thickness of each element shown in the drawings are arbitrarily represented for convenience of description, and thus, the invention is not necessarily limited thereto.

In the case where a certain embodiment may be implemented differently, a specific process order may be performed in the order different from the described order. As an example, two processes successively described may be simultaneously performed substantially and performed in the opposite order.

In the present specification, "A and/or B" means A or B, or A and B. In the present specification, "at least one of A and B" means A or B, or A and B.

It will be understood that when a layer, region, or element is referred to as being "connected" to another layer, region, or element, it may be "directly connected" to the other layer, region, or element or may be "indirectly connected" to the other layer, region, or element with another layer, region, or element located therebetween. For example, it will be understood that when a layer, region, or element is referred to as being "electrically connected" to another layer, region, or element, it may be "directly electrically connected" to the other layer, region, or element or may be "indirectly electrically connected" to the other layer, region, or element with another layer, region, or element interposed therebetween.

The x-axis, the y-axis and the z-axis are not limited to three axes of the rectangular coordinate system and may be interpreted in a broader sense. For example, the x-axis, the y-axis, and the z-axis may be directed perpendicular to one another, or may represent different orientations that are not perpendicular to one another.

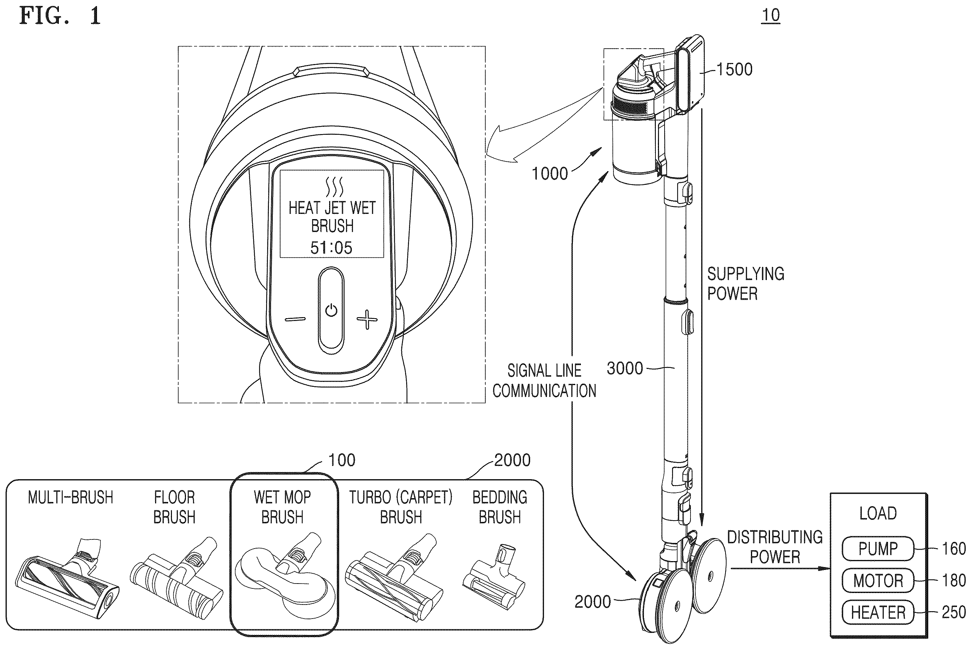

FIG. 1 is a diagram illustrating a vacuum cleaner 10, according to an embodiment.

While FIG. 1 illustrates an embodiment in which the vacuum cleaner 10 is a stick-type cordless vacuum cleaner, the invention is not limited thereto. For example, an embodiment may also be applied to a handheld vacuum cleaner or a robot vacuum cleaner.

In an embodiment, a cordless vacuum cleaner may refer to a vacuum cleaner that has a built-in rechargeable battery and does not need to connect a power cord to a power outlet during cleaning. According to an embodiment, the cordless vacuum cleaner may include a cleaner main body 1000, a brush device 2000, and an extension pipe 3000. However, all of the components shown in FIG. 1 are not essential components. The cordless vacuum cleaner may be implemented with more or fewer components than those shown in FIG. 1. For example, in an embodiment, the cordless vacuum cleaner may be implemented with the cleaner main body 1000 and the brush device 2000, excluding the extension pipe 3000. The cordless vacuum cleaner may further include a station (not shown) for ejecting dust from the cleaner main body 1000 and charging a battery.

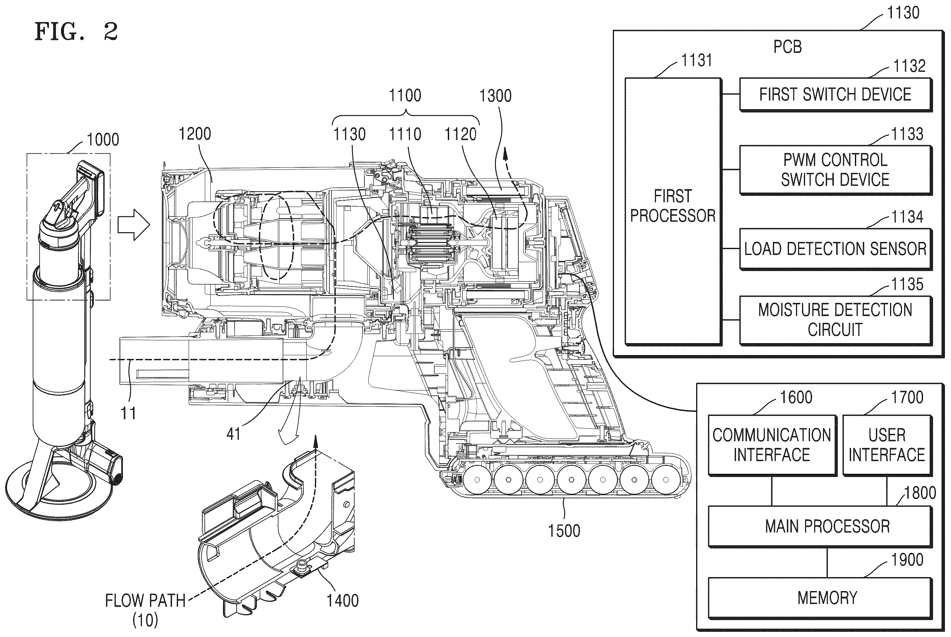

In an embodiment, the cleaner main body 1000 may include a suction motor that creates a vacuum within the vacuum cleaner 10, a dust collection container (a dust bin) in which foreign substances sucked in from a surface being cleaned (e.g., a floor, bedding, sofa, etc.) are received, and a handle that the user may hold in one hand to move the vacuum cleaner 10 during cleaning. A configuration of the cleaner main body 1000 is described in more detail below with reference to FIG. 2.

In an embodiment, the cleaner main body 1000 may include a mounting portion on which the extension pipe 3000 or brush device 2000 is mounted. The extension pipe 3000 may be formed as a hollow pipe. The extension pipe 3000 may have certain rigidity. Furthermore, the extension pipe 3000 may be formed as a flexible hose. The brush device 2000 may be detachably connected to one end of the extension pipe 3000. The other end of the extension pipe 3000 may be detachably connected to an extension pipe mounting portion of the cleaner main body 1000. The extension pipe 3000 may transmit suction power generated by the suction motor of the cleaner main body 1000 to the brush device 2000, and move air and foreign substances sucked in via the brush device 2000 to the cleaner main body 1000. The extension pipe 3000 may be formed in multiple stages between the cleaner main body 1000 and the brush device 2000. The extension pipe 3000 may be provided as two or more extension pipes 3000.

In an embodiment, the brush device 2000 connected to the cleaner main body 1000 or the extension pipe 3000 is a device that is in close contact with a surface to be cleaned and is capable of sucking in air and foreign substances from the surface to be cleaned. The brush device 2000 may also be referred to as a cleaner head. The brush device 2000 may be rotatably coupled to the extension pipe 3000. The brush device 2000 may include a motor 180, a drum with a rotating brush attached thereto, etc., but is not limited thereto. The brush device 2000 may be of various types. For example, the brush device 2000 may be categorized as, depending on the purpose, a general brush (floor brush), a carpet brush, a bedding brush, a pet brush, a wet mop brush 100, a multi-brush (a brush that may be used on both carpet and floors), etc., but is not limited thereto. An embodiment in which the brush device 2000 is the wet mop brush 100 for wet cleaning of a surface to be cleaned is described herein, but the invention is not limited thereto.

According to an embodiment, the wet mop brush 100 may include a motor 180 for rotating a mop, and a pump 160 for spraying water onto a front of the wet mop brush 100. According to an embodiment of the disclosure, the wet mop brush 100 may further include a heater 250 for heating water to spray hot water.

According to an embodiment, the wet mop brush 100 may receive power from a battery 1500 of the cleaner main body 1000 to drive the pump 160, the motor 180, or the heater 250. When the wet mop brush 100 is provided with a separate battery, the weight of the wet mop brush 100 may increase, which may degrade convenience of use and reduce the product competitiveness. Therefore, according to an embodiment, the wet mop brush 100 may not have a separate battery but may receive power from the battery 1500 of the cleaner main body 1000.

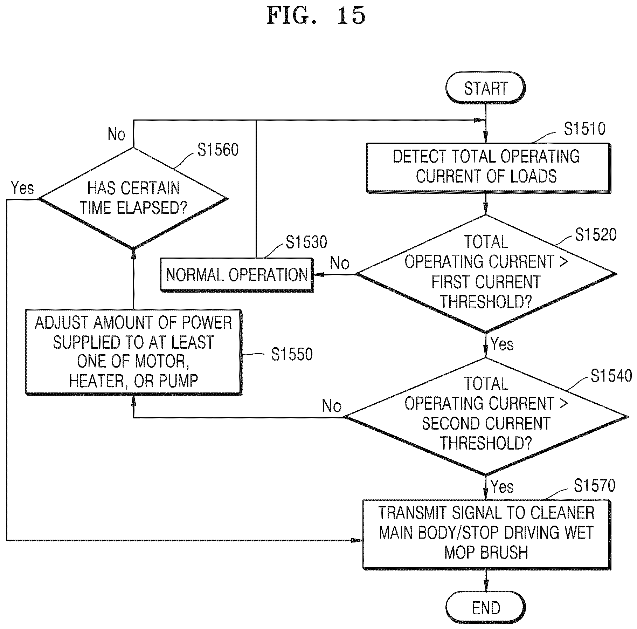

In an embodiment, when the wet mop brush 100 receives power from the battery 1500 of the cleaner main body 1000, there may be a limit to power usage of the wet mop brush 100. For the wet mop brush 100 that sprays high-temperature water, it may be equipped with the heater 250 that consumes large power. Furthermore, when pulse width modulation (PWM) control is performed for a suction motor controller of the cleaner main body 1000 to control power supply to the brush device 2000, it is difficult to perform appropriate current control in a circuit of the wet mop brush 100 with large loads. Therefore, according to an embodiment, the wet mop brush 100 may appropriately distribute power to the pump 160, the motor 180, and the heater 250 based on a current threshold (a power threshold) available in the wet mop brush 100, such as about 5 amperes (A). In an embodiment, at least one processor of the wet mop brush 100 may control the amount of power supplied to each load by individually controlling switch elements for PWM control (hereinafter referred to as PWM control switch elements) respectively connected to the pump 160, the motor 180, and the heater 250. Thus, according to an embodiment, the wet mop brush 100 that supplies hot water with high power consumption may efficiently use the power of the battery 1500 of the cleaner main body 1000. An operation in which the wet mop brush 100 controls the amount of power supplied to each load will be described in more detail below with reference to FIGS. 15 to 17.

According to an embodiment, each of the cleaner main body 1000, the brush device 2000, and the extension pipe 3000 included in the vacuum cleaner 10 may include a power line (e.g., a positive (+) power line and a negative (-) power line) and a signal line. The power line may be a line for transmitting power supplied from the battery 1500 to the cleaner main body 1000 and the brush device 2000 connected to the cleaner main body 1000. The signal line is different from the power line and may be a line for transmitting and receiving signals between the cleaner main body 1000 and the brush device 2000. The signal line may be implemented to be connected to the power line within the brush device 2000.

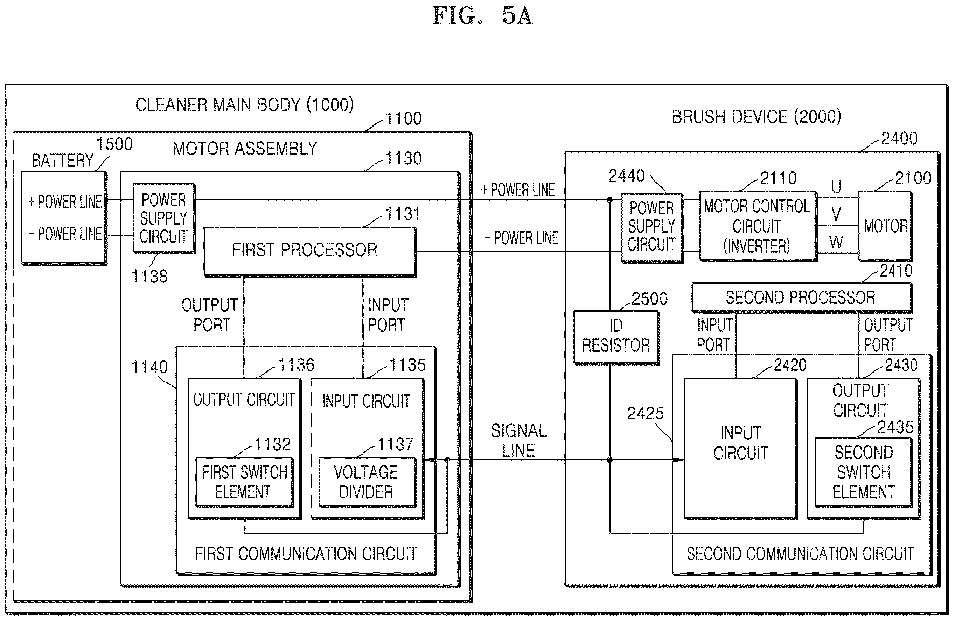

According to an embodiment, the cleaner main body 1000 and the brush device 2000 may transmit and receive signals, information, or data via the signal line. For convenience of description, the communication via the signal line is defined as 'signal line communication'. For example, when the wet mop brush 100 is connected to the cleaner main body 1000, the wet mop brush 100 may transmit the type of brush, information indicating detection of overcurrent for each load of the wet mop brush 100, etc. to the cleaner main body 1000 via signal line communication, and the cleaner main body 1000 may continuously monitor the status of the wet mop brush 100. The signal line communication will be described in more detail below with reference to FIGS. 5A to 6.

Hereinafter, the configuration of the cleaner main body 1000 is described in more detail with reference to FIG. 2, according to an embodiment.

FIG. 2 is a graphic block diagram for describing functions of the cleaner main body 1000, according to an embodiment.

In an embodiment and referring to FIG. 2, the cleaner main body 1000 may include a suction power generating device (hereinafter referred to as a motor assembly 1100) that generates suction power necessary to suck in foreign substances on a surface to be cleaned, and a dust collection container 1200 (also referred to as a dust bin) in which foreign substances sucked in from the surface to be cleaned are received, a filter unit 1300, a pressure sensor 1400, the battery 1500 capable of supplying power to the motor assembly 1100, a communication interface 1600, a user interface 1700, a main processor 1800, and a memory 1900. However, all of the components shown in FIG. 2 are not essential components. In another embodiment, the cleaner main body 1000 may be implemented with more or fewer components than those shown in FIG. 2. For example, the cleaner main body 1000 may further include a motion sensor (not shown).

Hereinafter, each of the components of the cleaner main body 1000 is described.

In an embodiment, the motor assembly 1100 may include a suction motor 1110 that converts an electrical force into a mechanical rotational force, an impeller 1120 that is connected to the suction motor 1110 and rotates, and a printed circuit board (PCB) (or a driving circuit)1130 connected to the suction motor 1110. Here, the PCB 1130 may include a printed board assembly (PBA). PBA may be the PCB 1130 with electronic components mounted thereon. The suction motor 1110 and the impeller 1120 connected to the suction motor 1110 to rotate may create a vacuum inside the vacuum cleaner 10. In this case, the vacuum refers to a state in which the air pressure in a space is below the atmospheric pressure. The suction motor 1110 may include a brushless motor (hereinafter referred to as a brushless direct current (BLDC) motor), but is not limited thereto.

In an embodiment, the PCB 1130 may include, but is not limited to, a processor (hereinafter referred to as a first processor 1131) that controls the suction motor 1110 and communication with the brush device 2000, a first switch element 1132 connected to a signal line, a switch element 1133 (hereinafter referred to as a PWM control switch element) used to supply power to the brush device 2000, a load detection sensor 1134 for detecting a load of the brush device 2000 and a moisture sensing circuit 1135 for detecting moisture entering the cleaner main body 1000 via a flow path 11, etc. In an embodiment, the PWM control switch element 1133 may include a field effect transistor (FET), a bipolar junction transistor (BJT), an insulated gate bipolar transistor (IGBT), etc., but is not limited thereto. The load detection sensor 1134 may include a shunt resistor, a shunt resistor coupled with an operational amplifier (OP-AMP) circuit, a current detection sensor, a magnetic field detection sensor (non-contact type), etc. Hereinafter, for convenience of description, the FET is described as an example of the PWM control switch element 1133, and the shunt resistor is described as an example of the load detection sensor 1134. The moisture sensing circuit 1135 may include a portion that is open when no liquid is introduced and then forms resistance upon introduction of liquid. The moisture sensing circuit 1135 may include a voltage distribution circuit. The moisture sensing circuit 1135 may be located between a plus (+) terminal and a minus (-) terminal electrically connecting the motor assembly 1100 to the battery 1500. The moisture sensing circuit 1135 may be connected to an input port of the first processor 1131 and a + power line that receives power from the battery 1500, but is not limited thereto.

In an embodiment, the motor assembly 1100 may have an inverted motor structure in which positions of the impeller 1120 and the PCB 1130 are reversed. In the inverted motor structure, the PCB 1130 may be located downstream of the suction motor 1110 and the impeller 1120 may be located upstream of the suction motor 1110 with respect to a direction of air flow. Thus, the impeller 1120 may be closer to the filter unit 1300 than the PCB 1130.

In an embodiment, the first processor 1131 may obtain data related to a status of the suction motor 1110 (hereinafter referred to as status data), data regarding introduction of moisture, and transmit the status data of the suction motor 1110 and the data regarding introduction of moisture to the main processor 1800. Furthermore, the first processor 1131 may control an operation of (e.g., turn on or turn off) the first switch element 1132 connected to the signal line to transmit a signal (hereinafter referred to as a first signal) to the brush device 2000 over the signal line. The first switch element 1132 is an element that may cause a state of the signal line to be low. For example, the first switch element 1132 may cause a voltage on the signal line to be about 0 volts (V). The first signal may include, but is not limited to, data indicating at least one of a target revolution per minute (RPM) of a rotating brush (hereinafter referred to as a target drum RPM) of the brush device 2000, a target trip level of the brush device 2000, or power consumption of the suction motor 1110. For example, the first signal may include data for controlling a lighting device included in the brush device 2000, data for controlling the pump 160 (e.g., a water spray command), data for turning on/off a hot water function, etc. The first signal may be implemented with a preset number of bits. In an embodiment, the first signal may be implemented with 5 bits or 8 bits, and may have a transmission period of about 10 milliseconds (ms) per bit, but is not limited thereto.

In an embodiment, the first processor 1131 may detect a signal (hereinafter referred to as a second signal) transmitted by the brush device 2000 over a signal line. The second signal may include data indicating a current state of the brush device 2000, but is not limited thereto. For example, the second signal may include data regarding current operating conditions (e.g., a current drum RPM, a current trip level, a current value of settings of a lighting device, etc.), and data regarding whether overcurrent occurs in each load (e.g., each of the motor 180, the heater 250, and the pump 160). In addition, the second signal may further include data indicating a type of the brush device 2000. The first processor 1131 may transmit, to the main processor 1800, data indicating the current state of the brush device 2000, data regarding a malfunction of the brush device 2000, or data indicating the type of the brush device 2000, which is included in the second signal.

In an embodiment, the motor assembly 1100 may be located within the dust collection container 1200 (dust bin). The dust collection container 1200 may be configured to filter out and collect dust or dirt in the air drawn in through the brush device 2000. The dust collection container 1200 may be provided to be detachable from the cleaner main body 1000.

In an embodiment, the dust collection container 1200 may collect foreign substances by using a cyclone method that uses a centrifugal force to separate the foreign substances. The air from which the foreign substances are removed using the cyclone method may be expelled from the cleaner main body 1000, and the foreign substances may be stored in the dust collection container 1200. A multi-cyclone module may be arranged inside the dust collection container 1200. The dust collection container 1200 may be provided to collect foreign substances in a lower side of the multi-cyclone module. The dust collection container 1200 may include a dust collection container door (also referred to as a lid of the dust bin 1200) that is provided so that the dust collection container 1200 is opened when connected to a station device. The dust collection container 1200 may include a first dust collector that primarily captures and collects relatively large foreign substances, and a second dust collector that captures and collects relatively small foreign substances by using the multi-cyclone module. Both the first dust collector and the second dust collector may be arranged to open to the outside when the dust collection container door is opened.

In an embodiment, the filter unit 1300 may filter out ultra-fine dust or the like that is not filtered out by the dust collection container 1200. The filter unit 1300 may include an outlet that allows air that has passed therethrough to be expelled out of the vacuum cleaner 10. The filter unit 1300 may include a motor filter, a high-efficiency particulate air (HEPA) filter, etc., but is not limited thereto.

In an embodiment, the pressure sensor 1400 may measure pressure inside the flow path 11 (hereinafter also referred to as flow path pressure). For the pressure sensor 1400 provided at a suction side (e.g., a suction duct 41), the pressure sensor 1400 may measure static pressure to measure a change in flow rate at a corresponding location. The pressure sensor 1400 may be an absolute pressure sensor or a relative pressure sensor. When the pressure sensor 1400 is an absolute pressure sensor, the main processor 1800 may use the pressure sensor 1400 to sense a first pressure value before operating the suction motor 1110. In addition, the main processor 1800 may sense a second pressure value after driving the suction motor 1110 at a target RPM, and use a difference between the first pressure value and the second pressure value as a pressure value inside the flow path 11. In this case, the first pressure value may be a pressure value due to internal/external influences such as weather, altitude, status of the vacuum cleaner 10, amount of sucked in dust, etc. The second pressure value may be a sum of a pressure value due to internal/external influences such as altitude, status of the vacuum cleaner 10, amount of sucked in dust, etc., and a pressure value according to driving the suction motor 1110. A difference between the first pressure value and the second pressure value may be a pressure value according to driving the suction motor 1110. Thus, when the difference between the first pressure value and the second pressure value is used as the pressure value inside the flow path 11, the internal and external influences other than the suction motor 1110 may be minimized.

In an embodiment, the flow path pressure measured by the pressure sensor 1400 may be used to identify a current usage environment status of the brush device 2000 (e.g., a state of a surface being cleaned (hardwood, carpet, mat, corner, etc.), a state of the brush device 2000 being lifted from the surface being cleaned, etc.), and measure suction power that varies with the degree of contamination or dust collection in the dust collection container 1200.

In an embodiment, the pressure sensor 1400 may be located at the suction side (e.g., the suction duct 41). The suction duct 41 may be a structure that connects the dust collection container 1200 to the extension pipe 3000 or connects the dust collection container 1200 to the brush device 2000 to allow fluid containing foreign substances to move into the dust collection container 1200. The pressure sensor 1400 may be located at an end of a linear portion (or an inflection point of the linear portion and a curved portion) of the suction duct 41 by taking into account contamination due to foreign substances/dust, but is not limited thereto. The pressure sensor 1400 may be located in the middle of the straight portion of the suction duct 41. Moreover, when the pressure sensor 1400 is located in the suction duct 41, the pressure sensor 1400 may be implemented as a negative pressure sensor because the pressure sensor 1400 is located in front of the suction motor 1110 that generates suction power.

In the disclosure, a case where the pressure sensor 1400 is located in the suction duct 41 is described as an embodiment, but the invention is not limited thereto. In an embodiment, the pressure sensor 1400 may be located at a discharge side (e.g., within the motor assembly 1100). When the pressure sensor 1400 is located at the discharge side, the pressure sensor 1400 may be implemented as a positive pressure sensor because the pressure sensor 1400 is located in the rear of the suction motor 1110. Furthermore, a plurality of pressure sensors 1000 may be provided within the vacuum cleaner 10.

In an embodiment, the battery 1500 may be detachably mounted to the cleaner main body 1000. The battery 1500 may also be referred to as a battery pack, a battery module, etc. The battery 1500 may be electrically connected to a charging terminal provided in the station device. The battery 1500 may be charged by receiving power from the charging terminal. According to an embodiment, the battery 1500 may include a processor (e.g., a micro-computer, microprocessor computer, microprocessor controller (all abbreviated as 'MICOM')) for controlling a voltage supplied to the cleaner main body 1000 and communicating with the main processor 1800. The battery 1500 may perform data communication with the main processor 1800. The battery 1500 may periodically transmit information about a battery state of charge, an output voltage, etc. to the main processor 1800.

In an embodiment, the battery 1500 may include a light-emitting diode (LED) display for indicating charging, discharging, or status of the battery 1500. For example, the processor of the battery 1500 may output a red, orange, or yellow color via the LED display depending on a charging rate, and output a green color through the LED display when the battery 1500 is fully charged.

In an embodiment, the communication interface 1600 may include a module for communicating with an external device. For example, the cleaner main body 1000 may communicate with the station device (or a server device) via the communication interface 1600. The communication interface 1600 may include a short-range communication interface, a long-range communication interface, etc. The short-range communication interface may include, but is not limited to, a Bluetooth communication interface, a Bluetooth Low Energy (BLE) communication interface, a near field communication (NFC) interface, a wireless local area network (WLAN) (or Wi-Fi) communication interface, a ZigBee communication interface, an Infrared Data Association (IrDA) communication interface, a Wi-Fi Direct (WFD) communication interface, an ultra-wideband (UWB) communication interface, an Ant+ communication interface, etc. The long-range communication interface may be used by the cleaner main body 1000 to remotely communicate with the server device. The long-range communication interface may include the Internet, a computer network (e.g., a LAN or a wide area network (WAN)), and a mobile communication interface. The mobile communication interface may include, but is not limited to, a third generation (3G) module, a fourth generation (4G) module, a fifth generation (5G) module, a long-term evolution (LTE) module, a narrowband Internet of things (NB-IoT) module, an LTE for machines (LTE-M) module, etc.

In an embodiment, the user interface 1700 may be provided on a handle. The user interface 1700 may include an input interface and an output interface. The cleaner main body 1000 may receive a user input related to an operation of the vacuum cleaner 10 via the user interface 1700 and output information related to the operation of the vacuum cleaner 10. The cleaner main body 1000 may output, via the user interface 1700, information about an operating status (e.g., an operation mode), information about a status of docking, information about a status of the dust bin 1200, information about a status of a dust bag, information about introduction of moisture, information about the brush device 2000 clogged with foreign substances, information related to the wet mop brush 100 (e.g., information related to preheating or spraying), etc.

In an embodiment, the input interface may include at least one of a motion input interface, a voice input interface (e.g., a microphone), or a manipulation input interface (e.g., a power button, a suction power strength control button), but is not limited thereto. The output interface may include, but is not limited to, an LED display, a liquid crystal display (LCD), a touch screen, a speaker, etc.

In an embodiment, the cleaner main body 1000 may include the at least one processor. The cleaner main body 1000 may include a single processor or a plurality of processors. For example, in an embodiment, the cleaner main body 1000 may include the main processor 1800 connected to the user interface 1700 and the first processor 1131 connected to the suction motor 1110. The at least one processor may control all operations of the vacuum cleaner 10. For example, the at least one processor may control power consumption (suction power strength or suction power mode) of the suction motor 1110, a drum RPM of the brush device 2000, a trip level of the brush device 2000, etc.

In an embodiment, the at least one processor according to the disclosure may include at least one of a central processing unit (CPU), a graphics processing unit (GPU), an accelerated processing unit (APU), a Many Integrated Core (MIC), a digital signal processor (DSP), or a neural processing unit (NPU). The at least one processor may be implemented in the form of an integrated system on a chip (SoC) including one or more electronic components. The at least one processor may be each implemented as separate hardware (H/W). The at least one processor may also be referred to as a MICOM (an abbreviation of a micro-computer, microprocessor computer, or microprocessor controller), a microprocessor unit (MPU), or a microcontroller unit (MCU).

In an embodiment, the at least one processor may be implemented as a single-core processor or as a multi-core processor.

In an embodiment, the memory 1900 may store a program (e.g., one or more instructions) for processing and control by the at least one processor, and pieces of input/output data. For example, the memory 1900 may store pre-trained artificial intelligence (AI) models (e.g. a support vector machine (SVM) algorithm, etc.), status data of the suction motor 1110, measured values of the pressure sensor 1400, status data of the battery 1500, status data of the brush device 2000 (e.g., a drum RPM), error occurrence data (failure history data), power consumption of the suction motor 1110 corresponding to operating conditions, an operation sequence of the suction motor 1110 corresponding to a suction power generation pattern, a type of the brush device 2000 corresponding to a voltage value input via the signal line, a trip level for each type of the brush device 2000, and a PWM frequency for each type of the brush device 2000, an average input voltage for each type of brush device 2000, a high load reference value (low load reference value) for each type of brush device 2000, information about movement patterns (user gestures) predefined in correspondence to a plurality of control commands, information about moisture introduction into the cleaner main body 1000, reference load values for distinguishing a condition of a surface being cleaned (e.g., floor or carpet) (e.g., a plurality of reference load values corresponding to a plurality of suction power modes), etc.

In an embodiment, the memory 1900 may include external memory and internal memory. For example, the memory 1900 may include at least one type of storage medium, i.e., at least one of a flash memory-type memory, a hard disk-type memory, a multimedia card micro-type memory, a card-type memory (e.g., a secure digital (SD) or eXtreme digital (XD) memory), random access memory (RAM), static RAM (SRAM), read-only memory (ROM), electrically erasable programmable ROM (EEPROM), PROM, a magnetic memory, a magnetic disc, or an optical disc. Programs stored in the memory 1900 may be classified into a plurality of modules according to their functions.

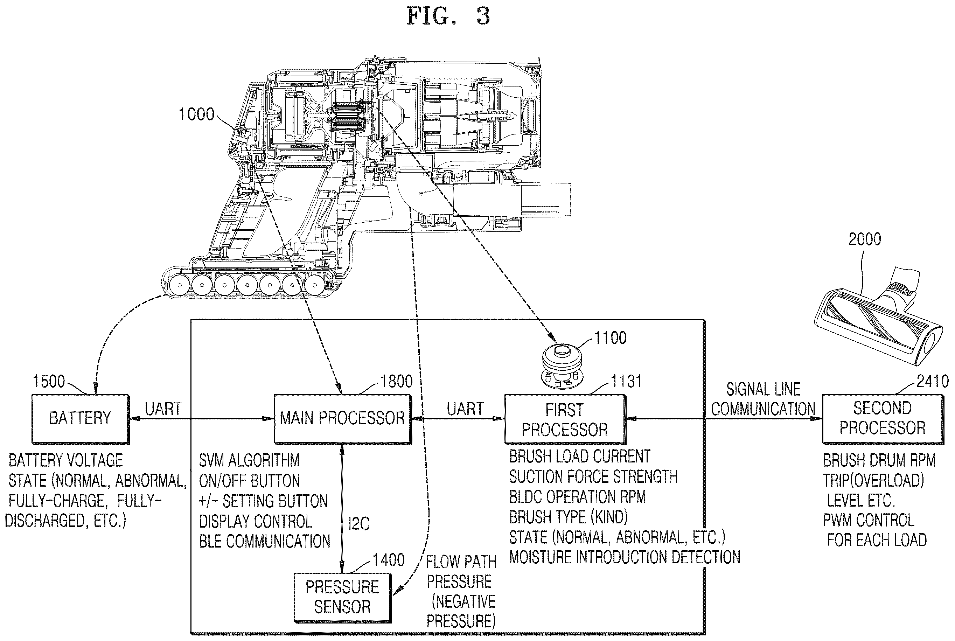

Operations of the processors of the vacuum cleaner 10 are described in detail with reference to FIG. 3, according to an embodiment.

FIG. 3 is a graphic diagram illustrating operations of the processors of the vacuum cleaner 10, according to an embodiment.

In an embodiment and referring to FIG. 3, the main processor 1800 may identify a status of components within the vacuum cleaner 10 by communicating with the battery 1500, the pressure sensor 1400, a motion sensor (not shown) (e.g., a gyro sensor and an acceleration sensor), and the first processor 1131 within the motor assembly 1100. In this embodiment, the main processor 1800 may communicate with each of the components by using by using universal asynchronous receiver/transmitter (UART) communication or inter-integrated circuit (I2C) communication, but is not limited thereto. For example, in an embodiment, the main processor 1800 may obtain, from the battery 1500, data regarding a voltage state (e.g., normal, abnormal, fully charged, fully discharged, etc.) of the battery 1500 by using UART. The main processor 1800 may obtain data regarding a flow path pressure from the pressure sensor 1400 by using I2C communication. The main processor 1800 may obtain angular velocity data from a gyro sensor (not shown) via UART communication and acceleration data from an acceleration sensor (not shown) via I2C communication.

Furthermore, in an embodiment, the main processor 1800 may obtain, via UART communication, data regarding a suction power strength, RPM of the suction motor 1110, and a status of the suction motor 1110 (e.g., normal, abnormal, etc.) from the first processor 1131 connected to the suction motor 1110. Suction power is an electrical power consumed to operate the vacuum cleaner 10, and may be expressed as power consumption. The main processor 1800 may obtain data related to load of the brush device 2000 and data related to a type of the brush device 2000 from the first processor 1131.

The main processor 1800 may obtain, from the first processor 1131, data about moisture introduction into the cleaner main body 1000.

In an embodiment, the first processor 1131 may obtain status data (e.g., drum RPM, trip level, normal, abnormal, etc.) of the brush device 2000 from the brush device 2000 via signal line communication with a processor (hereinafter referred to as a second processor 2410) of the brush device 2000. In this embodiment, the first processor 1131 may transmit status data on the brush device 2000 to the main processor 1800 via UART communication. According to an embodiment, the first processor 1131 may transmit status data of the suction motor 1110 and status data of the brush device 2000 to the main processor 1800 at intervals of different periods. For example, in an embodiment, the first processor 1131 may transmit the status data of the suction motor 1110 to the main processor 1800 once about every 0.02 seconds and the status data of the brush device 2000 to the main processor 1800 once about every 0.2 seconds, but is not limited thereto.

In an embodiment, the main processor 1800 may determine whether an error has occurred, based on the status of the suction motor 1110, the status of the brush device 2000, the status of components in the vacuum cleaner 10, and periodically transmit data related to the occurrence of the error to the station device via short-range wireless communication (e.g., BLE communication).

In an embodiment, when connecting the first processor 1131 of the cleaner main body 1000 to the second processor 2410 of the brush device 2000 via UART communication or I2C communication, there may be problems such as of influence of high impedance due to internal lines of the extension pipe 3000, etc., and burn-out damage to circuit elements (e.g., exceeding a maximum voltage of a Micom AD port) due to electrostatic discharge (ESD) and/or overvoltage. Therefore, according to an embodiment, the first processor 1131 of the cleaner main body 1000 may communicate with the second processor 2410 of the brush device 2000 via signal line communication instead of UART communication or I2C communication. In this embodiment, a circuit for signal line communication may include a voltage divider circuit (hereinafter referred to as a voltage divider) to prevent burn-out damage or the like to circuit elements due to overvoltage, power noise, surge, ESD, electrical overstress (EOS), etc. However, the communication between the first processor 1131 of the cleaner main body 1000 and the second processor 2410 of the brush device 2000 is not limited to the signal line communication.

According to an embodiment, when a noise reduction circuit is applied to the cleaner main body 1000 and the brush device 2000, the first processor 1131 of the cleaner main body 1000 may communicate with the second processor 2410 of the brush device 2000 by using UART communication or I2C communication. The noise reduction circuit may include, but is not limited to, at least one of a low pass filter, a high pass filter, a band pass filter, a damping resistor, or a divider resistor. According to an embodiment, when a level shifter circuit is applied to the cleaner main body 1000 or the brush device 2000, the first processor 1131 of the cleaner main body 1000 may communicate with the second processor 2410 of the brush device 2000 by using UART communication or I2C communication. Hereinafter, for convenience of description, an embodiment where the cleaner main body 1000 communicates with the brush device 2000 via signal line communication will be described as a main example.

In an embodiment, the main processor 1800 may receive a user input for setting buttons (e.g., an on/off button, a +/- setting button, etc.) included in the user interface 1700, and control an output of the LCD. By using a pretrained AI model (e.g., an SVM algorithm), the main processor 1800 may identify a usage environment status of the brush device 2000 (e.g., a state of a surface being cleaned (floor, carpet, mat, corner, etc.), a state of the brush device 2000 being lifted from the surface being cleaned, etc.), and determine operation information (e.g., power consumption of the suction motor 1110, drum RPM, trip level, etc.) of the vacuum cleaner 10, which matches the usage environment status of the brush device 2000. In this case, the main processor 1800 may transmit, to the first processor 1131, operation information of the vacuum cleaner 10 that matches the usage environment status of the brush device 2000. The first processor 1131 may adjust a suction power strength (power consumption or RPM) of the suction motor 1110 according to the operation information of the vacuum cleaner 10, and transmit the operation information of the vacuum cleaner 10 that matches the usage environment status of the brush device 2000 to the second processor 2410 via signal line communication. In this embodiment, the second processor 2410 may adjust a drum RPM, a trip level, settings of a lighting device (e.g., an LED display), etc. according to the operation information of the vacuum cleaner 10.

According to an embodiment, when the wet mop brush 100 is connected to the cleaner main body 1000, the main processor 1800 may receive information indicating that an abnormal situation has occurred in loads of the wet mop brush 100 (e.g., the pump 160, the motor 180, and the heater 250). In this embodiment, the main processor 1800 may transmit, to the first processor 1131, a command for cutting off power supply to the brush device 2000. The first processor 1131 may turn off the PWM control switch element 1133 to cut off the power supply to the wet mop brush 100.

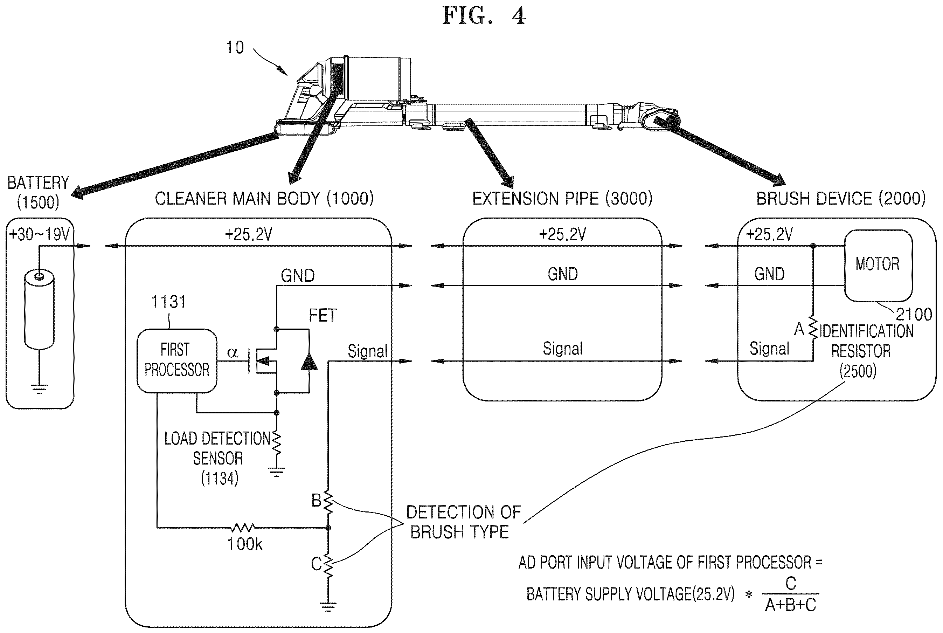

In an embodiment, the first processor 1131 may also identify a type of brush device 2000 connected to the cleaner main body 1000 by using an identification (or ID) resistor included in the brush device 2000, and transmit information about the type of brush device 2000 to the main processor 1800. An operation in which the cleaner main body 1000 identifies a type of the brush device 2000 is described in detail with reference to FIG. 4.

FIG. 4 is a schematic diagram illustrating an operation in which the cleaner main body 1000 identifies a type of the brush device 2000, according to an embodiment.

In an embodiment and referring to FIG. 4, the motor assembly 1100 of the cleaner main body 1000 may include the first processor 1131 and the load detection sensor 1134 (e.g., a shunt resistor), and the brush device 2000 may include an identification resistor 2500. The identification resistor 2500 may also be referred to as an option resistor. The identification resistor 2500 may be located between power lines and a signal line. The identification resistor 2500 indicates a type of the brush device 2000 and may be different for each type of the brush device 2000. For example, the identification resistor 2500 of a multi-brush or the wet mop brush 100 may have a resistance of about 330 kiloohms (KΩ), the identification resistor 2500 of a floor brush may have a resistance of about 2.2 megaohms (MΩ), and the identification resistor 2500 of a turbo (carpet) brush may have a resistance of about 910 KΩ, but the invention is not limited thereto.

In an embodiment, the first processor 1131 may detect whether the brush device 2000 is attached to or detached from the vacuum cleaner 10 by using the load detection sensor 1134. For example, when the brush device 2000 is not coupled to the vacuum cleaner 10 (e.g., a handy mode or a handheld mode), an operating current of the brush device 2000 detected by the load detection sensor 1134 may be about "zero (0) A". On the other hand, when the brush device 2000 is coupled to the vacuum cleaner 10 (e.g., a brush mode), the operating current of the brush device 2000 detected by the load detection sensor 1134 may be about 50 milliampere (mA) or more. Accordingly, the first processor 1131 may determine that the brush device 2000 is detached from the vacuum cleaner 10 when the operating current of the brush device 2000 detected by the load detection sensor 1134 is about 0 A, and determine that the brush device 2000 is attached thereto when the operating current of the brush device 2000 detected by the load detection sensor 1134 is about 50 mA or more. In addition, a reference operating current value for determining that the brush device 2000 is coupled to the vacuum cleaner 10 is not limited to about 50 mA, but may be changed.

In an embodiment, when determining that the brush device 2000 is coupled to the vacuum cleaner 10, the first processor 1131 may identify a type of the brush device 2000 based on a voltage value input to an input port (i.e., analog-to-digital (AD) port) of the first processor 1131. For example, when the brush device 2000 includes an identification resistor A and the driving circuit of the cleaner main body 1000 includes a voltage divider (resistor B and resistor C) connected to a signal line, a voltage input to the input port of the first processor 1131 may be calculated as follows:

$$\text{AD Port input voltage} = \text{battery supply voltage} * \frac{C}{A+B+C}$$

In an embodiment, a voltage value input to the input port of the first processor 1131 may decrease as a value of the identification resistor 2500 increases. When the resistor B and the resistor C have constant resistance values, the voltage value input to the input port varies depending on the value of the identification resistor A as shown above, and therefore, the first processor 1131 may identify a type of the brush device 2000 corresponding to the identification resistor 2500 based on the voltage value input to the input port.

For example, in an embodiment, the wet mop brush 100 may have an identification resistance value of about 330 KΩ, the floor brush may have an identification resistance value of about 2.2 MΩ, and the turbo (carpet) brush may have an identification resistance about 910 KΩ. When a voltage of the battery 1500 is about 25.2 V, a voltage value input to the input port of the first processor 1131 when the wet mop brush 100 is coupled to the vacuum cleaner 10 may be about 2.785 V, a voltage value input to the input port of the first processor 1131 when the floor brush is coupled to the vacuum cleaner 10 may be about 0.791 V, and a voltage value input to the input port of the first processor 1131 when the turbo (carpet) brush is coupled to the vacuum cleaner 10 may be about 1.563 V. Therefore, in a situation where it is determined that the brush device 2000 is coupled to the vacuum cleaner 10 and the voltage of the battery 1500 is about 25.2 V, the first processor 1131 may identify the wet mop brush 100 as being coupled thereto when the voltage value input to the input port is about 2.785 V, identify the floor brush as being coupled thereto when the voltage value input to the input port is about 0.791 V, and identify the turbo (carpet) brush as being coupled thereto when the voltage value input to the input port is about 1.563 V.

In an embodiment, the cleaner main body 1000 may identify the type of brush device 2000 coupled to the vacuum cleaner 10 by additionally taking into account signals received from the brush device 2000. For example, when the identification resistors 2500 of the wet mop brush 100 and the multi-brush have the same resistance value, the first processor 1131 may determine whether the brush device 2000 connected to the cleaner main body 1000 is the multi-brush or wet mop brush 100 further based on a signal received from the brush device 2000 via signal line communication. The signal received from the brush device 2000 may have a different form for each type of brush device 2000. For example, in an embodiment, a first identification code indicating the multi-brush or a second identification code indicating the wet mop brush 100 may be inserted into the signal received from the brush device 2000. When receiving a signal with the second identification code inserted via signal line communication, the first processor 1131 may identify the brush device 2000 connected to the cleaner main body 1000 as being the wet mop brush 100.

Hereinafter, signal line communication between the cleaner main body 1000 and the brush device 2000 is described in detail with reference to FIGS. 5A to 6, according to an embodiment.

FIG. 5A is a schematic block diagram illustrating functions of the vacuum cleaner 10 for signal line communication, according to an embodiment.

In an embodiment, the driving circuit 1130 in the motor assembly 1100 for signal line communication may include, but is not limited to, a first processor 1131, a first communication circuit 1140 (e.g., an input circuit 1135 and an output circuit 1136) and a power supply circuit 1138, etc.

In an embodiment, the input circuit 1135 is a circuit for identifying a type of the brush device 2000 via the identification resistor 2500 of the brush device 2000 or detecting (receiving) a second signal transmitted by the brush device 2000. The input circuit 1135 may include a voltage divider 1137 (hereinafter also referred to as a first voltage divider). The voltage divider 1137 is used to distribute a voltage input from a signal line to the input port of the first processor 1131. When the input circuit 1135 includes the voltage divider 1137, even when a noise voltage is applied to the signal line, the noise voltage may also be distributed and input to the input port (e.g., an AD port, also referred to as an AD converter (ADC)) of the first processor 1131.

In an embodiment, the output circuit 1136 is a circuit for transmitting a first signal to the brush device 2000. The output circuit 1136 may include a first switch element 1132. The first switch element 1132 may be a FET, a BJT, or the like, and is an element that may cause a voltage on the signal line to be about 0 V (ground (GND) or logic low) through a switching operation.

In an embodiment, the first processor 1131 may control operation of the first switch element 1132 connected to the signal line to transmit a signal (hereinafter referred to as a first signal) to the brush device 2000 over the signal line, and detect a second signal transmitted by the brush device over the signal line. The first processor 1131 may control the brush device 2000 by transmitting the first signal via the output circuit 1136. For example, the first processor 1131 may control a drum RPM, trip level, etc. of the brush device 2000 by transmitting, to the brush device 2000, the first signal that includes data indicating at least one of a target RPM of a drum of the brush device 2000, a target trip level of the brush device 2000, or power consumption of the suction motor 1110. Furthermore, the first processor 1131 may control operation of the wet mop brush 100 by transmitting a first signal including a water spray command, a hot water function off command, etc. to the wet mop brush 100.

In an embodiment, the power supply circuit 1138 is connected to the battery 1500 and may be a circuit for supplying power to the motor assembly 1100. The power supply circuit 1138 may be a step-down converter, for example, a direct current (DC)-to-DC (DC/DC) converter.

In an embodiment, a driving circuit 2400 of the brush device 2000 for signal line communication may include, but is not limited to, a second processor 2410, a second communication circuit 2425 (e.g., an input circuit 2420 and an output circuit 2430), a power supply circuit 2440 and an identification resistor 2500, etc.

In an embodiment, the input circuit 2420 is a circuit for detecting (receiving) the first signal transmitted from the cleaner main body 1000. The input circuit 2420 may include a switch element (e.g., a PNP transistor, a P-channel FET, etc.), but is not limited thereto. The input circuit 2420 may include a second voltage divider.

In an embodiment, the output circuit 2430 is a circuit for transmitting a second signal to the cleaner main body 1000. The output circuit 2430 may include a second switch element 2435. The second switch element 2435 may be a FET, a BJT, or the like, and is an element that may cause a voltage on the signal line to be about 0 V (GND or logic low) through a switching operation.

In an embodiment, the second processor 2410 may control operation of the second switch element 2435 connected to the signal line to transmit a second signal to the cleaner main body 1000 over the signal line, and detect a first signal transmitted from the cleaner main body 1000 over the signal line. The second processor 2410 may adjust an RPM of the drum to a target RPM or a trip level to a target trip level according to the first signal. Furthermore, when the first signal includes data for controlling a lighting device included in the brush device 2000, the second processor 2410 may control power output or brightness intensity of the lighting device based on the first signal. For example, in an embodiment, when receiving the first signal indicating that an abnormality has occurred in the cleaner main body 1000, the second processor 2410 may control the lighting device to change its color to indicate the abnormality in the cleaner main body 1000. The second processor 2410 outputs a color corresponding to a current usage environment status of the brush device 2000 (e.g., a state of a surface to be cleaned (floor, carpet, mat, corner, etc.), a state of the brush device 2000 being lifted from the surface being cleaned, etc.). When a foreign substance is detected to be stuck in the drum, the second processor 2410 may change the color of the lighting device to a predetermined color (e.g., red).

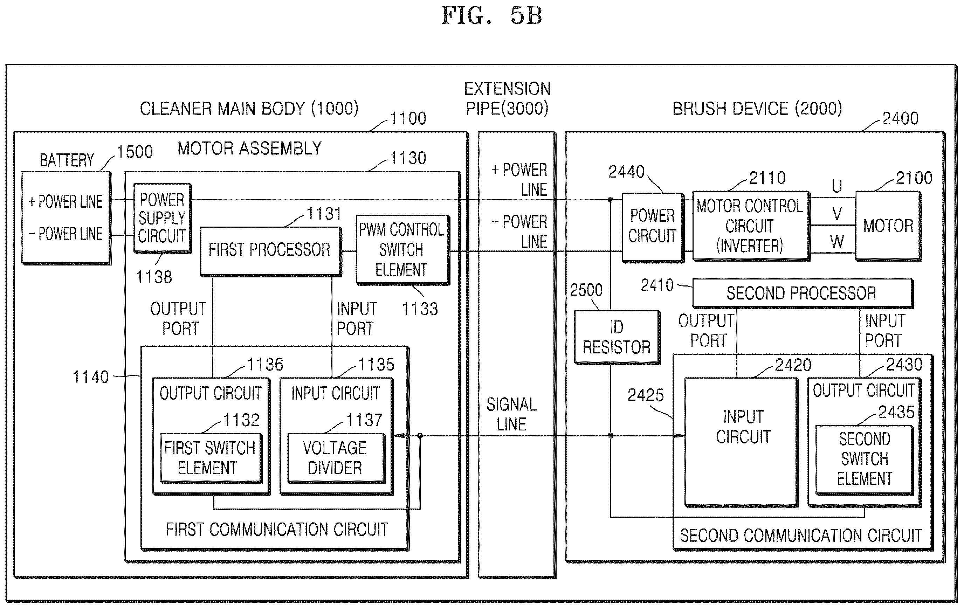

FIG. 5B is a schematic block diagram illustrating functions of the vacuum cleaner 10 including the extension pipe 3000, according to an embodiment.

In an embodiment, the driving circuit 1130 of the motor assembly 1100 shown in FIG. 5B may correspond to the driving circuit 1130 of the motor assembly 1100 shown in FIG. 5A, and the driving circuit 2400 of the brush device 2000 shown in FIG. 5B may correspond to the driving circuit 2400 shown in FIG. 5A.

In an embodiment and referring to FIG. 5B, the cleaner main body 1000 may be physically connected to the brush device 2000 via the extension pipe 3000. In this case, the extension pipe 3000 may include a + power line, a - power line, and a signal line. Thus, even though the cleaner main body 1000 and the brush device 2000 are connected via the extension pipe 3000, the cleaner main body 1000 and the brush device 2000 may reliably perform signal line communication with each other.

In addition, according to an embodiment, the motor assembly 1100 may include a switch element (hereinafter referred to as a PWM control switch element) 1133 for PWM control used to control power from the battery 1500 supplied to a motor 2100 of the brush device 2000. The PWM control switch element 1133 is a component that allows the first processor 1131 of the cleaner main body 1000 to control power supply to the brush device 2000, and may also be referred to as a third switch element. The PWM control switch element 1133 may be a FET, but is not limited thereto.

According to an embodiment, the first processor 1131 may control power supply to the brush device 2000 by controlling the PWM control switch element 1133 according to a type of the brush device 2000. For example, when the brush device 2000 is the wet mop brush 100 or multi-brush including the driving circuit 2400, the first processor 1131 may continuously output a High signal to the PWM control switch element 1133 so that power is continuously supplied to the brush device 2000. In this embodiment, because the PWM control switch element 1133 remains in an ON state, the driving circuit 2400 of the brush device 2000 may continue to receive power.

In another embodiment, on the other hand, when the brush device 2000 is a general brush that does not include the driving circuit 2400, the first processor 1131 may alternately output a High signal and a Low signal to the PWM control switch element 1133, causing the PWM control switch element 1133 to switch repetitively between ON and OFF states. In this case, the PWM control switch element 1133 may control the power from the battery 1500 supplied to the motor 2100, thereby satisfying power output required for each brush device 2000 according to characteristics of each application. That is, the first processor 1131 may control output power of the motor 2100 by adjusting, for a first brush device requiring high power output, a duty value (hereinafter also referred to as a duty) of the PWM control switch element 1133 to be high so as to supply the power to the first brush device while adjusting, for a second brush device requiring low power output, a duty value to be low so as to supply the power to the second brush device. Here, a duty value refers to a duty cycle of a pulse width when a period is constant, and in particular, it may indicate a ratio between a time interval during which power is transmitted (On duty interval) and a time interval during which power is cut off (Off duty interval). As a duty value increases, the total time during which current flows through the motor 2100 becomes longer, so average power supplied to the brush device 2000 may increase.

In an embodiment, in the case of a cordless vacuum cleaner, as the battery 1500 is discharged, a voltage supplied from the battery 1500 to the brush device 2000 tends to decrease. In other words, when the motor 2100 of the brush device 2000 is driven with a constant duty value, a voltage of the battery 1500 drops as the cleaning time elapses, resulting in a decrease in a drum RPM of the brush device 2000. Thus, the first processor 1131 of the cleaner main body 1000 may also perform control for compensating for the decrease in the drum RPM of the brush device 2000 by increasing a duty value (a time interval during which the PWM control switch element 1133 is turned on and power is supplied during a single period) as the voltage of the battery 1500 drops. Hereinafter, for convenience of description, adjusting a duty value of a PWM control switch element may be referred to as PWM control.

In an embodiment, when the brush device 2000 connected to the cleaner main body 1000 is the wet mop brush 100, the second processor 2410 of the wet mop brush 100 may perform PWM control instead of the first processor 1131 of the suction motor 1110. For example, the second processor 2410 of the wet mop brush 100 may perform control for compensating for a decrease in the drum RPM of the brush device 2000 by increasing a duty value of a first PWM control switch element connected to the motor 2100 as a voltage of the battery 1500 drops.

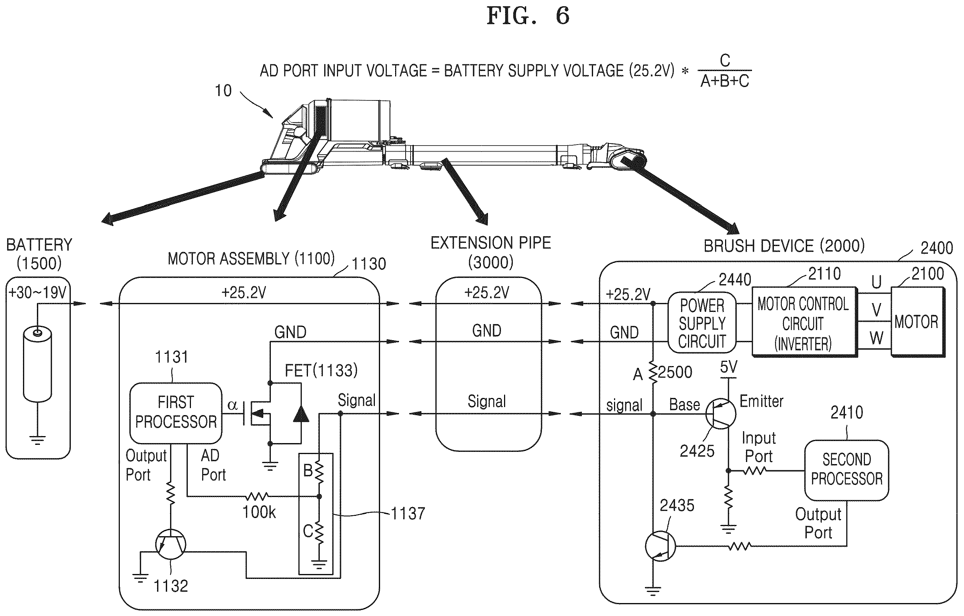

An example of a circuit of the vacuum cleaner 10 for signal line communication is described in detail with reference to FIG. 6, according to an embodiment.

FIG. 6 is a schematic diagram illustrating a circuit of the vacuum cleaner 10 for signal line communication, according to an embodiment. In FIG. 6, for convenience of description, an example in which A is about 330 KΩ, B is about 330 KΩ, and C is about 82 KΩ is described.

In an embodiment, the first processor 1131 may identify a type of the brush device 2000 based on a voltage input to the input port (AD port). For example, when an AD port input voltage of the first processor 1131 is about 2.785V (

$$= \text{battery supply voltage} * \frac{C}{A+B+C}$$ ), then the first processor 1131 may identify that the wet mop brush 100 with the identification resistor 2500 having a resistance value of about 330 KΩ (A) corresponding to the AD port input voltage of about 2.785 V is connected to the vacuum cleaner 10.

In an embodiment, when the brush device 2000 coupled to the vacuum cleaner 10 is identified as the wet mop brush 100 including the driving circuit 2400, the cleaner main body 1000 may perform signal line communication with the brush device 2000.

In an embodiment, the first processor 1131 of the cleaner main body 1000 may receive a signal via the input port thereof and transmit a signal via an output port thereof. For example, when the first processor 1131 outputs a Low signal via the output port, the first switch element 1132 may be turned off. As the first switch element 1132 is turned off, a voltage on the signal line may be about 14 V ( $= \text{battery supply voltage} * \frac{B+C}{A+B+C}$ ) which may be in a high state. When the voltage on the signal line is about 14 V, which is greater than 5 V, a PNP transistor 2425 may be turned off, and a low (0 V) signal may be input to an input port of the second processor 2410. On the other hand, when the first processor 1131 outputs a High signal via the output port, the first switch element 1132 may be turned on. As the first switch element 1132 is turned on, the voltage on the signal line may change to about 0 V (GND) and may be in a low state. When the voltage on the signal line is about 0 V, the PNP transistor 2425 may be turned on, and a High signal (about 4.8 V) may be input to the input port of the second processor 2410. That is, when the first processor 1131 outputs a Low signal via the output port, a Low signal may be input to the input port of the second processor 2410, and when the first processor 1131 outputs a High signal via the output port, a High signal may also be input to the input port of the second processor 2410.

In an embodiment, the second processor 2410 of the brush device 2000 may receive a signal via the input port thereof and transmit a signal via an output port thereof. For example, when the second processor 2410 outputs a High signal through the output port, a second switch element 2435 may be turned on. As the second switch element 2435 is turned on, the voltage on the signal line changes to about 0 V (GND) and may be in a low state. When the voltage on the signal line is about 0 V, a Low signal (0 V) may be input to the input port of the first processor 1131. On the other hand, when the second processor 2410 outputs a Low signal via the output port, the second switch element 2435 may be turned off. As the second switch element 2435 is turned off, the voltage on the signal line may be about 14 V ( $= \text{battery supply voltage} * \frac{B+C}{A+B+C}$ ) which may be in a high state. When the voltage on the signal line is about 14 V, about 2.785V may be input to the input port of the first processor 1131. In this case, the driving circuit 1130 of the cleaner main body 1000 includes the voltage divider 1137, and therefore, the high voltage (14 V) on the signal line may be distributed so that about 2.785V may be input to the input port of the first processor 1131. That is, when the second processor 2410 outputs a High signal via the output port, a Low signal (0 V) may be input to the input port of the first processor 1131, and when the second processor 2410 outputs a Low signal via the output port, about 2.785V (approximately 2.8V) may be input to the input port of the first processor 1131.

In an embodiment, although FIG. 6 illustrates an example in which the driving circuit 2400 of the brush device 2000 includes the PNP transistor 2425 as a switch element, the invention is not limited thereto. For example, in another embodiment, a P-channel FET may be used as a switch element instead of the PNP transistor 2425.

According to an embodiment, when the first processor 1131 receives a signal from the second processor 2410, the driving circuit 1130 of the cleaner main body 1000 for signal line communication includes the voltage divider 1137 to minimize the effect of noise on the signal line, thereby achieving stable signal transmission.

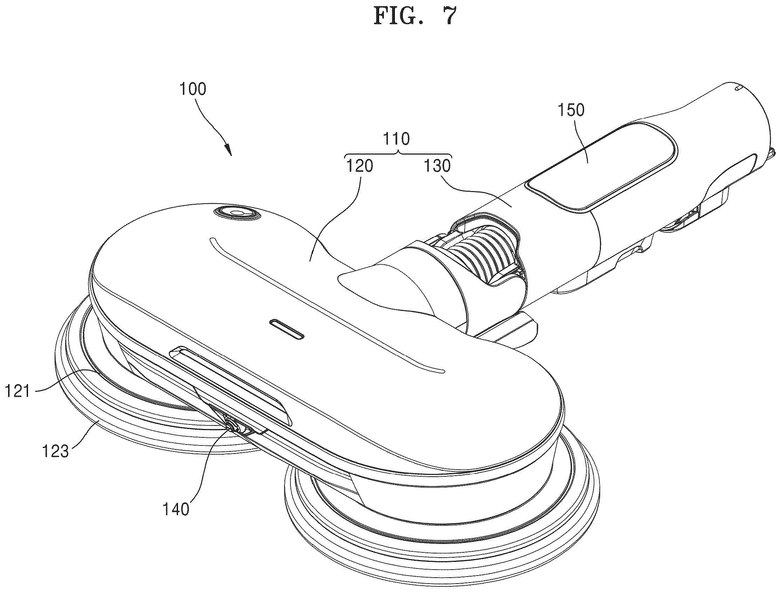

In an embodiment, a configuration and operation of the wet mop brush 100 among the brush devices 2000 connectable to the cleaner main body 1000 are described with reference to FIGS. 7 to 12.

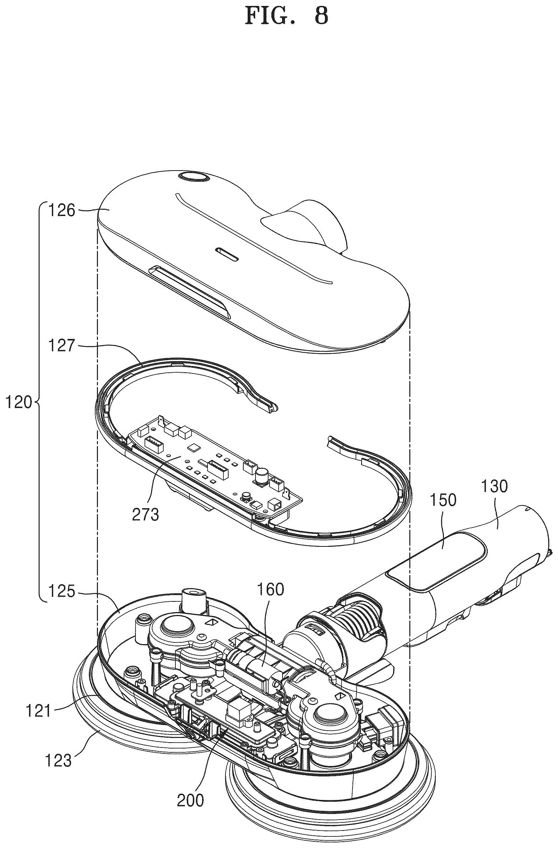

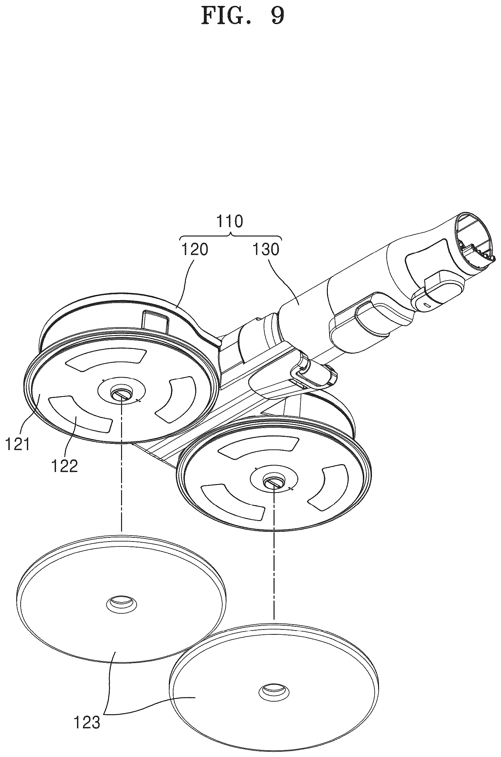

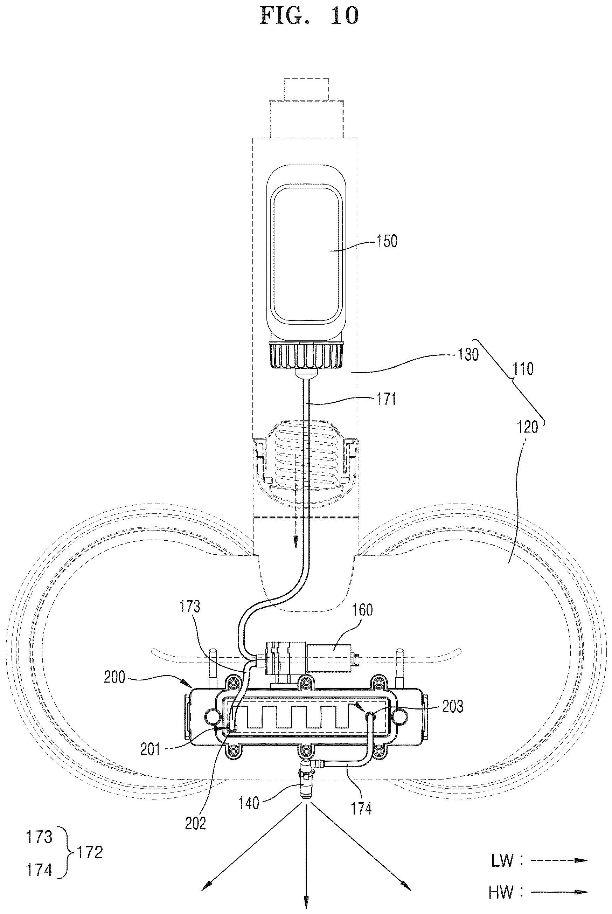

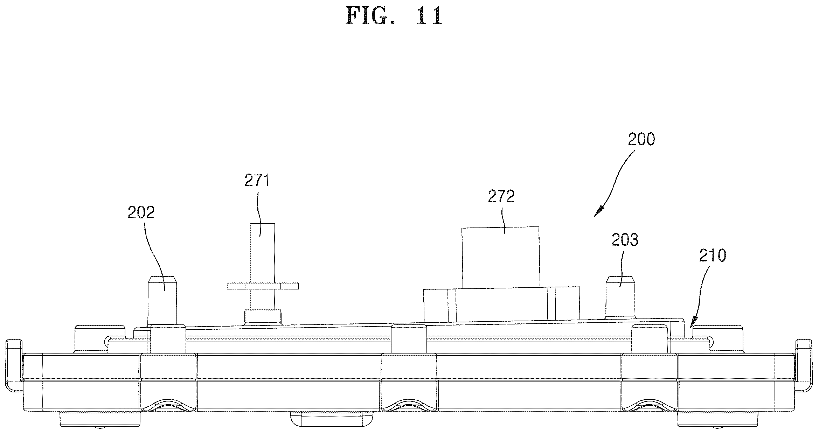

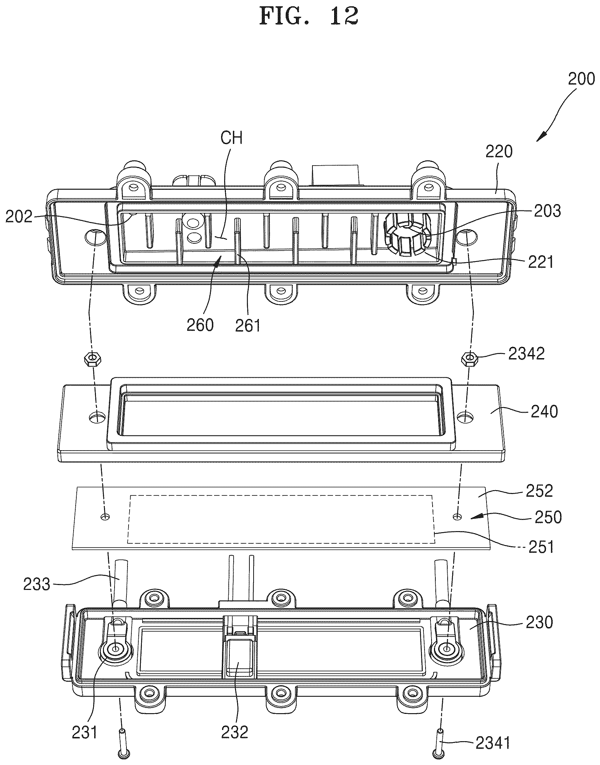

FIG. 7 is a perspective view of a wet mop brush 100 according to an embodiment, and FIG. 8 is a perspective exploded view of a portion of the wet mop brush 100 of FIG. 7, according to an embodiment. FIG. 9 is a perspective view illustrating a bottom surface of the wet mop brush 100 of FIG. 7, according to an embodiment. FIG. 10 is a graphic diagram illustrating a portion of the wet mop brush 100 according to an embodiment. FIG. 11 is a front view of a heating module 200 of the wet mop brush 100, according to an embodiment, and FIG. 12 is an example of an exploded perspective view of the heating module 200 of FIG. 11, according to an embodiment.

In an embodiment and referring to FIGS. 7 to 10, the wet mop brush 100 sprays water onto a surface to be cleaned, and a mop pad 123 may repeatedly contact a surface to be cleaned to perform water cleaning on the surface to be cleaned.

In an embodiment, the wet mop brush 100 may include a head body 110, at least one mop pad 123 provided on a bottom of the head body 110 to contact the surface to be cleaned, a sprayer 140 located at a front of the head body 110, a water tank 150 for storing water, and a pump 160 that is located between the sprayer 140 and the water tank 150 and provides pressure for the sprayer 140 to spray water.

In an embodiment, the head body 110 may include a brush body 120 and a brush connection portion 130 provided to be mounted to a front end of the extension pipe 3000. The brush connection portion 130 may be connected to the brush body 120 to be angularly adjusted relative thereto.

In an embodiment, the brush body 120 may include a pair of rotating disks 121 provided on a bottom surface on both left and right sides. Each of the rotating disks 121 may include a mop attachment portion 122 for detachably attaching the mop pad 123 to a lower surface facing a floor. The mop attachment portion 122 may be implemented in a variety of structures, such as an adhesive pad, Velcro, or the like, depending on a material of the mop pad 123.

In an embodiment, the mop pad 123 may include various fiber or plastic materials designed for cleaning. The mop pad 123 is rotated by the rotating disk 121 while being in contact with the surface to be cleaned, and cleaning may be performed by the mop pad 123 during the process. In an embodiment, a structure in which the mop pad 123 is rotated is illustrated, but the structure is not limited thereto. For example, although not shown, the mop pad 123 may be fixed to the brush body 120 without being rotated.

In an embodiment, the brush body 120 may include a base frame 125 that supports the rotating disks 121 and a top cover 126 detachably coupled to the base frame 125. The base frame 125 rotatably supports the rotary disks 121, and the heating module 200 may be installed on the base frame 125. The top cover 126 functions to cover components installed on the base frame 125, such as the heating module 200, from being exposed to the top, and may form the upper appearance of the wet mop brush 100. A border frame 127 may be located between the base frame 125 and the top cover 126, and a controller 273 may be supported on the border frame 127. The shape and structure of the brush body 120 are only an example, and may be modified in various ways as needed. The controller 273 may be implemented on a PBA and include at least one processor.

In an embodiment, the water tank 150 may be provided in the head body 110. For example, the water tank 150 may be detachably coupled to the brush connection portion 130 of the head body 110. The water stored in the water tank 150 may be greater than the amount of water sprayed by the sprayer 140 in one spray (hereinafter referred to as a 'water spray amount'). For example, the storage capacity of water that may be stored in the water tank 150 may be greater than or equal to about 30 times the water spray amount. For example, the storage capacity of the water tank 150 may be greater than or equal to about 50 times the water spray amount. However, considering a size of the wet mop brush 100, the storage capacity of the water tank 150 may be less than or equal to about 100 times the water spray amount.

In an embodiment, the sprayer 140 may be located at a front of the brush body 120. The sprayer 140 may be provided in front of the mop pad 123. The sprayer 140 may spray water directly on the surface to be cleaned. The sprayer 140 may spray water in front of a movement path of the mop pad 123. The brush body 120 may be provided with the pump 160 that provides pressure for moving water from the water tank 150 to the sprayer 140. For example, when the pump 160 operates, water in the water tank 150 may be supplied to the heating module 200, and the water in the heating module 200 may be sprayed frontward from the brush body 120.

In an embodiment, a water supply pipe that provides at least a portion of a movement path of water from the water tank 150 to the sprayer 140 may be provided in the brush body 120. The water supply pipe may include a first water supply pipe 171 connecting between the water tank 150 and the pump 160, and a second water supply pipe 172 connecting between the pump 160 and the sprayer 140.

According to an embodiment, the wet mop brush 100 may further include the heating module 200 for heating water supplied from the water tank 150. The heating module 200 may be located between the pump 160 and the sprayer 140 in the brush body 120. The heating module 200 may be located between the water tank 150 and the sprayer 140 and may be configured to heat the water supplied from the water tank 150. The heating module 200 may be configured to heat water before the water is sprayed by the sprayer 140.

In an embodiment, because the wet mop brush 100 includes the heating module 200, the sprayer 140 may spray high-temperature water onto the surface to be cleaned. The high-temperature water sprayed onto the surface to be cleaned may quickly soak foreign substances on the surface to be cleaned, and the soaked foreign substances may be easily removed by the mop pad 123.

In an embodiment, the heating module 200 may be located close to the sprayer 140. For example, the heating module 200 may be placed close to the sprayer 140 between the water tank 150 and the sprayer 140. The heating module 200 may be located between the pump 160 and the sprayer 140. The second water supply pipe 172 may include a third water supply pipe 173 connecting between the pump 160 and the heating module 200, and a fourth water supply pipe 174 connecting between the heating module 200 and the sprayer 140.

In an embodiment and referring to FIGS. 10 to 12, the heating module 200 may include a module case 210 and a heater 250 arranged inside the module case 210. The module case 210 may support the heater 250, and a heating tank 201 may be provided inside the module case 210.

In an embodiment, the module case 210 may include a lower case 230, an upper case 220 coupled to the lower case 230, and a gasket 240 located between the lower case 230 and the upper case 220. The upper case 220 may be coupled to the lower case 230 with the heater 250 therebetween.

In an embodiment, the heater 250 may be provided in the lower case 230. The heater 250 may be fixed to the lower case 230 by fixing members 2341 and 2342. Although bolts and nuts are illustrated as examples of the fixing members 2341 and 2342, the invention is not limited thereto, and the fixing members 2341 and 2342 may be modified in various ways as long as they include a structure for fastening the heater 250 to the lower case 230.

In an embodiment, in the lower case 230, a power connection unit 231 for supplying current to the heater 250 and a power cutoff unit 232, as described below, may be provided at a bottom of the heater 250. The power connection unit 231 may be connected to the controller (273 of FIG. 8) via wires 233.

In an embodiment, the heater 250 may form a bottom surface of the heating tank 201. The heating tank 201 may be defined by a top surface of the heater 250, inner sides of the gasket 240, and an inner peripheral surface of the upper case 220. However, a structure for forming the heating tank 201 is not limited thereto, and may be modified in various ways as long as it is a structure for providing a space for heating a predetermined amount of water within the module case 210.

In an embodiment, the module case 210 may be provided with an inlet 202 for supplying water to the heating tank 201 and an outlet 203 for discharging water from the heating tank 201. For example, the inlet 202 and the outlet 203 may be provided at a higher position than the heater 250. For example, an inlet 202 and an outlet 203 may be provided in the upper case 220. However, the arrangement of the inlet 202 and the outlet 203 is not limited thereto, and may be modified in various ways as long as it is for supplying and discharging water to and from the heating tank 201. The inlet 202 may be connected to an end of the third water supply pipe 173, and the outlet 203 may be connected to an end of the fourth water supply pipe 174.

In an embodiment, the heating tank 201 may store water supplied from the water tank 150, and the water stored in the heating tank 201 may be heated by the heater 250. The storage capacity of the heating tank 201 may be designed to be smaller than the storage capacity of the water tank 150 in consideration of power usage of the heater 250. For example, in an embodiment, the storage capacity of the heating tank 201 may be about 1/30th or less the storage capacity of the water tank 150. For example, the storage capacity of the heating tank 201 may be about 1/50th or less the storage capacity of the water tank 150.

In an embodiment, the storage capacity of the heating tank 201 may be greater than or equal to the water spray amount of the sprayer 140. For example, the storage capacity of the heating tank 201 may be greater than or equal to about twice the water spray amount of the sprayer 140.

In an embodiment, the heater 250 may be located at the bottom of the heating tank 201. The heater 250 may have a flat plate shape. For example, the heater 250 may have the top surface of a flat plate shape. The heater 250 may have a small thickness. For example, the heater 250 may have a thickness of about 2 mm or less. For example, the heater 250 may have a thickness of about 1.5 mm or less. For example, the heater 250 may have a thickness of about 0.5 mm to about 1.5 mm.

In an embodiment, the heater 250 may include a heat source 251 and a conductive plate 252.

In an embodiment, the heat source 251 may be in the form of a wire made of a metal. The heat source 251 may be made of a metal and may have a predetermined pattern. However, the heat source 251 is not limited thereto. For example, the heat source 251 may be a carbon nanotube (CNT) film. The heat source 251 may have a thickness of about 0.5 mm or less. The thickness of the heat source 251 may be less than a thickness of the conductive plate 252. The thickness of the heat source 251 may be less than or equal to about one half the thickness of the conductive plate 252.

In an embodiment, the conductive plate 252 may perform a function of transferring heat generated by the heat source 251 to the heating tank 201. The conductive plate 252 may block contact between water in the heating tank 201 and the heat source 251. The conductive plate 252 may be located between the heat source 251 and the heating tank 201.

In an embodiment, the conductive plate 252 may have a flat top surface. Because the conductive plate 252 is exposed to water, it may be formed of a rust-resistant material. For example, the conductive plate 252 may include stainless steel. The thickness of the conductive plate 252 may be about 2 mm or less. The thickness of the conductive plate 252 may be about 0.5 mm to about 1.5 mm.

In an embodiment, the heater 250 may be installed in the module case 210 so that the top surface of the conductive plate 252 forms the bottom surface of the heating tank 201.

In an embodiment, a maximum temperature of the heater 250 may be about 200 °C or lower. The heater 250 may have a normal operating temperature of about 120 °C or lower. The heater 250 may have a normal operating temperature of about 100 °C or lower. However, when the heater 250 operates abnormally and overheats, the temperature of the heater 250 may increase to about 200 °C.

In an embodiment, water stored in the heating tank 201 may be heated by the heater 250. The temperature of the water stored in the heating tank 201 may be lukewarm or high. For example, the temperature of the water stored in the heating tank 201 may be higher than room temperature. For example, the temperature of the water stored in the heating tank 201 may be about 40 °C or higher. For example, the temperature of the water stored in the heating tank 201 may be about 55 °C or higher.

In an embodiment, the temperature of the water stored in the heating tank 201 may be a predetermined temperature or lower to prevent damage to the surface to be cleaned or burns to the human body due to water sprayed by the sprayer 140. For example, the temperature of the water stored in the heating tank 201 may be about 60 °C or lower. For example, the temperature of the water stored in the heating tank 201 may be about 50 °C to about 60 °C.

In an embodiment, a current used by the heater 250 may be determined by considering an allowable current of the wires. The current used by the heater 250 may be about 80 % or less of the allowable current of the wires. For example, when the allowable current of the wires 43 is about 5 A, the current used by the heater 250 may be about 4 A or less.

In an embodiment, the heating module 200 may include a component for preventing overheating of the heater 250. For example, the heating module 200 may include at least one of a temperature sensor 271, a water sensor 272, or a power cutoff unit 232.

In an embodiment, the heating module 200 may include the temperature sensor 271 that detects an internal temperature of the heating tank 201. The temperature sensor 271 may detect a temperature of water stored in the heating tank 201. The temperature sensor 271 may be provided at a higher position than the heater 250. The temperature sensor 271 may be provided in the upper case 220. However, the arrangement of the temperature sensor 271 is not limited thereto and may be provided in various locations.

In an embodiment, the heating module 200 may further include the water sensor 272 for detecting a water level in the heating tank 201. The water sensor 272 may be provided at a higher position than the heater 250. The water sensor 272 may be provided in the upper case 220. However, the arrangement of the water sensor 272 is not limited thereto and may be provided in various locations. A plurality of water sensors 272 may be provided.

In an embodiment, the controller (273 of FIG. 8) may control operation of the heater 250 based on a temperature of the water detected by the temperature sensor 271. For example, the controller 273 may stop operation of the heater 250 when the temperature of the water in the heating tank 201 falls outside a predetermined range. For example, the controller 273 may stop operation of the heater 250 when the temperature of the water in the heating tank 201 exceeds a reference temperature (e.g., about 60 °C).

In an embodiment, the controller 273 may control operation of the heater 250 based on a water level in the heating tank 201 detected by the water sensor 272. For example, when the water sensor 272 determines that the heating tank 201 is not filled with water, the controller 273 may not operate the heater 250. By doing so, it is possible to prevent overheating of the heater 250, which may occur when the heater 250 operates while the heating tank 201 is not filled with water.

In an embodiment, the heating module 200 may further include the power cutoff unit 232 to prevent overheating of the heater 250. The power cutoff unit 232 may cut off power supplied to the heater 250 when the temperature of the heater 250 rises above a predetermined temperature. For example, the power cutoff unit 232 may include a bimetal whose shape changes depending on the temperature of the heater 250. The power cutoff unit 232 may cause a shape of the bimetal to change according to the temperature of the heater 250, thereby physically blocking power transmitted to the heater 250.

While the above-described embodiment is described mainly with respect to an example in which the heating module 200 includes all of the temperature sensor 271, the water sensor 272, and the power cutoff unit 232, the invention is not limited thereto. For example, in an embodiment, the heating module 200 may not include some of the temperature sensor 271, the water sensor 272, and the power cutoff unit 232 as needed.

According to an embodiment, water stored in the heating tank 201 of the heating module 200 is heated by the heater 250. As the pump 160 operates in this state, the heated water may be sprayed by the sprayer 140 via the outlet 203 and the fourth water supply pipe 174.

In an embodiment and referring to a process of spraying the water in the heating tank 201 from the sprayer 140, as the pump 160 operates, some of the heated water (hereinafter referred to as 'high-temperature water HW') is expelled through the outlet 203, and at the same time, unheated water (hereinafter referred to as 'low-temperature water LW') is newly introduced through the inlet 202 in an amount equal to the amount of water expelled through the outlet 203. In the process, the newly introduced low-temperature water LW may be mixed with the high-temperature water HW, and the temperature of the water stored in the heating tank 201 may drop. Accordingly, in a process of spraying high-temperature water HW from the sprayer 140, the temperature of water sprayed at the end of the spraying may be lower than the temperature of water sprayed at the beginning of the spraying. For example, in a process of spraying water from the sprayer 140 in one spray, a difference in temperature of water may be about 10 degrees or more.

Therefore, according to an embodiment, in order to reduce a difference in temperature of the sprayed water, the heating module 200 may include a channel structure 260 for guiding a movement path of water inside the heating tank 201.

In an embodiment, the channel structure 260 may be configured to prevent low-temperature water LW and high-temperature water HW from being mixed immediately. In other words, the channel structure 260 may delay the time at which the low-temperature water LW is mixed with the high-temperature water HW. For example, the channel structure 260 may reduce a contact area between the low-temperature water LW and the high-temperature water HW.

In an embodiment, the channel structure 260 may include a plurality of channels CH arranged parallel to each other. Each of the plurality of channels CH may extend in a first direction and may be arranged along a second direction perpendicular to the first direction. For example, the plurality of channels CH may extend in a width direction of the heating tank 201 and may be arranged in a length direction of the heating tank 201. A width of each of the plurality of channels CH may be less than a width of the heating tank 201.

In an embodiment, each channel CH may be connected to an adjacent channel CH. The adjacent channels CH may be connected to allow water to move in a predetermined direction. An end of a channel CH may be connected to its adjacent channel CH. In other words, the channel structure 260 may have the channels CH meandering from the inlet 202 toward the outlet 203.

In an embodiment, the channel structure 260 may be provided in the upper case 220. The channel structure 260 may be in such a shape as to protrude from the inner peripheral surface of the upper case 220.

In an embodiment, the channel structure 260 may include at least one channel wall 261 forming a channel CH through which water introduced through the inlet 202 moves toward the outlet 203. The channel wall 261 may extend in a vertical direction. The channel wall 261 may extend toward the heater 250. The channel wall 261 may extend from a top of the inner peripheral surface of the upper case 220 toward a bottom thereof.

In an embodiment, the channel wall 261 may be formed as a plurality of channel walls 261. The plurality of channel walls 261 may be arranged in parallel in the length direction of the heating tank 201. In another embodiment, the plurality of channel walls 261 may be arranged in parallel in the width direction perpendicular to the length direction of the heating tank 201. The plurality of channel walls 261 may be arranged in a staggered fashion. However, the number of channel walls 261 is not necessarily limited to 2 or more, and may be 1.

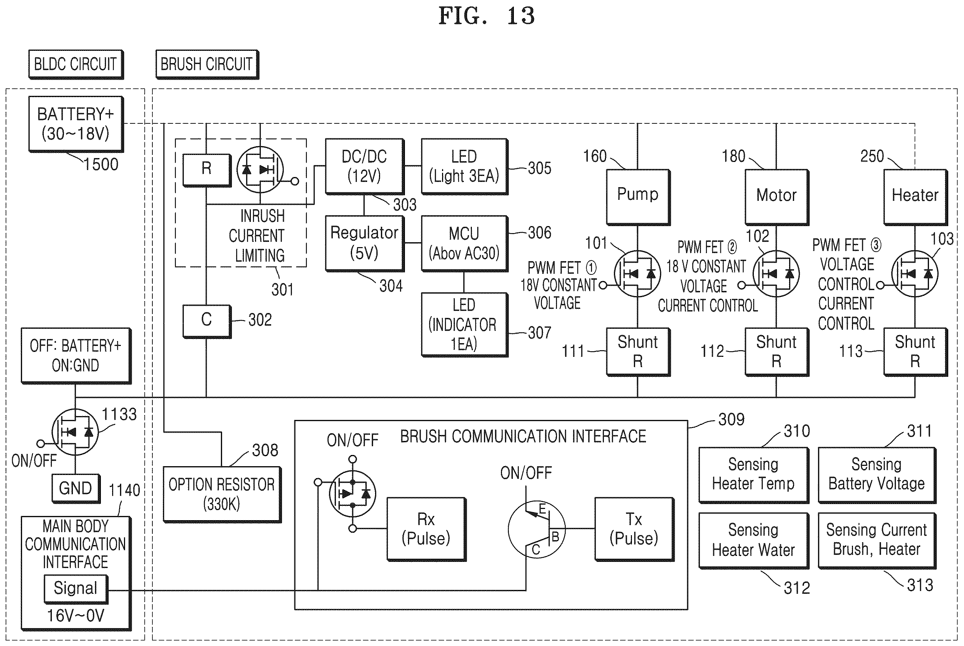

An operating circuit of the wet mop brush 100 is described in detail with reference to FIG. 13, according to an embodiment.

FIG. 13 is a schematic block diagram for describing functions of the wet mop brush 100, according to an embodiment.

In an embodiment and referring to FIG. 13, the wet mop brush 100 may include an inrush current limiting circuit 301, a capacitor 302, a DC/DC converter 303, a regulator 304, a lighting device 305 (e.g., an LED), at least one processor 306 (e.g., MCU), an output interface 307 (e.g., an LED), an identification resistor 308, a brush communication interface 309, a pump 160, a motor 180, a heater 250, a first PWM control switch element 101, a second PWM control switch element 102, a third PWM control switch element 103, a first current sensing circuit 111, a second current sensing circuit 112, and a third current sensing circuit 113, but is not limited thereto. Each of the components is described.

In an embodiment, the wet mop brush 100 may include an inrush current limiting circuit 301 for reducing an inrush current. An inrush current may be the maximum instantaneous current that flows temporarily. For example, the inrush current may refer to an excessive current flowing transiently when the capacitor 302 stores energy. The inrush current may increase significantly when initial power is supplied, when a load is turned on/off, when an impact occurs during operation of the vacuum cleaner, etc., and in this case, a transient current may occur in a load of the wet mop brush 100, so operation of the wet mop brush 100 may be stopped. In particular, because the wet mop brush 100 includes loads that consume large amounts of current, such as the motor 180 and the heater 250, this may cause failure and malfunction of the PWM control switch elements 101, 102, and 103 that drive the loads when an inrush current occurs. Therefore, according to an embodiment, the inrush current limiting circuit 301 may be located at an input end where power is supplied from the battery 1500.

According to an embodiment, the inrush current limiting circuit 301 may include an inrush current reduction resistor R. According to an embodiment, the inrush current limiting circuit 301 may include the inrush current reduction resistor R and a switch element (e.g., a FET). Because the capacitor 302 may be charged or discharged while a current is flowing through the inrush current reduction resistor R included in the inrush current limiting circuit 301, the inrush current may be significantly reduced.

In an embodiment, the capacitor 302 may also be referred to as an electrolytic condenser or an electrolytic capacitor. An electrolytic capacitor may be a small-sized, high-capacitance capacitor used in a smoothing circuit of a power supply for an electronic circuit or to remove a ripple current in a DC voltage when applying a bias to the capacitor. In particular, when the brush device 2000 is the wet mop brush 100 including the motor 180 and the heater 250, the capacitor 302 may be rapidly discharged in a short time due to large driven loads. When the capacitor 302 is discharged, operation of the brush device 2000 may be stopped. On the other hand, when a connection portion of the brush device 2000 is momentarily detached from and then reattached to a connection portion of the extension pipe 3000 (or when a connection portion of the cleaner main body 1000 is momentarily detached from and then reattached to the connection portion of the extension pipe 3000), the discharged capacitor 302 may be charged.

In an embodiment, the DC/DC converter 303 and the regulator 304 may correspond to the power supply circuit 2440 in FIGS. 5A to 6. The DC/DC converter 303 is a step-down converter and may convert a voltage supplied from the battery 1500 to an about 12 V voltage. The voltage converted via the DC/DC converter 303 may be applied to the lighting device 305. The regulator 304 is an electronic component that maintains a constant voltage at a preset level despite changes in voltage. For example, the regulator 304 may lower the about 12V voltage input from the DC/DC converter 303 to about 5 V to apply the voltage to the processor 306.

In an embodiment, the lighting device 305 may be provided on the front or top of the wet mop brush 100 to illuminate a dark surface to be cleaned, to facilitate identification of dust or foreign substances on the surface to be cleaned, or to indicate the status of the wet mop brush 100. The lighting device 305 may include, but is not limited to, an LED display. For example, the lighting device 305 may be a laser. The lighting device 305 may operate automatically as the motor 2100 is driven, or operate according to control by the processor 306. According to an embodiment, the lighting device 305 may change a color or brightness according to control by the processor 306. In addition, the lighting device 305 may be composed of a plurality of LEDs (e.g., three LEDs), but is not limited thereto.

In an embodiment, the at least one processor 306 (e.g., MCU) may control operation of each of the pump 160, the motor 180, and the heater 250. For example, the processor 306 may control driving of the pump 160 in response to a water spray command received from the cleaner main body 1000. To drive the pump 160, the processor 306 may control a duty value of the first PWM control switch element 101 so that a predetermined voltage (e.g., an average voltage of 18 V) is supplied to the pump 160 for a specific time. For example, when the supply voltage of the battery 1500 drops, the processor 306 may increase the duty value of the first PWM control switch element 101 (or adjust the duty value thereof to be higher than the current duty value) so that a constant voltage (e.g., an average voltage of 18 V) is supplied to the pump 160. When no water spray command is received, the processor 306 may maintain the first PWM control switch element 101 in an off state. However, in the embodiment of an automatic spraying mode, the processor 306 may drive the pump 160 at predetermined intervals even when no water spray command is received.

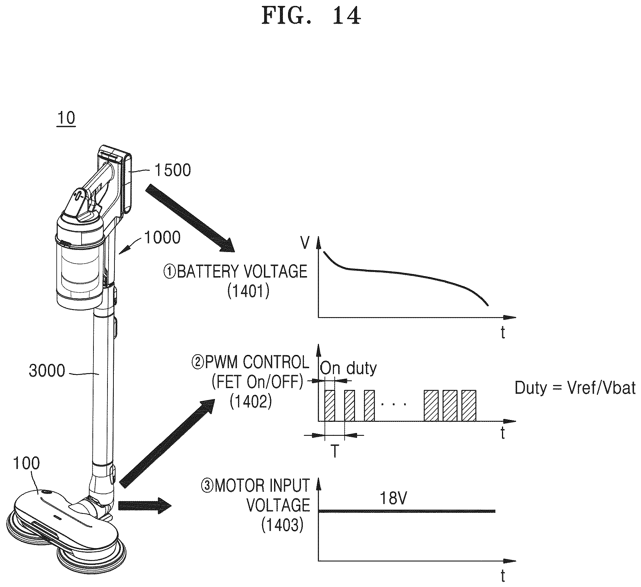

In an embodiment, the processor 306 may turn on the second PWM control switch element 102 to drive the motor 180, or turn off the second PWM control switch element 102 to stop driving the motor 180. Furthermore, the processor 306 may control a duty value of the second PWM control switch element 102 so that a constant voltage (e.g., about 18 V) is supplied to the motor 180. For example, when the supply voltage of the battery 1500 drops, the processor 306 may increase the duty value of the second PWM control switch element 102 so that a constant voltage (e.g., an average voltage of about 18 V) is supplied to the motor 180. An operation in which the processor 306 of the wet mop brush 100 to adjust the duty value based on the battery supply voltage is described in detail with reference to FIG. 14.

In an embodiment and referring to 1401 of FIG. 14, as the battery 1500 is discharged, a voltage supplied from the battery 1500 to the wet mop brush 100 tends to decrease. Therefore, when the battery 1500 is about 100% charged, a drum of the wet mop brush 100 may rotate rapidly, but as a charge level of the battery 1500 decreases, the drum of the wet mop brush 100 may rotate progressively more slowly. In other words, a RPM of the drum (hereinafter also referred to as a drum RPM) of the wet mop brush 100 is not maintained consistently, and the voltage of the battery 1500 drops as the cleaning time elapses, causing the drum RPM of the wet mop brush 100 to decrease.

In an embodiment, the wet mop brush 100 may perform PWM control in order to maintain a constant drum RPM of the wet mop brush 100. The PWM control may refer to a control method that allows an average power per unit time to be input to the motor 180 or pump 160 by repeating a power supply interval (an on-time interval) and a power cutoff interval (an off-time interval) over a constant period. In this case, the average power per unit time input to the motor 180 or pump 160 may vary depending on a duty value. A duty value means a duty cycle (or duty ratio) of the pulse width when a period is constant, and in particular, may refer to a proportion of a power transmission interval (hereinafter also referred to as an 'On duty interval') within a single period. As the duty value increases, the total time during which current flows through the motor 180 or pump 160 becomes longer, so the average power supplied to the motor 180 or pump 160 may increase.

In an embodiment and referring to 1402 of FIG. 14, the processor 306 of the wet mop brush 100 may perform control for compensating for the decrease in the drum RPM of the wet mop brush 100 by increasing the duty value (i.e., a time interval during which the second PWM control switch element 102 is turned on and power is supplied to the motor 180) as the voltage of the battery 1500 drops. According to an embodiment, the duty value may be a value obtained by dividing a reference voltage Vref (e.g., about 18 V) set in the motor 180 by the battery supply voltage Vbat (Duty = Vref/Vbat). In other words, the duty value may increase as the battery supply voltage decreases. For example, the processor 306 of the wet mop brush 100 may maintain a duty value of about 72% for a first period of time after starting cleaning, and then gradually increase the duty value according to a voltage drop in the battery 1500 to reach about 95%.

In an embodiment and referring to 1403 of FIG. 14, when the duty value is adjusted on the wet mop brush 100, an average voltage input to the motor 180 (or pump 160) may be maintained constant. For example, when the duty value of the wet mop brush 100 is appropriately increased on the wet mop brush 100 even when the voltage of the battery 1500 drops, a constant voltage (e.g., about 18 V) as required by the motor 180 (or pump 160) may be supplied to the motor 180 (or pump 160).

In an embodiment and referring back to FIG. 13, the processor 306 may control operation of the heater 250 to provide a high-temperature water spray function. For example, the processor 306 may turn on the third PWM control switch element 103 to drive the heater 250, or turn off the third PWM control switch element 103 to stop driving the heater 250.

According to an embodiment, when a hot water function is activated, the processor 306 may drive the heater 250 to heat water stored in the heating tank 201. The processor 306 may adjust the amount of power supplied to the heater 250 so as not to exceed a current threshold (e.g., 5 A) available in the wet mop brush 100 while the heater 250 is driven. For example, in an embodiment, the processor 306 may drive the heater 250 by using power remaining after using the battery supply power to drive the pump 160 and the motor 180. Thus, when operating currents of the pump 160 and the motor 180 increase, the processor 306 may adjust a duty value of the third PWM control switch element 103 to be low in order to reduce the amount of power supplied to the heater 250. On the other hand, when the operating current of the pump 160 and the motor 180 decreases, the processor 306 may increase the duty value of the third PWM control switch element 103 in order to increase the amount of power supplied to the heater 250 within a maximum reference current (e.g., about 4 A).

In an embodiment, the processor 306 may detect the operating current of the pump 160 via the first current sensing circuit 111 connected to the pump 160. When the operating current of the pump 160 is detected via the first current sensing circuit 111 even though the pump 160 is not driven, the processor 306 may determine that an abnormal situation has occurred in the pump 160. In this embodiment, the processor 306 may transmit information indicating that the abnormal situation has occurred in the pump 160 to a main body communication interface (e.g., the first communication circuit 1140 of 5A) of the cleaner main body 1000 via the brush communication interface 309. At this time, the cleaner main body 1000 may turn off the PWM control switch element 1133 to block the power supply to the wet mop brush 100. Therefore, according to an embodiment, the vacuum cleaner 10 may prevent water leakage by stopping operation of the wet mop brush 100 when an abnormal situation occurs in the pump 160.

In an embodiment, the processor 306 may detect the operating current of the motor 180 via the second current sensing circuit 112 connected to the motor 180. When the operating current of the motor 180 is detected via the second current sensing circuit 112 while driving of the motor 180 is stopped, the processor 306 may determine that an abnormal situation has occurred in the motor 180. In this case, the processor 306 may transmit information indicating that the abnormal situation has occurred in the motor 180 to the cleaner main body 1000 via the brush communication interface 309. In response to receiving the information indicating that the abnormal situation has occurred in the motor 180, the cleaner main body 1000 may turn off the PWM control switch element 1133 to block the power supply to the wet mop brush 100.

In an embodiment, the processor 306 may detect an operating current of the heater 250 via the third current sensing circuit 113 connected to the heater 250. When the operating current of the heater 250 is detected via the third current sensing circuit 113 while driving of the heater 250 is stopped (e.g., preheating is completed or the hot water function is turned off), the processor 306 may determine that an abnormal situation has occurred in the heater 250. In this embodiment, the processor 306 may transmit information indicating that the abnormal situation has occurred in the heater 250 to the cleaner main body 1000 via the brush communication interface 309. In response to receiving the information indicating that the abnormal situation has occurred in the heater 250, the cleaner main body 1000 may turn off the PWM control switch element 1133 to block the power supply to the wet mop brush 100. Thus, according to an embodiment, the vacuum cleaner 10 may prevent the heater 250 from overheating by stopping operation of the wet mop brush 100 when an abnormal situation occurs in the heater 250.

According to an embodiment, the processor 306 may stabilize power through soft-start control that gradually increases the duty value of the second PWM control switch element 102 when driving the motor 180. Furthermore, the processor 306 may also perform soft-start control to gradually increase the duty value of the third PWM control switch element 103 when driving the heater 250. For example, when the heater 250 is driven at an about 100% duty value while the motor 180 is running, power supply to the motor 180 may be affected. Thus, the processor 306 may perform soft-start control on the heater 250 so that the RPM of the motor 180 does not change due to a change in power when driving the heater 250.

In an embodiment, the wet mop brush 100 may initially drive the motor 180 and the heater 250 at different times. For example, when the cleaner main body 1000 is turned on, the wet mop brush 100 may first perform soft-start control on the motor 180, and when the operation of the motor 180 is stabilized, the wet mop brush 100 may perform soft-start control on the heater 250.

According to an embodiment, each of the first current sensing circuit 111, the second current sensing circuit 112, and the third current sensing circuit 113 may include a shunt resistor, but is not limited thereto.

In an embodiment, the wet mop brush 100 may include an output interface 307 for outputting information related to operation of the wet mop brush 100. The output interface 307 may include, but is not limited to, an LED display. The wet mop brush 100 may indicate, via the output interface 307, a state in which there is no water in the heating tank 201, a state in which the hot water function is turned off, a state in which the water in the heating tank 201 is being preheated, a state in which preheating of the water in the heating tank 201 is completed, etc. For example, the wet mop brush 100 may keep the LED display continuously on when preheating is completed, cause the LED display to blink at predetermined intervals when the wet mop brush is in the process of performing preheating, or turn off the LED display when the hot water function is turned off (switching to a normal wet mop mode) or the heating tank 201 is not filled with water.

In an embodiment, the wet mop brush 100 may include an optional resistor 308 to indicate that it is the wet mop brush 100. The optional resistor 308 may correspond to the identification resistor 2500 of FIG. 5A. For example, the optional resistor 308 of the wet mop brush 100 may have a resistance of about 330 KΩ, but is not limited thereto.

In an embodiment, the brush communication interface 309 of the wet mop brush 100 may communicate with the main body communication interface 1140 of the cleaner main body 1000 via signal line communication. Because the brush communication interface 309 may correspond to the second communication circuit 2425 of FIG. 5A, and the main body communication interface 1140 may correspond to the first communication circuit 1140 of FIG. 5A, descriptions already provided above are omitted herein.

According to an embodiment, the wet mop brush 100 may detect a temperature of water stored in the heating tank 201 via the temperature sensor 271 (310). The temperature sensor 271 may include a thermistor. The thermistor is a type of resistor and is an electrical device that uses the property that the resistance of a material changes depending on temperature.

In an embodiment, the wet mop brush 100 may measure a battery voltage supplied from the battery 1500 to the wet mop brush 100 via a voltage sensing circuit (311). The voltage sensing circuit may include a voltage divider circuit consisting of two resistors. The wet mop brush 100 may control driving time of the heater 250 based on the battery voltage. For example, in an embodiment, when the battery voltage is a maximum supply voltage (e.g., a supply voltage when fully charged), the wet mop brush 100 may control the third PWM control switch element 103 to drive the heater 250 for about 10 seconds, and when the battery voltage is a minimum supply voltage (e.g., a supply voltage when fully discharged), the wet mop brush 100 may control the third PWM control switch element 103 to drive the heater 250 for about 15 seconds.

In an embodiment, by using the water sensor 272, the wet mop brush 100 may detect whether the heating tank 201 is filled with water or whether the heating tank 201 is not filled with water (312).

In an embodiment, the wet mop brush 100 may detect the total operating current of the wet mop brush 100 via the first current sensing circuit 111, the second current sensing circuit 112, and the third current sensing circuit 113 (313). For example, the wet mop brush 100 may detect a first operating current of the pump 160 via the first current sensing circuit 111, detect a second operating current of the motor 180 via the second current sensing circuit 112, and detect a third operating current of the heater 250 via the third current sensing circuit 113. The wet mop brush 100 may then detect a sum of the first operating current, the second operating current, and the third operating current as the total operating current of the wet mop brush 100. According to an embodiment, because the first operating current of the pump 160 is relatively very small, the wet mop brush 100 may detect the sum of the second operating current of the motor 180 and the third operating current of the heater 250 as the total operating current of the wet mop brush 100.

According to an embodiment, the wet mop brush 100 may adjust the amount of power supplied to each load so that the total operating current of the wet mop brush 100 does not exceed a current threshold available in the wet mop brush 100. An operation in which the wet mop brush 100 adjusts the amount of power supplied to each load is described with reference to FIG. 15.

FIG. 15 is a flowchart of a method, performed by the wet mop brush 100, of adjusting the amount of power supplied to each load based on a current threshold, according to an embodiment.

In operation S1510, according to an embodiment, the wet mop brush 100 may detect a total operating current of loads included in the wet mop brush 100. The loads included in the wet mop brush 100 may be at least two of the pump 160, the motor 180, and the heater 250, but are not limited thereto.

According to an embodiment, the total operating current of the loads included in the wet mop brush 100 may include the sum of the operating current of the motor 180 and the operating current of the heater 250. The total operating current of the loads included in the wet mop brush 100 may include the sum of the operating current of the motor 180, the operating current of the heater 250, and the operating current of the pump 160.

According to an embodiment, the wet mop brush 100 may respectively monitor the operating current of the pump 160, the operating current of the motor 180, and the operating current of the heater 250 via the first current sensing circuit 111 of the pump 160, the second current sensing circuit 112 of the motor 180, and the third current sensing circuit 113 of the heater 250. The wet mop brush 100 may then detect the sum of the operating current of the pump 160, the operating current of the motor 180, and the operating current of the heater 250 as the total operating current of the wet mop brush 100. However, because the pump 160 has a relatively short operating time and does not have a large operating current, the wet mop brush 100 may detect the sum of the operating current of the motor 180 and the operating current of the heater 250 as the total operating current of the wet mop brush 100.

In operation S1520, according to an embodiment, the wet mop brush 100 may determine whether the total operating current of the loads included in the wet mop brush 100 exceeds a first current threshold. The first current threshold may be a value corresponding to a power limit available in the wet mop brush 100 that uses power from the battery 1500 attached to the cleaner main body 1000. The first current threshold may be initially preset. The first current threshold may be, for example, about 5 A, but is not limited thereto.

According to an embodiment, the wet mop brush 100 may determine whether the total operating current of the loads exceeds the first current threshold by continuously comparing the total operating current of the loads included in the wet mop brush 100 with the first current threshold.

In operation S1530, according to an embodiment, the wet mop brush 100 may normally operate each of the loads when the total operating current of the loads does not exceed the first threshold current (No in operation S1520).

For example, in an embodiment, when the total operating current of the loads is less than the first threshold current, the wet mop brush 100 may drive the motor 180, the heater 250, and the pump 160 while maintaining current state amounts of power supplied to the motor 180, the heater 250, and the pump 160. For example, when the total operating current of the loads is about 4 A and the first threshold current is about 5 A, the wet mop brush 100 may maintain the duty value of the first PWM control switch element 101 for the pump 160, the duty value of the second PWM control switch element 1020 for the motor 180, and the duty value of the third PWM control switch element 103 for the heater 250 in their current states.

Moreover, according to an embodiment, the wet mop brush 100 may continuously monitor the operating current of each of the loads and/or the total operating current of the loads while driving the motor 180, the heater 250, and the pump 160.

In operation S1540, according to an embodiment, when the total operating current of the loads exceeds the first current threshold (Yes in operation S1520), the wet mop brush 100 may determine whether the total operating current of the loads also exceeds a second current threshold that is greater than the first current threshold.

In an embodiment, the second current threshold is a reference current value for stopping driving of the wet mop brush 100 and may be preset. The second current threshold may be about 1.5 or about 2 times the first current threshold, but is not limited thereto. Hereinafter, an example in which the first current threshold is about 5 A and the second current threshold is about 10 A.

According to an embodiment, the wet mop brush 100 may determine whether the total operating current of the loads exceeds the second current threshold by continuously comparing the total operating current of the loads included in the wet mop brush 100 with the second current threshold.

In operation S1550, according to an embodiment, when the total operating current of the loads exceeds the first current threshold (Yes in operation S1520) but does not exceed the second current threshold (No in operation S1540), the wet mop brush 100 may adjust the amount of power supplied to at least one of the motor 180, the heater 250, or the pump 160.

According to an embodiment, when the total operating current of the loads included in the wet mop brush 100 exceeds the first current threshold, the processor 306 of the wet mop brush 100 may decrease the amount of power supplied to the heater 250. For example, in an embodiment, the processor 306 of the wet mop brush 100 may decrease the duty value of the third PWM control switch element 103 connected to the heater 250 (or adjust the duty value thereof to be lower than the current duty value) so that the total operating current of the loads is below the first current threshold. Because operation of the motor 180 and the pump 160 is essential to the wet mop brush 100, but operation of the heater 250 for preheating water in the heating tank 201 is optional, the wet mop brush 100 may first adjust the amount of power supplied to the heater 250 before adjusting the power supply to the motor 180 and the pump 160 when the total operating current of the loads exceeds the first current threshold.

According to an embodiment, when the total operating current of the loads exceeds the first current threshold, the processor 306 of the wet mop brush 100 may decrease the amount of power supplied to not only the heater 250 but also the motor 180. For example, the processor 306 of the wet mop brush 100 may adjust the duty value of the third PWM control switch element 103 connected to the heater 250 and the duty value of the second PWM control switch element 102 connected to the motor 180 to be slightly lower.

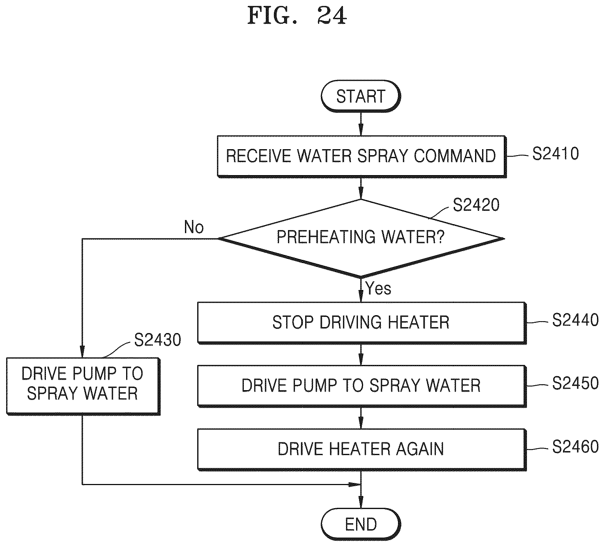

According to an embodiment, the wet mop brush 100 may alternately drive the heater 250 and the pump 160 in consideration of the first current threshold. For example, when a water spray command is received from the cleaner main body 1000, the wet mop brush 100 may stop driving the heater 250 and drive the pump 160. The wet mop brush 100 may then drive the heater 250 again when the driving of the pump 160 is completed. An operation in which the wet mop brush 100 alternately drives the pump 160 and the heater 250 will be described in detail below with reference to FIG. 24.

According to an embodiment, the wet mop brush 100 may adjust a driving time of the pump 160 in consideration of the first current threshold. For example, the wet mop brush 100 may shorten the driving time of the pump 160 when the total operating current of the loads exceeds the first current threshold. For example, when the total operating current of the loads exceeds the first current threshold, the wet mop brush 100 may reduce the operating time of the pump 160 from about 4 seconds to about 3 seconds.

In operation S1560, according to an embodiment, the wet mop brush 100 may determine whether a certain period of time has elapsed since the adjusting of the amount of power supplied to the at least one of the motor 180, the heater 250, or the pump 160.

According to an embodiment, when the certain period of time has not elapsed (No in operation S1560), the wet mop brush 100 may monitor the operating current of each load and/or the total operating current of the loads, and decrease the amount of power (e.g., a duty value) supplied to the at least one of the motor 180, the heater 250, or the pump 160 so that the total operating current of the loads is below the first current threshold.

On the other hand, according to an embodiment, when the amount of power supplied to the at least one of the motor 180, the heater 250, or the pump 160 is decreased for the certain period of time, but the total operating current of the loads does not fall below the first current threshold (Yes in operation S1560), the wet mop brush 100 may transmit a signal to the cleaner main body 1000. For example, the wet mop brush 100 may transmit a signal indicating an overcurrent state to the cleaner main body 1000 via signal line communication. In this case, the cleaner main body 1000 may stop driving the wet mop brush 100. For example, the cleaner main body 1000 may block the power supply to the wet mop brush 100 by turning off the PWM control switch element 1133 included in the PCB 1130 of the suction motor 1110.

In operation S1570, according to an embodiment, when the total operating current of the loads exceeds the second current threshold (Yes in operation S1540), the wet mop brush 100 may transmit a signal to the cleaner main body 1000. For example, in an embodiment, the wet mop brush 100 may transmit a signal indicating an overcurrent state to the cleaner main body 1000 via signal line communication. In this case, the cleaner main body 1000 may stop driving the wet mop brush 100 by cutting off the power supply to the wet mop brush 100.

According to an embodiment, the cleaner main body 1000 may output a notification indicating that the wet mop brush 100 is in an overcurrent state or a notification to check a status of the wet mop brush 100.

According to an embodiment, the wet mop brush 100 may efficiently use the power from the battery 1500 by adjusting the amount of power supplied to each load based on the first current threshold. In addition, according to an embodiment, when the total operating current of the loads greatly exceeds the first current threshold (i.e., when the total operating current of the loads exceeds the second current threshold), the cleaner main body 1000 may prevent damage to the loads of the wet mop brush 100 due to the overcurrent by stopping operation of the wet mop brush 100.

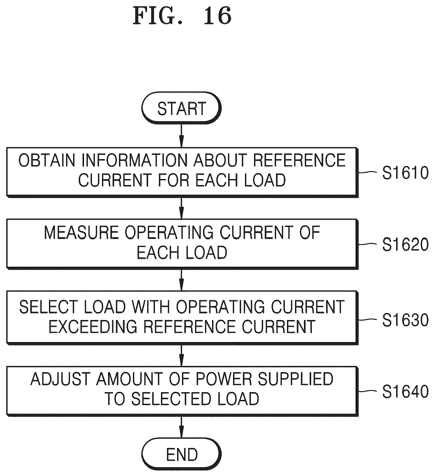

Moreover, according to an embodiment, the wet mop brush 100 may adjust the amount of power supplied to each load by further taking into account a reference current set for each load in addition to the first current threshold. A method, performed by the wet mop brush 100, of adjusting the amount of power supplied to each load based on a reference current set for each load is described in detail with reference to FIG. 16, according to an embodiment.

FIG. 16 is a flowchart of a method, performed by the wet mop brush 100, of adjusting the amount of power supplied to each load based on a reference current set for each load, according to an embodiment.

In operation S1610, according to an embodiment, the wet mop brush 100 may obtain information about a reference current for each load.

According to an embodiment, a reference current may be preset for each load and stored in a memory of the wet mop brush 100. In this case, the wet mop brush 100 may read information about the reference current for each load from the memory. Furthermore, when the reference current for each load is adjusted by a user or system, the wet mop brush 100 may receive information about the adjusted reference current for each load from the cleaner main body 1000.

For example, in an embodiment, the motor 180 may have a reference current of about 2 A, the heater 250 may have a reference current of about 4 A, and the pump 160 may have a reference current of about 4 A, but the invention is not limited thereto.

According to an embodiment, the reference current of the motor 180 may vary depending on whether the heater 250 is driven. For example, when the heater 250 and the motor 180 are driven together, the reference current of the motor 180 is about 2.1 A, and when only the motor 180 is driven, the reference current of the motor 180 may be about 2.5 A.

In operation S1620, according to an embodiment, the wet mop brush 100 may measure an operating current of each load.

In an embodiment, the wet mop brush 100 may detect the operating current of the pump 160 via the first current sensing circuit 111 connected to the pump 160. The wet mop brush 100 may detect the operating current of the motor 180 via the second current sensing circuit 112 connected to the motor 180. The wet mop brush 100 may detect the operating current of the heater 250 via the third current sensing circuit 113 connected to the heater 250.

In operation S1630, according to an embodiment, the wet mop brush 100 may select a load whose operating current exceeds a reference current.

According to an embodiment, the wet mop brush 100 may detect a load whose operating current exceeds a reference current by comparing the operating current of each load with the reference current for the corresponding load. For example, in an embodiment, when the operating current of the motor 180 is about 2.5 A and the reference current of the motor 180 is about 2 A, the wet mop brush 100 may identify that the operating current of the motor 180 exceeds the reference current of the motor 180.

According to an embodiment, the operating current of each load may vary depending on a state of a surface to be cleaned or a state of a mop pad. For example, when the amount of moisture in the mop pad is large, the operating current of the motor 180 may be high.

In operation S1640, according to an embodiment, the wet mop brush 100 may adjust the amount of power supplied to the load whose operating current exceeds the reference current.

According to an embodiment, the wet mop brush 100 may decrease the amount of power supplied to the load whose operating current exceeds the reference current so that the operating current is less than or equal to the reference current. For example, when the operating current of the motor 180 exceeds the reference current of the motor 180, the wet mop brush 100 may decrease the amount of power supplied to the motor 180 by adjusting the duty value of the second PWM control switch element 102 connected to the motor 180 to a lower level. In this case, the operating current of the motor 180 may be lowered to be less than or equal to the reference current of the motor 180.

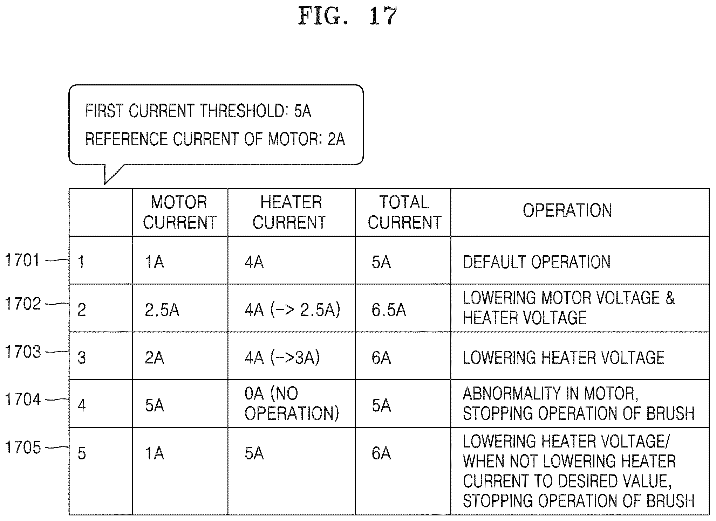

In an embodiment, an operation in which the wet mop brush 100 adjusts the amount of power supplied to a load based on the first current threshold or reference current for each load is described in more detail with reference to FIG. 17.

FIG. 17 is a diagram illustrating an operation in which the wet mop brush 100 adjusts the amount of power supplied to the heater 250 or the motor 180, according to an embodiment. FIG. 17 illustrates an embodiment in which the first current threshold is about 5 A, the reference current of the motor 180 is about 2 A, and the total operating current is the sum of the operating current of the motor 180 and the operating current of the heater 250.

In an embodiment, in a first scenario 1701, the motor 180 may have an operating current of about 1 A and the heater 250 may have an operating current of about 4 A. In this case, the total operating current of the loads is about 5 A, which does not exceed the first current threshold, and the operating current (about 1 A) of the motor 180 does not exceed the reference current (about 2 A) of the motor 180. Therefore, the wet mop brush 100 may perform a default operation. For example, the wet mop brush 100 may drive the motor 180 and the heater 250 at a current duty value. In this case, the heater 250 may heat water in the heating tank 201 so that the water in the heating tank 201 is maintained within a threshold temperature range.

In an embodiment, in a second scenario 1702, the motor 180 may have an operating current of about 2.5 A and the heater 250 may have an operating current of about 4 A. In this case, the total operating current of the loads is about 6.5 A, which may exceed the first current threshold (about 5 A). Thus, the wet mop brush 100 may reduce the amount of power supplied to the heater 250 so that the total operating current of the loads is about 5 A or less. For example, the wet mop brush 100 may lower the duty value of the third PWM control switch element 103 connected to the heater 250 so that the operating current of the heater 250 is about 2.5 A.

In addition, in an embodiment, the operating current of the motor 180 is about 2.5 A, which may also exceed the reference current (about 2 A) of the motor 180. Therefore, the wet mop brush 100 may reduce the amount of power supplied to the motor 180 so that the operating current of the motor 180 is about 2 A or less. For example, the wet mop brush 100 may lower the duty value of the second PWM control switch element 102 connected to the motor 180.

In an embodiment, in a third scenario 1703, the motor 180 may have an operating current of about 2 A and the heater 250 may have an operating current of about 4 A. In this case, the total operating current of the loads is about 6 A, which may exceed the first current threshold (about 5 A). Thus, the wet mop brush 100 may reduce the amount of power supplied to the heater 250 so that the total operating current of the loads is about 5 A or less. For example, the wet mop brush 100 may lower the duty value of the third PWM control switch element 103 connected to the heater 250 so that the operating current of the heater 250 is about 3 A.

On the other hand, in an embodiment, because the operating current of the motor 180 does not exceed the reference current of the motor 180, such as about 2A, the wet mop brush 100 may maintain the current amount of power supplied to the motor 180.

In an embodiment, in a fourth scenario 1704, the motor 180 may have an operating current of about 5 A and the heater 250 may have an operating current of about 0 A. That is, in the fourth scenario 1704, the operation of the heater 250 may be stopped because preheating is completed or a hot water function is deactivated. On the other hand, the operating current of the motor 180 may be about 5 A, which significantly exceeds the reference current (about 2A) of the motor 180. In this case, the wet mop brush 100 may determine that an abnormal situation has occurred in the motor 180 and transmit information indicating the abnormal situation of the motor 180 to the cleaner main body 1000. The cleaner main body 1000 may stop operation of the wet mop brush 100 in response to the abnormal situation in the motor 180. For example, the cleaner main body 1000 may block power supply to the wet mop brush 100.

Moreover, according to an embodiment, the cleaner main body 1000 may detect the operating current of the motor 180 via the load detection sensor (1134 of FIG. 2). When the operating current of the motor 180 significantly exceeds the reference current of the motor 180, the cleaner main body 1000 may block the power supply to the wet mop brush 100 to stop operation of the wet mop brush 100.

In an embodiment, in a fifth scenario 1705, the motor 180 may have an operating current of about 1 A and the heater 250 may have an operating current of about 5 A. In this case, the total operating current of the loads is about 6 A, which may exceed the first current threshold (about 5 A). Thus, the wet mop brush 100 may reduce the amount of power supplied to the heater 250 so that the total operating current of the loads is about 5 A or less. For example, the wet mop brush 100 may lower the duty value of the third PWM control switch element 103 connected to the heater 250 so that the operating current of the heater 250 is about 4 A.

However, in an embodiment, when the wet mop brush 100 does not lower the duty value of the third PWM control switch element 103 such that the operating current of the heater 250 is lowered to about 4 A or less, the wet mop brush 100 may transmit a signal indicating that the heater 250 is in an overcurrent state to the cleaner main body 1000. In this case, the cleaner main body 1000 may stop operation of the wet mop brush 100 by cutting off the power supply to the wet mop brush 100.

According to an embodiment, the wet mop brush 100 may appropriately distribute the power supplied by the battery 1500 to each load, based on a threshold current available in the wet mop brush 100 or a reference current for each load, and may prevent damage to each load by preventing overcurrent from flowing through the wet mop brush 100.

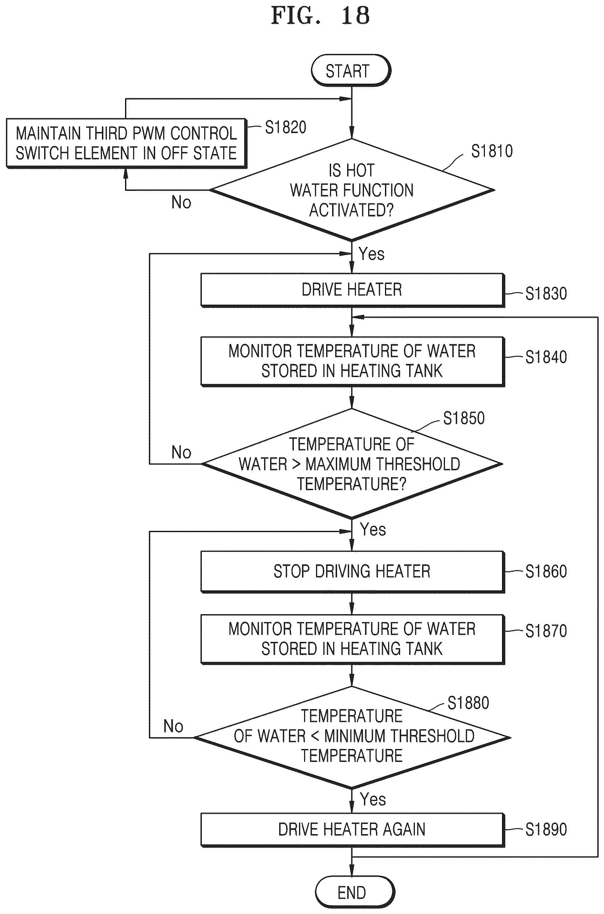

FIG. 18 is a flowchart of a method, performed by the wet mop brush 100, of controlling the heater 250 based on a temperature of water stored in the heating tank 201, according to an embodiment.

In operation S1810, according to an embodiment, the wet mop brush 100 may determine whether a hot water function is activated.

According to an embodiment, when the user turns off the hot water function in the cleaner main body 1000, the wet mop brush 100 may receive, from the cleaner main body 1000, a signal indicating that the hot water function has been deactivated. On the other hand, when the user turns the hot water function back on in the cleaner main body 1000, the wet mop brush 100 may receive, from the cleaner main body 1000, a signal indicating that the hot water function has been activated.

In addition, in an embodiment, when the hot water function is activated by default, the wet mop brush 100 may determine that the hot water function is activated unless it receives a signal from the cleaner main body 1000 that the hot water function has been deactivated.

In operation S1820, according to an embodiment, when the hot water function is deactivated (No in operation S1810), the wet mop brush 100 may maintain the third PWM control switch element 103 connected to the heater 250 in an off state. At this time, when the user presses a water spray button, the wet mop brush 100 may spray water at room temperature.

In operation S1830, according to an embodiment, the wet mop brush 100 may drive the heater 250 when the hot water function is activated (Yes in operation S1810). For example, the wet mop brush 100 may drive the heater 250 to preheat water in the heating tank 201. Preheating may mean maintaining the water in the heating tank 201 within a threshold temperature range. In this case, the threshold temperature range is a temperature higher than room temperature, and may be, for example, about 52 °C to about 58 °C, but is not limited thereto. The threshold temperature range may also be changed by user settings or system settings.

According to an embodiment, when the hot water function is activated, the wet mop brush 100 may turn on the third PWM control switch element 103 connected to the heater 250 and control a duty value of the third PWM control switch element 103. For example, the wet mop brush 100 may adjust the duty value of the third PWM control switch element 103 connected to the heater 250 so that the total operating current of the loads does not exceed the first current threshold (e.g., about 5 A).

In addition, according to an embodiment, the wet mop brush 100 may initially drive the heater 250 at an about 100% duty value so that water stored in the heating tank 201 is quickly preheated, and then gradually reduce the duty value.

In operation S1840, according to an embodiment, the wet mop brush 100 may monitor a temperature of water stored in the heating tank 201. For example, the wet mop brush 100 may measure the temperature of water stored in the heating tank 201 via the temperature sensor (271 of FIG. 11). Because the heater 250 is operating, the temperature of the water stored in the heating tank 201 may gradually increase.

In operation S1850, according to an embodiment, the wet mop brush 100 may determine whether the temperature of the water stored in the heating tank 201 exceeds a maximum threshold temperature.

In an embodiment, the maximum threshold temperature may mean a largest value in the threshold temperature range. For example, when the threshold temperature range is about 52 °C to about 58 °C, the maximum threshold temperature may be about 58 °C.

According to an embodiment, the wet mop brush 100 may use the temperature sensor 271 to monitor whether the temperature of the water stored in the threshold temperature exceeds the maximum threshold temperature.

According to an embodiment, when the temperature of the water stored in the heating tank 201 is less than or equal to the maximum threshold temperature (No in operation S1850), the wet mop brush 100 may monitor the temperature of the water stored in the heating tank 201 while continuing to supply power to the heater 250.

In operation S1860, according to an embodiment, the wet mop brush 100 may stop driving the heater 250 when the temperature of the water stored in the heating tank 201 exceeds the maximum threshold temperature (Yes in operation S1850).

According to an embodiment, the wet mop brush 100 may stop driving the heater 250 when the temperature of the water stored in the heating tank 201 exceeds the maximum threshold temperature so that the temperature of the water stored in the heating tank 201 is maintained within the threshold temperature range. For example, the wet mop brush 100 may block power supply to the heater 250 by turning off the third PWM control switch element 103 connected to the heater 250.

In operation S1870, according to an embodiment, the wet mop brush 100 may continuously monitor the temperature of the water stored in the heating tank 201 while the driving of the heater 250 is stopped. For example, the wet mop brush 100 may continuously monitor the temperature of the water stored in the heating tank 201 by using the temperature sensor 271. In this case, because the driving of the heater 250 is stopped, the temperature of the water stored in the heating tank 201 may gradually decrease.

In operation S1880, according to an embodiment, the wet mop brush 100 may determine whether the temperature of the water stored in the heating tank 201 is below a minimum threshold temperature.

In an embodiment, the minimum threshold temperature may mean a smallest value in the threshold temperature range. For example, when the threshold temperature range is about 52 °C to about 58 °C, the minimum threshold temperature may be about 52 °C.

According to an embodiment, the wet mop brush 100 may use the temperature sensor 271 to monitor whether the temperature of the water stored in the threshold temperature is below the minimum threshold temperature.

According to an embodiment, when the temperature of the water stored in the heating tank 201 is greater than or equal to the minimum threshold temperature (No in operation S1880), the wet mop brush 100 may continuously monitor the temperature of the water stored in the heating tank 201 while the driving of the heater 250 is stopped.

In operation 1890, according to an embodiment, the wet mop brush 100 may drive the heater 250 again when the temperature of the water stored in the heating tank 201 is below the minimum threshold temperature (Yes in operation S1880).

According to an embodiment, when the temperature of the water stored in the heating tank 201 is below the minimum threshold temperature, the wet mop brush 100 may drive the heater 250 again so that the temperature of the water stored in the heating tank 201 is maintained within the threshold temperature range. For example, the wet mop brush 100 may drive the heater 250 by turning on the third PWM control switch element 103 connected to the heater 250 and controlling the duty value of the third PWM control switch element 103.

According to an embodiment, when redriving the heater 250, the wet mop brush 100 may return to operation S1840 and continue to monitor whether the temperature of the water stored in the heating tank 201 exceeds the maximum threshold temperature.

Therefore, according to an embodiment, the wet mop brush 100 may control the driving of the heater 250 so that the temperature of the water stored in the heating tank 201 is maintained within the threshold temperature range. In this case, the wet mop brush 100 may spray warm water within the threshold temperature range onto the surface to be cleaned, so that the surface to be cleaned may be thoroughly cleaned.

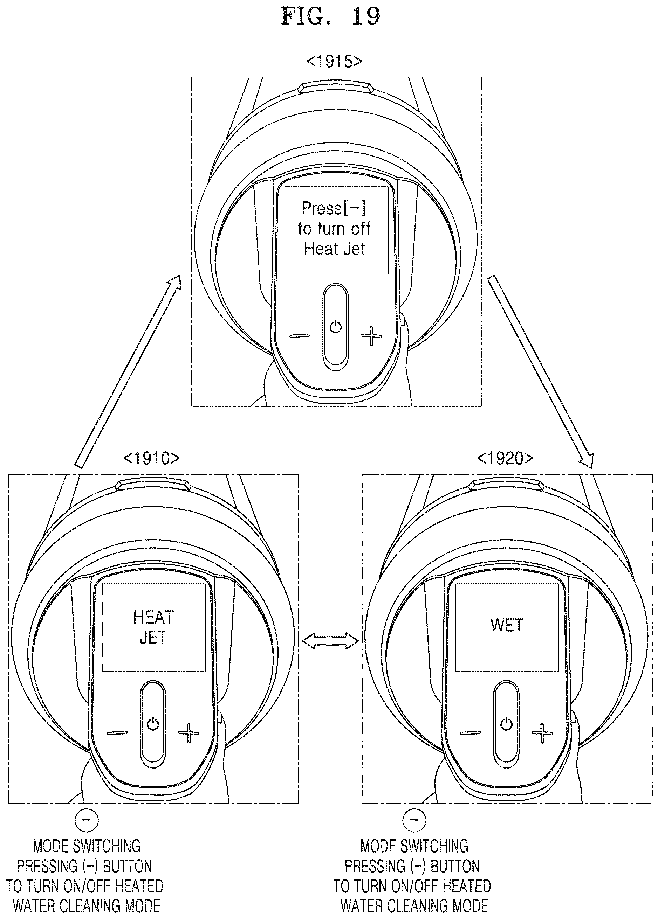

FIG. 19 is a graphic diagram illustrating an operation in which the vacuum cleaner 10 displays a screen associated with a hot water function, according to an embodiment.

In an embodiment and referring to FIG. 19, when the wet mop brush 100 is connected to the vacuum cleaner 10, the cleaner main body 1000 may display a screen associated with a hot water function via an output interface. For example, when the user activates the hot water function (e.g., turns on a high-temperature water cleaning mode), the cleaner main body 1000 may output, on an LCD, information indicating that the hot water function is activated. For example, the cleaner main body 1000 may display, on the LCD, 'Heat Jet' indicating a hot water mop brush (1910).

In an embodiment, when the user deactivates the hot water function (e.g., turns off the hot water cleaning mode), the cleaner main body 1000 may output, on the LCD, information indicating that the hot water function is deactivated. For example, the cleaner main body 1000 may display, on the LCD, 'Wet' indicating a normal wet mop brush (1920).

In an embodiment, the cleaner main body 1000 may display, on the output interface, information that guides the user about mode switching. For example, the cleaner main body 1000 may guide the user about how to deactivate the hot water function. When the hot water function is set to be deactivated by pressing a (-) button, the cleaner main body 1000 may display 'Press [-] to turn off Heat Jet' on the LCD (1915). In this case, the user may deactivate or activate the hot water function as needed by selecting the (-) button on the cleaner main body 1000.

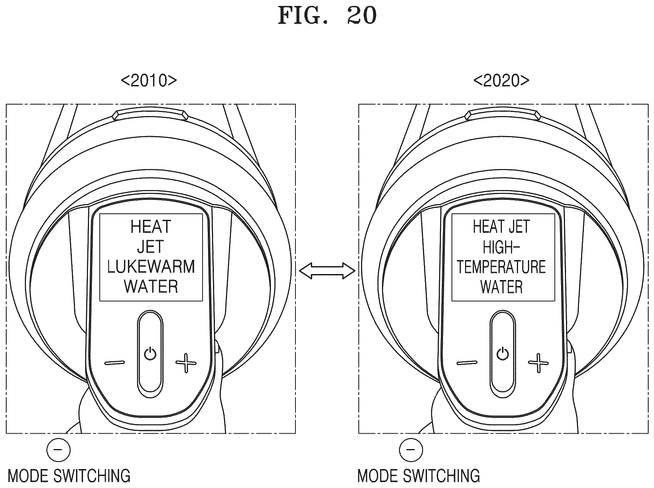

FIG. 20 is a graphic diagram illustrating an operation in which the vacuum cleaner 10 provides a lukewarm water mode and a high-temperature water mode, according to an embodiment.

According to an embodiment, the vacuum cleaner 10 may provide a lukewarm water mode and a high-temperature water mode when the wet mop brush 100 is connected thereto. The lukewarm water mode may be a mode in which water having a temperature slightly higher than room temperature is sprayed, and the high-temperature water mode may be a mode in which water having a temperature much higher than the room temperature is sprayed. For example, in an embodiment, the lukewarm water mode may be a mode in which water at approximately 40 °C is sprayed, and the high-temperature water mode may be a mode in which water at approximately 55 °C is sprayed, but the invention is not limited thereto.

According to an embodiment, when activating the hot water function, the user may further select one of the lukewarm water mode and the high-temperature water mode. When the user selects the lukewarm water mode, the cleaner main body 1000 may display, on the LCD, a graphical user interface (GUI) (e.g., Heat Jet lukewarm water) indicating the lukewarm water mode (2010). On the other hand, when the user selects the high-temperature water mode, the cleaner main body 1000 may display, on the LCD, a GUI (e.g., Heat Jet high-temperature water) indicating the high-temperature water mode (2020).

In an embodiment, when the user selects the lukewarm water mode, the cleaner main body 1000 may transmit information indicating that the lukewarm water mode has been selected to the wet mop brush 100 via signal line communication. In response to receiving the information indicating that the lukewarm water mode has been selected from the cleaner main body 1000, the wet mop brush 100 may control driving of the heater 250 so that a temperature of water stored in the heating tank 201 is maintained within a first threshold temperature range (e.g., about 37 °C to about 43 °C) corresponding to lukewarm water.

In an embodiment, when the user selects the high-temperature water mode, the cleaner main body 1000 may transmit information indicating that the high-temperature water mode has been selected to the wet mop brush 100 via signal line communication. In this case, in response to receiving the information indicating that the high-temperature water mode has been selected from the cleaner main body 1000, the wet mop brush 100 may control driving of the heater 250 so that the temperature of the water stored in the heating tank 201 is maintained within a second threshold temperature range (e.g., about 52 °C to about 58 °C) corresponding to high-temperature water.

FIG. 20 illustrates an example in which a hot water range is divided into two levels (e.g., lukewarm water and high-temperature water), but is not limited thereto. For example, the hot water range may be divided into three or more levels.

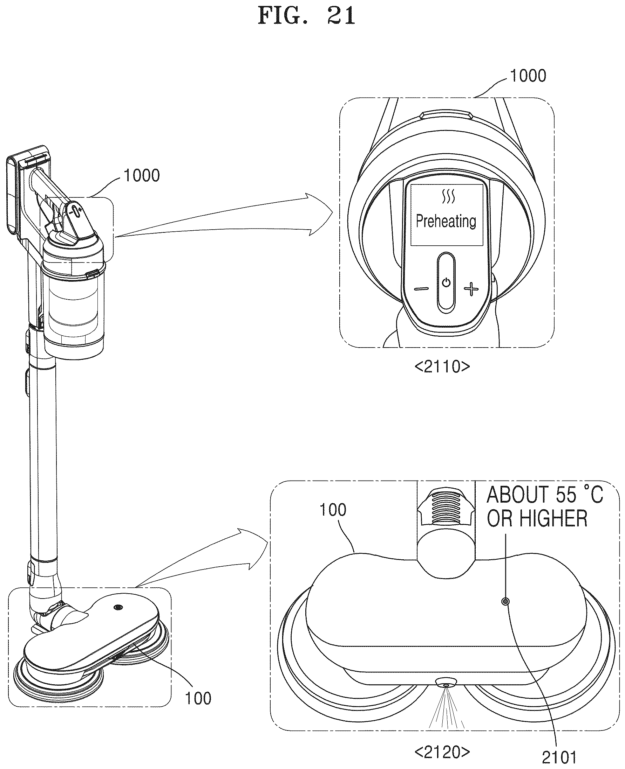

FIG. 21 is a graphic diagram illustrating an operation in which the vacuum cleaner 10 outputs information related to preheating, according to an embodiment.

In an embodiment and referring to FIG. 21, when the hot water function is activated, the wet mop brush 100 may perform a preheating operation to spray hot water. For example, the wet mop brush 100 may drive the heater 250 so that water stored in the heating tank 201 is maintained within a threshold temperature range. In this case, the cleaner main body 1000 may display, on the output interface, a GUI (e.g., Preheating) indicating that the wet mop brush 100 is preheating the water (2110).

In an embodiment, the wet mop brush 100 may also indicate, via the output interface, a state in which the water in the heating tank 201 is being preheated. For example, the wet mop brush 100 may cause an LED display 2101 to blink at predetermined intervals to indicate that the wet mop brush 100 is preheating the water (2120).

According to an embodiment, in addition to the state in which the water in the heating tank 201 is being preheated, the wet mop brush 100 may indicate, via the output interface, a state in which there is no water in the heating tank 201, a state in which the hot water function is turned off, a state in which preheating of the water in the heating tank 201 is completed, etc. For example, in an embodiment, when the preheating is completed, the wet mop brush 100 may keep the LED display 2101 continuously on. The wet mop brush 100 may turn off the LED display 2101 when not driving the heater 250 due to absence of water in the heating tank 201 or deactivation of the hot water function.

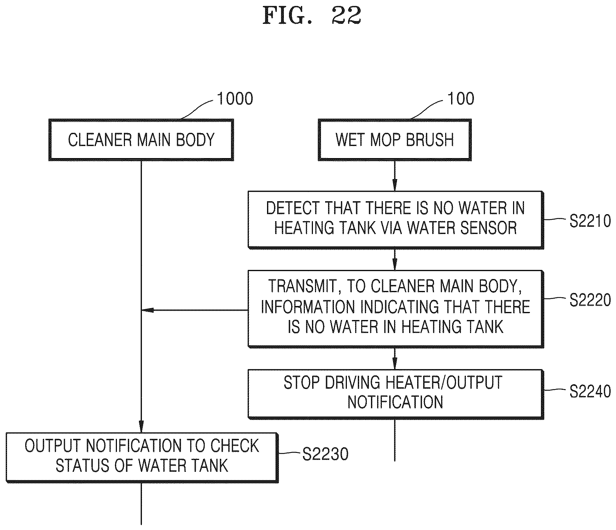

FIG. 22 is a flowchart of a method, performed by the vacuum cleaner 10, of outputting a notification related to the water tank 150, according to an embodiment.

In operation S2210, according to an embodiment, the wet mop brush 100 may detect that there is no water in the heating tank 201 via the water sensor 272.

In an embodiment, when water is not supplied from the water tank 150 to the heating tank 201 due to no water in the water tank 150 or a problem with the first water supply pipe 171 connecting between the water tank 150 and the pump 160, the water in the heating tank 201 may decrease, so the water sensor 272 is not able to detect water. When the water sensor 272 does not detect water, the wet mop brush 100 may determine that there is no water in the heating tank 201.

In operation S2220, according to an embodiment, in response to detecting that there is no water in the heating tank 201, the wet mop brush 100 may transmit, to the cleaner main body 1000, information indicating that there is no water in the heating tank 201.

For example, in an embodiment, the wet mop brush 100 may transmit, to the cleaner main body 1000, information indicating that the heating tank 201 is not filled with water by using signal line communication.

In operation S2230, according to an embodiment, in response to receiving the information indicating that there is no water in the heating tank 201, the cleaner main body 1000 may output a notification to check a status of the water tank 150.

For example, in an embodiment, because when there is no water in the water tank 150, there is a high possibility that water will not be supplied to the heating tank 201, the cleaner main body 1000 may output a notification to check the status of the water tank 150.

According to an embodiment, the cleaner main body 1000 may output a notification to check the status of the water tank 150 visually via an LCD or audibly via a speaker.

In operation S2240, according to an embodiment, when detecting that there is no water in the heating tank 201 via the water sensor 272, the wet mop brush 100 may stop driving the heater 250.

For example, in an embodiment, the wet mop brush 100 may turn off the third PWM control switch element 103 connected to the heater 250, thereby blocking power supply to the heater 250. In this case, overheating of the heater 250, which may occur as a result of the heater 250 operating when the heating tank 201 is not filled with water, may be prevented.

Moreover, according to an embodiment, the wet mop brush 100 may determine that the heating tank 201 is in an overheated state when detecting, via the water sensor 272, that there is no water in the heating tank 201 and detecting, via the temperature sensor 271, that the temperature in the heating tank 201 is rising rapidly. In this case, the wet mop brush 100 may stop driving the heater 250 by cutting off the power supply to the heater 250.

According to an embodiment, when detecting that there is no water in the heating tank 201 or determining that the heating tank 201 is in an overheated state, the wet mop brush 100 may output a notification via the output interface. For example, the wet mop brush 100 may also turn off the LED display 2101 when stopping driving the heater 250 in response to detecting that there is no water in the heating tank 201 or determining that the heating tank 201 is in an overheated state. The wet mop brush 100 may cause the LED display 2101 to light up or blink in a specific color (e.g., orange) to indicate that there is no water in the heating tank 201.

In an embodiment, when the LED display 2101 does not light up or when the LED display 2101 lights up in a specific color, the user may check whether the water tank 150 is filled with water.

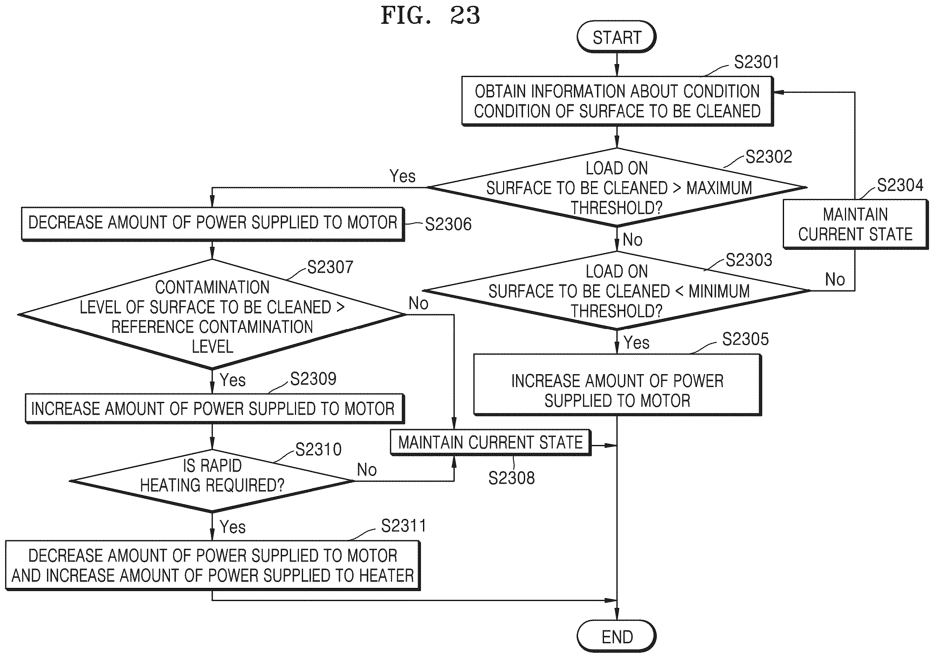

In addition, according to an embodiment, when high power output is required for the motor 180, the wet mop brush 100 may adjust a duty value of the second PWM control switch element 102 connected to the motor 180 to be high, and when low power output is required for the motor 180, adjust the duty value of the second PWM control switch element 102 to be low. An operation in which the wet mop brush 100 adjusts the amount of power supplied to the motor 180 is described in detail with reference to FIG. 23.

FIG. 23 is a flowchart of a method, performed by the wet mop brush 100, of adjusting the amount of power supplied to the motor 180, according to an embodiment.

In operation S2301, according to an embodiment, the wet mop brush 100 may obtain information about a condition of a surface to be cleaned.

According to an embodiment, the condition of the surface to be cleaned may include, but is not limited to, a material (type) of the surface to be cleaned (e.g., floor covering, marble, mat, etc.), a load on the surface to be cleaned, and a contamination level of the surface to be cleaned. The more slippery the material of the surface to be cleaned, the less friction force between the wet mop brush 100 and the surface to be cleaned, which may result in a smaller load on the surface to be cleaned.

According to an embodiment, the wet mop brush 100 may measure a load (e.g., a floor load) on the surface to be cleaned via a load sensing circuit (e.g., a shunt resistor). For example, the load sensing circuit may include a second current sensing circuit 112 connected to the motor 180, and the load on the surface to be cleaned may be determined by an operating current of the motor 180.

According to an embodiment, the wet mop brush 100 may measure the contamination level of the surface to be cleaned by using a contamination detection sensor.

In operation S2302, according to an embodiment, the wet mop brush 100 may determine whether the load on the surface to be cleaned exceeds a maximum threshold.

For example, in an embodiment, depending on the material of the surface to be cleaned, the load on the surface to be cleaned may rapidly increase when there is large friction between the wet mop brush 100 and the surface to be cleaned. The wet mop brush 100 may monitor whether the load on the surface to be cleaned exceeds the maximum threshold via the load sensing circuit.

In operation S2303, according to an embodiment, when the load on the surface to be cleaned is less than or equal to the maximum threshold (No in operation S2302), the wet mop brush 100 may determine whether the load on the surface to be cleaned is less than a minimum threshold.

In operation S2304, according to an embodiment, the wet mop brush 100 may maintain a current state of the motor 180 when the load on the surface to be cleaned is less than or equal to the maximum threshold but greater than the minimum threshold. For example, the wet mop brush 100 may maintain a current state duty value of the second PWM control switch element 102 connected to the motor 180 when the load on the surface to be cleaned is within a threshold range (e.g., a normal floor condition).

In an embodiment, the wet mop brush 100 may continuously monitor the condition of the surface to be cleaned while driving the motor 180.

In operation S2305, according to an embodiment, the wet mop brush 100 may increase the amount of power supplied to the motor 180 when the load on the surface to be cleaned is less than the minimum threshold (Yes in operation S2303). For example, the wet mop brush 100 may increase the duty value of the second PWM switch element 102 connected to the motor 180.

In other words, in an embodiment, when a load on the floor is too low (when the floor is made of a slippery material), which means an extremely low friction force acts between the mop pad 123 and the floor, the wet mop brush 100 may increase a strength of the motor 180 to increase cleaning efficiency of the floor.

In operation S2306, according to an embodiment, when the load on the surface to be cleaned exceeds the maximum threshold (Yes in operation S2302), the wet mop brush 100 may decrease the amount of power supplied to the motor 180. For example, the wet mop brush 100 may decrease the duty value of the second PWM switch element 102 connected to the motor 180.

In an embodiment, when the load on the floor is too high, which means an extremely large friction force acts between the mop pad 123 and the floor, the wet mop brush 100 may lower an RPM of the motor 180 to increase convenience of use.

In operation S2307, according to an embodiment, the wet mop brush 100 may determine whether the contamination level of the surface to be cleaned exceeds a reference contamination level.

In an embodiment, the wet mop brush 100 may use the contamination detection sensor to determine whether the contamination level of the surface to be cleaned exceeds the reference contamination level. The reference contamination level may be a contamination level used as a reference for controlling the amount of power supplied to the motor 180.

For example, in an embodiment, when there is sticky liquid on the floor, the wet mop brush 100 may determine that the contamination level of the surface to be cleaned exceeds the reference contamination level.

In operation S2308, according to an embodiment, the wet mop brush 100 may maintain the current state of the motor 180 when the contamination level of the surface to be cleaned is less than or equal to the reference contamination level (No in operation S2307). For example, when the floor is in a normal contamination condition, the wet mop brush 100 may maintain the current state duty value of the second PWM control switch element 102 connected to the motor 180. In addition, the wet mop brush 100 may continuously monitor the contamination level of the surface to be cleaned while driving the motor 180.

In operation S2309, according to an embodiment, when the contamination level of the surface to be cleaned exceeds the reference contamination level (Yes in operation S2307), the wet mop brush 100 may increase the amount of power supplied to the motor 180.

For example, in an embodiment, when there is sticky liquid on the floor, the wet mop brush 100 may increase the strength (or RPM) of the motor 180 by increasing the duty value of the second PWM switch element 102 connected to the motor 180.

In operation S2310, according to an embodiment, the wet mop brush 100 may determine whether rapid heating of water stored in the heating tank 201 is required.

For example, in an embodiment, the wet mop brush 100 may determine that rapid heating of water stored in the heating tank 201 is necessary when the temperature of the water stored in the heating tank 201 is far below a minimum threshold temperature or when the user makes a request for the rapid heating.

In operation S2308, according to an embodiment, the wet mop brush 100 may maintain the current state of the motor 180 when determining that the rapid heating of the water stored in the heating tank 201 is not required (No in operation S2310). For example, when the rapid heating is not required, the wet mop brush 100 may maintain the current state duty value of the second PWM control switch element 102 connected to the motor 180.

In operation S2311, according to an embodiment, when determining that the rapid heating of the water stored in the heating tank 201 is required (Yes in operation S2310), the wet mop brush 100 may decrease the amount of power supplied to the motor 180 and increase the amount of power to the heater 250. For example, the wet mop brush 100 may decrease the duty value of the second PWM control switch element 102 connected to the motor 180 and increase the duty value of the third PWM control switch element 103 connected to the heater 250.

According to an embodiment, because the wet mop brush 100 receives power from the battery 1500 of the cleaner main body 1000, there is a limit to its power usage. Therefore, when increasing the amount of power supplied to the heater 250 for rapid heating by taking into account the first threshold current (e.g., about 5 A), the wet mop brush 100 may adjust the amount of power supplied to the motor 180 to be relatively low.

FIG. 24 is a flowchart of an operation method of the wet mop brush 100 in a manual spraying mode, according to an embodiment.

In operation S2410, according to an embodiment, the wet mop brush 100 may receive a water spray command from the cleaner main body 1000.

For example, in an embodiment, when the user selects a water spray button on the cleaner main body 1000, the cleaner main body 1000 may transmit a water spray command to the wet mop brush 100 via signal line communication.

In operation S2420, according to an embodiment, the wet mop brush 100 may determine whether it is preheating water. In other words, the wet mop brush 100 may determine whether the heater 250 is operating for preheating.

According to an embodiment, when preheating is completed or when a hot water function is deactivated, the wet mop brush 100 may determine that it is not in the process of preheating water. On the other hand, when the heater 250 is operating, the wet mop brush 100 may determine that the wet mop brush 100 itself is in the process of preheating the water.

In operation S2430, according to an embodiment, when the wet mop brush 100 is not in the process of preheating the water (No in operation S2420), the wet mop brush 100 may immediately drive the pump 160 to spray water.

For example, in an embodiment, when the heater 250 is not operating because the preheating is completed or the hot water function is deactivated, the wet mop brush 100 may immediately drive the pump 160 without considering operation of the heater 250. According to an embodiment, when the wet mop brush 100 drives the pump 160, water in the water tank 150 may then be supplied to the heating tank 201, and the water in the heating tank 201 may be sprayed frontward from the wet mop brush 100 via the sprayer 140. According to an embodiment, when the preheating is completed, high-temperature water may be sprayed through the sprayer 140, and when the hot water function is deactivated, room temperature water may be sprayed through the sprayer 140.

In operation S2440, according to an embodiment, when the wet mop brush 100 has received the water spray command but is in the process of preheating the water in the heating tank 201(Yes in operation S2420), the wet mop brush 100 may stop driving the heater 250 before driving the pump 160.

For example, in an embodiment, the wet mop brush 100 may cut off power supply to the heater 250 by turning off the third PWM control switch element 103 connected to the heater 250.

In operation S2450, according to an embodiment, when stopping driving the heater 250, the wet mop brush 100 may drive the pump 160 to spray water. For example, the wet mop brush 100 may supply power to the pump 160 by turning on the first PWM control switch element 101 connected to the pump 160 and controlling a duty value of the first PWM control switch element 101.

According to an embodiment, when the wet mop brush 100 drives the pump 160, the water in the water tank 150 may then be supplied to the heating tank 201, and the water in the heating tank 201 may be sprayed frontward from the wet mop brush 100 via the sprayer 140. According to an embodiment, because the preheating is not completed, a temperature of the water sprayed via the sprayer 140 may not reach a target temperature (e.g., about 55 °C).

In operation S2460, according to an embodiment, when the water spraying is completed, the wet mop brush 100 may perform a preheating operation by driving the heater 250 again.

According to an embodiment, as the pump 160 operates, room temperature water in the water tank 150 is newly supplied to the heating tank 201, so the temperature of the water in the heating tank 201 may become lower than before the pump 160 operates. Accordingly, the wet mop brush 100 may drive the heater 250 again to preheat the water in the heating tank 201 so that the temperature of the water is maintained within a threshold range (e.g., about 52 °C to about 58 °C).

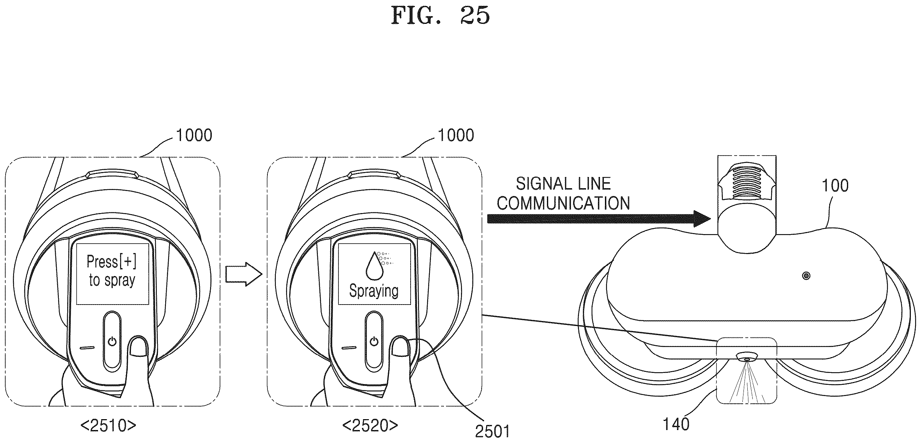

FIG. 25 is a graphic diagram illustrating an operation in which the wet mop brush 100 drives the pump 106 in a manual spraying mode, according to an embodiment.

In an embodiment and referring to FIG. 25, when detecting that the wet mop brush 100 is connected to the cleaner main body 1000, the cleaner main body 1000 may identify whether a current operation mode is a manual spraying mode or an automatic spraying mode. The manual spraying mode may be a mode in which water is sprayed from the wet mop brush 100 according to a user input, and the automatic spraying mode may be a mode in which water is automatically sprayed from the wet mop brush 100 at a predetermined interval.

In an embodiment and referring to 2510 of FIG. 25, when the current operation mode is the manual spraying mode, the cleaner main body 1000 may output information (e.g., Press [+] to spray) indicating that water spray is possible by pressing a (+) button.

In an embodiment and referring to 2520 of FIG. 25, in response to receiving a user input for pressing the (+) button, the cleaner main body 1000 may transmit a water spray command to the wet mop brush 100 via signal line communication. In response to receiving the water spraying command, the wet mop brush 100 may drive the pump 160 by turning on the first PWM control switch element 101 connected to the pump 160 and controlling a duty value of the first PWM control switch element 101. When the pump 160 is driven, water may be sprayed via the sprayer 140. According to an embodiment, when preheating of water stored in the heating tank 201 is completed, hot water may be sprayed via the sprayer 140. Therefore, according to an embodiment, when water is needed during wet mop cleaning, the user may spray water by pressing the (+) button.

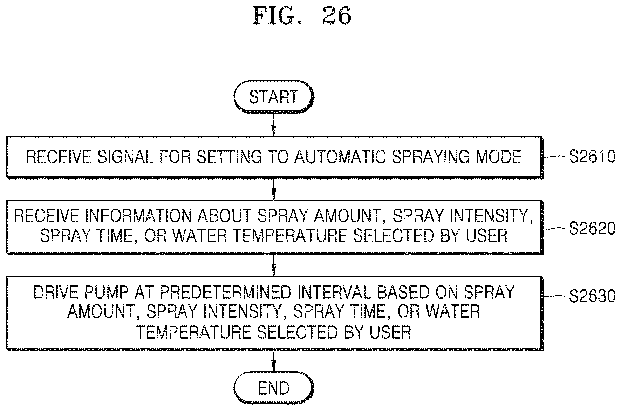

Moreover, according to an embodiment, the vacuum cleaner 10 may provide an automatic spraying mode. An automatic spraying mode is described in detail with reference to FIG. 26.

FIG. 26 is a flowchart of an operation method of the wet mop brush 100 in an automatic spraying mode, according to an embodiment.

In operation S2610, according to an embodiment, the wet mop brush 100 may receive, from the cleaner main body 1000, a signal for setting a current operation mode to an automatic spraying mode.

According to an embodiment, when the user selects the automatic spraying mode via the user interface 1700 of the cleaner main body 1000, the cleaner main body 1000 may transmit a signal for switching to the automatic spraying mode to the wet mop brush 100 via signal line communication.

According to an embodiment, when receiving, from the cleaner main body 1000, the signal for setting the current operation mode to the automatic spraying mode, the wet mop brush 100 may spray water (hot water) via the sprayer 140 at a predetermined interval. For example, the wet mop brush 100 may drive the pump 160 at intervals of about 30 seconds to spray about 3 cubic centimeters (cc) of water for about 0.5 seconds, but is not limited thereto. When the wet mop brush 100 operates in the automatic spraying mode, the mop 123 provided at the bottom of the brush body 120 may be maintained in a wet state.

In operation S2620, according to an embodiment, the wet mop brush 100 may receive, from the cleaner main body 1000, information about a spray intensity, a spray amount, a spray time, or a water temperature selected by the user.

According to an embodiment, when the automatic spraying mode is set in the vacuum cleaner 10, the user may adjust the spray intensity, spray amount, spray time, or water temperature. According to an embodiment, the user may adjust the spray intensity, spray amount, spray time, or water temperature via the user interface 1700 of the cleaner main body 1000, or may adjust the spray intensity, spray amount, spray time, or water temperature via a specific application (e.g., a home appliance management application) installed on a user terminal (e.g., a smartphone).

Therefore, according to an embodiment, the cleaner main body 1000 may receive a user input for selecting the spray intensity, spray amount, spray time, or water temperature via the user interface 1700, or receive a user input for selecting the spray intensity, spray amount, spray time, or water temperature via a server device connected to the user terminal.

According to an embodiment, when receiving the user input for selecting the spray intensity, spray amount, spray time, or water temperature, the cleaner main body 1000 may transmit, to the wet mop brush 100, information about the spray intensity, spray amount, spray time, or water temperature selected by the user via signal line communication.

In operation S2630, according to an embodiment, the wet mop brush 100 may drive the pump 160 at a predetermined interval, based on the spray intensity, spray amount, spray time, or water temperature selected by the user. For example, the wet mop brush 100 may adjust the amount or duration of power supplied to the pump 160, based on the spray intensity, spray amount, or spray time selected by the user. The wet mop brush 100 may adjust the amount or duration of power supplied to the heater 250 based on the water temperature selected by the user. Therefore, according to an embodiment, hot water corresponding to the water temperature selected by the user may be discharged via the sprayer 140 at predetermined intervals according to the spray intensity, spray amount, or spray time selected by the user.

In an embodiment, the wet mop brush 100 may increase the amount of power supplied to the pump 160 by increasing the duty value of the first PWM control switch element 101 as the spray intensity selected by the user increases. On the other hand, the wet mop brush 100 may lower the amount of power supplied to the pump 160 by reducing the duty value of the first PWM control switch element 101 as the spray intensity selected by the user decreases.

In an embodiment, the wet mop brush 100 may increase an operating time of the first PWM control switch element 101 as the spray amount selected by the user increases, thereby allowing the pump 160 to operate for a longer time. For example, when the spray amount changes from about 3 cc to about 5 cc, the wet mop brush 100 may lengthen the operating time of the pump 160 by increasing an on-time for the first PWM control switch element 101 connected to the pump 160. On the other hand, the wet mop brush 100 may reduce the operating time of the first PWM control switch element 101 as the spray amount selected by the user decreases, causing the pump 160 to operate for a shorter time.

In an embodiment, the wet mop brush 100 may increase the operating time (on-time) of the first PWM control switch element 101 as the spray time selected by the user increases. For example, when the spray time is changed from about 0.5 seconds to about 1 second, the wet mop brush 100 may double the operating time (on- time) of the first PWM control switch element 101.

In an embodiment, the wet mop brush 100 may increase an operating time (on-time) or duty value of the third PWM control switch element 103 as the water temperature selected by the user increases. For example, when the water temperature changes from about 55 °C to about 65 °C, the wet mop brush 100 may double the operating time (on-time) or duty value of the third PWM control switch element 103.

In an embodiment, although not shown in FIG. 26, the user may also adjust a water spray interval. For example, the user may change the water spray interval from about 30 seconds to about 1 minute. In this case, the cleaner main body 1000 may transmit information about the water spray interval selected by the user to the wet mop brush 100 via signal line communication, and the wet mop brush 100 may drive the pump 160 according to the water spray interval selected by the user.

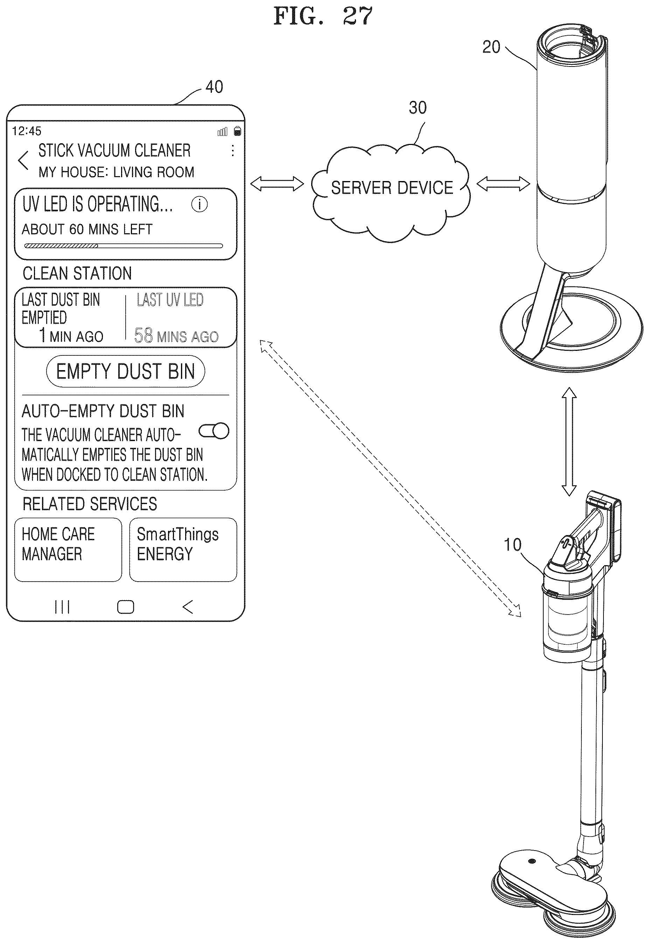

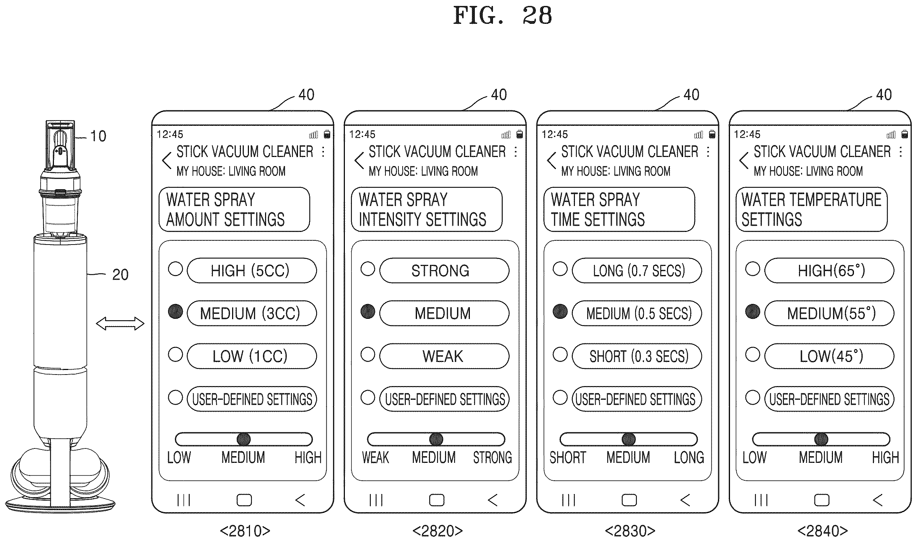

In an embodiment, an operation in which the user adjusts the spray intensity, spray amount, spray time, or water temperature via a user terminal is described in detail with reference to FIGS. 27 and 28.

FIG. 27 is a graphic diagram illustrating an operation of the vacuum cleaner 10 in conjunction with a server device 30, according to an embodiment.

Referring to FIG. 27, a cleaning system, according to an embodiment, may include a vacuum cleaner 10, a station device 20, a server device 30, and a user terminal 40.

In an embodiment, the station device 20 may be a device for ejecting dust, charging the battery, and storing the vacuum cleaner 10. The station device 20 may also be referred to as a clean station or a charging station. According to an embodiment, the station device 20 may communicate with the vacuum cleaner 10 or the server device 30 over a network. For example, the station device 20 may transmit and receive data to and from the vacuum cleaner 10 over a short-range wireless network (a wireless personal area network (WPAN)) without connecting to an access point (AP). The station device 20 may also transmit and receive data to and from the server device 30 via an AP that connects a LAN to which the station device 20 is connected to a WAN to which the server device 30 is connected. For example, the station device 20 may be connected to the vacuum cleaner 10 via BLE communication, and may be connected to the server device 30 via Wi-Fi™ communication (based on Institute of Electrical and Electronics (IEEE) 802.11 standard), but is not limited thereto.

According to an embodiment, the station device 20 may include a communication interface, at least one processor, a suction motor (hereinafter referred to as a second suction motor), and a collector, but is not limited thereto. The second suction motor may be a device that generates suction power for ejecting foreign substances collected in the dust bin 1200 of the vacuum cleaner 10 from the vacuum cleaner 10. For example, the second suction motor may create a pressure difference inside the dust bin 1200. The second suction motor may be located lower than the collector when the station device 20 is in an upright position.

According to an embodiment, the server device 30 may be a device for managing the station device 20 and the vacuum cleaner 10. For example, the server device 30 may be a home appliance management server. The server device 30 may manage user account information and information about home appliances connected to a user account. For example, the user may access the server device 30 via the user terminal 40 and create a user account. The user account may be identified by an identifier (ID) and a password set by the user. The server device 30 may register the station device 20 and the vacuum cleaner 10 on the user account. For example, the server device 30 may register the station device 20 and the vacuum cleaner 10 by linking identification information (e.g., a serial number or media access control (MAC) address) of the station device 20 and identification information of the vacuum cleaner 10 to the user account. When the station device 20 and the vacuum cleaner 10 are registered with the server device 30, the server device 30 may manage a status of the station device 20 or a status of the vacuum cleaner 10 by periodically receiving information about the status of the station device 20 or information about the status of the vacuum cleaner 10 from the station device 20.

In an embodiment, the user terminal 40 may be a device registered with the server device 30 under the same account as the station device 20 or the vacuum cleaner 10. The user terminal 40 may be a smartphone, a laptop computer, a tablet PC, a digital camera, an e-book terminal, a digital broadcasting terminal, a personal digital assistant (PDA), a portable multimedia player (PMP), a wearable device, a device including a display, etc., but is not limited thereto. Hereinafter, for convenience of description, an example in which the user terminal 40 is a smartphone is described.

According to an embodiment, the user terminal 40 may communicate with at least one of the server device 30, the station device 20, or the vacuum cleaner 10. The user terminal 40 may communicate directly with the station device 20 or the vacuum cleaner 10 via short-range wireless communication, or communicate indirectly with the station device 20 or the vacuum cleaner 10 via the server device 30.

According to an embodiment, the user terminal 40 may execute a specific application (e.g., a home appliance management application) provided by the server device 30 based on a user input. In this case, the user may check the status of the vacuum cleaner 10 or the status of the station device 20 via an execution window of the application. For example, in an embodiment, the user terminal 40 may provide, via the execution window of the application, information related to operation of an ultraviolet (UV) irradiator (e.g., a UV LED is operating) and information related to dust ejection by the station device 20 (e.g., last dust bin emptied - 1 min ago), but is not limited thereto.

Furthermore, in an embodiment, the user terminal 40 may provide icons associated with dust ejection (e.g., empty dust bin), a GUI for setting an ejection mode (e.g., buttons for manual ejection mode, automatic ejection mode, smart ejection mode), a GUI for setting a threshold suction power reduction amount for the smart ejection mode, a GUI for setting an ejection intensity or ejection duration, a GUI for setting ejection timing conditions, etc. In addition, the user terminal 40 may provide a GUI for setting a water spray amount, a water spray intensity, a water spray time, and a water temperature for the wet mop brush 100. A GUI associated with the wet mop brush 100 are described in more detail with reference to FIG. 28.

FIG. 28 is a graphic diagram illustrating a GUI related to setting a spray amount, spray intensity, spray time, or water temperature, according to an embodiment.

In an embodiment and referring to FIG. 28, the user may adjust a spray amount, a spray intensity, a spray time, or a water temperature for the wet mop brush 100 via the user terminal 40.

For example, in an embodiment, the user terminal 40 may display a first screen 2810 in an execution window of a certain application (e.g., a home appliance management application). The first screen 2810 may include icons for setting a water spray amount. For example, the first screen 2810 may include a first icon for setting the water spray amount to high, a second icon for setting the water spray amount to medium, a third icon for setting the water spray amount to low, and a fourth icon for finely adjusting the water spray amount.

In an embodiment, when the user selects one of the first icon, the second icon, and the third icon, the user terminal 40 may transmit information about the water spray amount corresponding to the selected icon to the station device 20. At this time, the user terminal 40 may transmit the information about the water spray amount corresponding to the selected icon to the station device 20 via the server device 30. For example, when the user terminal 40 receives a user input for selecting the second icon (medium), the user terminal 40 may transmit, to the server device 30, information indicating that a user input for setting the water spray amount to medium (3 cc) has been received. The server device 30 may then transmit, to the station device 20, information indicating setting the water spray amount to medium (about 3 cc). In this case, the station device 20 may transmit, to the vacuum cleaner 10, the information indicating setting the water spray amount to medium (about 3 cc) via short-range wireless communication (e.g., BLE communication). Furthermore, the user terminal 40 may transmit information indicating setting the water spray amount to medium (about 3 cc) to the station device 20 via short-range wireless communication without going through the server device 30. In addition, the user terminal 40 may transmit the information indicating setting the water spray amount to medium (about 3 cc) to the vacuum cleaner 10 without going through the server device 30 and the station device 20.

In an embodiment, when receiving the information indicating setting the water spray amount to medium (about 3 cc), the cleaner main body 1000 may transmit a command for setting the water spray amount to medium (about 3 cc) to the wet mop brush 100 via signal line communication. The wet mop brush 100 may control operation of the pump 160 to spray about 3 cc of water at a time according to the command from the cleaner main body 1000. For example, the wet mop brush 100 may control a duty value of the first PWM control switch element 101 connected to the pump 160 to spray about 3 cc of water at a time via the sprayer 140.

In an embodiment, the user terminal 40 may display a second screen 2820 in the execution window of the certain application (e.g., the home appliance management application). The second screen 2820 may include icons for setting a water spray intensity. For example, the second screen 2820 may include a fifth icon for setting the water spray intensity to strong, a sixth icon for setting the water spray intensity to medium, a seventh icon for setting the water spray intensity to weak, and an eighth icon for finely adjusting the water spray intensity.

In an embodiment, when the user selects one of the fifth icon, the sixth icon, and the seventh icon, the user terminal 40 may transmit information about the water spray intensity corresponding to the selected icon to the station device 20. At this time, the user terminal 40 may transmit the information about the water spray intensity corresponding to the selected icon to the station device 20 via the server device 30. For example, when receiving a user input for selecting the sixth icon (medium), the user terminal 40 may transmit, to the server device 30, information indicating that a user input for setting the water spray intensity to medium has been received. The server device 30 may then transmit, to the station device 20, information indicating setting the water spray intensity to medium. In this case, the station device 20 may transmit, to the vacuum cleaner 10, the information indicating setting the water spray intensity to medium via short-range wireless communication (e.g., BLE communication). Furthermore, the user terminal 40 may transmit information indicating setting the water spray intensity to medium to the station device 20 via short-range wireless communication without going through the server device 30. In addition, the user terminal 40 may transmit the information indicating setting the water spray intensity to medium to the vacuum cleaner 10 without going through the server device 30 and the station device 20.

In an embodiment, when receiving the information indicating setting the water spray intensity to medium, the cleaner main body 1000 may transmit a command for setting the water spray intensity to medium to the wet mop brush 100 via signal line communication. The wet mop brush 100 may control operation of the pump 160 to spray water at a medium intensity according to the command from the cleaner main body 1000. For example, the wet mop brush 100 may control the duty value of the first PWM control switch element 101 connected to the pump 160 to spray water at the medium intensity.

In an embodiment, the user terminal 40 may display a third screen 2830 in the execution window of the certain application. The third screen 2830 may include icons for setting a water spray time. For example, the third screen 2830 may include a ninth icon for setting the water spray time to long (about 0.7 seconds), a tenth icon for setting the water spray time to medium (about 0.5 seconds), an eleventh icon for setting the water spray time to short (about 0.3 seconds), and a twelfth icon for finely adjusting the water spray time.

In an embodiment, when the user selects one of the ninth icon, the tenth icon, and the eleventh icon, the user terminal 40 may transmit information about the water spray time corresponding to the selected icon to the station device 20. At this time, the user terminal 40 may transmit the information about the water spray time corresponding to the selected icon to the station device 20 via the server device 30. For example, when receiving a user input for selecting the tenth icon (medium), the user terminal 40 may transmit, to the server device 30, information indicating that a user input for setting the water spray time to medium (about 0.5 seconds) has been received. The server device 30 may then transmit, to the station device 20, information indicating setting the water spray time to medium (about 0.5 seconds). In this case, the station device 20 may transmit, to the vacuum cleaner 10, the information indicating setting the water spray time to medium (about 0.5 seconds) via short-range wireless communication (e.g., BLE communication). Furthermore, the user terminal 40 may transmit information indicating setting the water spray time to medium (about 0.5 seconds) to the station device 20 via short-range wireless communication without going through the server device 30. In addition, the user terminal 40 may transmit the information indicating setting the water spray time to medium (about 0.5 seconds) to the vacuum cleaner 10 without going through the server device 30 and the station device 20.

In an embodiment, when receiving the information indicating setting the water spray time to medium (about 0.5 seconds), the cleaner main body 1000 may transmit a command for setting the water spray time to medium (about 0.5 seconds) to the wet mop brush 100 via signal line communication. The wet mop brush 100 may control operation of the pump 160 to spray water for about 0.5 seconds according to the command from the cleaner main body 1000. For example, the wet mop brush 100 may cause the pump 160 to operate for about 0.5 seconds by turning on the first PWM control switch element 101 connected to the pump 160 for about 0.5 seconds.

In an embodiment, the user terminal 40 may display a fourth screen 2840 in the execution window of the certain application. The fourth screen 2840 may include icons for setting a water temperature. For example, the fourth screen 2840 may include a thirteenth icon for setting the water temperature to high (about 65 °C), a fourteenth icon for setting the water temperature to medium (about 55 °C), a fifteenth icon for setting the water temperature to low (about 45 °C), and a sixteenth icon for finely adjusting the water temperature.

In an embodiment, when the user selects one of the thirteenth icon, the fourteenth icon, and the fifteenth icon, the user terminal 40 may transmit information about the water temperature corresponding to the selected icon to the station device 20. At this time, the user terminal 40 may transmit the information about the water temperature corresponding to the selected icon to the station device 20 via the server device 30. For example, when receiving a user input for selecting the fourteenth icon (medium), the user terminal 40 may transmit, to the server device 30, information indicating that a user input for setting the water temperature to medium (about 55 °C) has been received. The server device 30 may then transmit, to the station device 20, information indicating setting the water temperature to medium (about 55 °C). In this case, the station device 20 may transmit, to the vacuum cleaner 10, the information indicating setting the water temperature to medium (about 55 °C) via short-range wireless communication (e.g., BLE communication). Furthermore, the user terminal 40 may transmit information indicating setting the water temperature to medium (about 55 °C) to the station device 20 via short-range wireless communication without going through the server device 30. In addition, the user terminal 40 may transmit the information indicating setting the water temperature to medium (about 55 °C) to the vacuum cleaner 10 without going through the server device 30 and the station device 20.

In an embodiment, when receiving the information indicating setting the water temperature to medium (about 55 °C), the cleaner main body 1000 may transmit a command for setting the water temperature to medium (about 55 °C) to the wet mop brush 100 via signal line communication. In response to the command from the cleaner main body 1000, the wet mop brush 100 may control operation of the heater 250 so that the water temperature is maintained at a medium temperature (or in a temperature range of about 53 °C to about 57 °C). For example, the wet mop brush 100 may monitor a temperature of water in the heating tank 201 via the temperature sensor 271, drive the heater 250 when the temperature of the water is below about 53 °C, and stop driving the heater 250 when the temperature of the water is above about 57 °C.

According to an embodiment, the vacuum cleaner 10 may be provided that has a hot water spray function and includes the wet mop brush 100 configured to perform PWM control for each of the loads (e.g., the motor 180, the heater 250, and the pump 160). In particular, according to an embodiment, the wet mop brush 100 may be provided that efficiently distributes, based on a current threshold available in the wet mop brush 100, power supplied from the battery 1500 of the cleaner main body 1000 to the motor 180, the heater 250, and the pump 160.

According to an embodiment, the vacuum cleaner 10 may include the cleaner main body 1000 including the battery 1500, and the wet mop brush 100 detachably connected to the cleaner main body 1000 and driven by power supplied from the battery 1500. According to an embodiment, the wet mop brush 100 may include the at least one mop pad 123 provided on a bottom of the brush body 120 to contact a surface to be cleaned. The wet mop brush 100 may include the motor 180 configured to rotate the at least one mop pad 123. The wet mop brush 100 may include the heater 250 configured to heat water supplied from the water tank 150 to the heating tank 201. The wet mop brush 100 may include the sprayer 140 configured to spray the water heated by the heater 250 toward the surface to be cleaned. The wet mop brush 100 may include the pump 160 configured to provide pressure for moving water from the water tank 150 to the sprayer 140. The wet mop brush 100 may include the at least one processor 306 configured to adjust, based on a first current threshold available in the wet mop brush 100, the amount of power supplied to at least one of the motor 180, the heater 250, or the pump 160. According to an embodiment, the wet mop brush 100 may efficiently use the power from the battery 1500 by adjusting, based on the first current threshold, the amount of power supplied to the at least one of the motor 180, the heater 250, or the pump 160.

According to an embodiment, the at least one processor 306 may adjust the amount of power supplied to the at least one of the motor 180, the heater 250, or the pump 160 by controlling a duty value of at least one of the first PWM control switch element 101 used for PWM control of the pump 160, the second PWM control switch element 102 used for PWM control of the motor 180, or the third PWM control switch element 103 used for PWM control of the heater 250.

According to an embodiment, the at least one processor 306 may decrease the amount of power supplied to the heater 250 when a total operating current of the loads included in the wet mop brush 100 exceeds the first current threshold. Because the operation of the motor 180 and the pump 160 is essential for the wet mop brush 100, but operation of the heater 250 is optional, the at least one processor 306 may first decrease the amount of power suppled to the heater 250 when the wet mop brush 100 is in an overcurrent state.

According to an embodiment, the total operating current of the loads may include the sum of an operating current of the motor 180 and an operating current of the heater 250, or the sum of the operating current of the motor 180, the operating current of the heater 250, and an operating current of the pump 160.

According to an embodiment, the at least one processor 306 may stop driving the wet mop brush 100 when the total operating current of the loads included in the wet mop brush 100 exceeds a second current threshold that is greater than the first current threshold.

According to an embodiment, the at least one processor 306 may monitor a temperature of water stored in the heating tank 201 via the temperature sensor 271. According to an embodiment, the at least one processor 306 may control driving of the heater 250 so that the temperature of the water stored in the heating tank 201 is maintained within a threshold temperature range. According to an embodiment, the wet mop brush 100 may preheat the water in the heating tank 201 by using the heater 250 to spray high-temperature water.

According to an embodiment, in response to receiving information indicating that lukewarm water has been selected from the cleaner main body 1000, the at least one processor 306 may control the driving of the heater 250 so that the temperature of the water stored in the heating tank 201 is maintained within a first threshold temperature range corresponding to the lukewarm water. According to an embodiment, in response to receiving information indicating that high-temperature water has been selected from the cleaner main body 1000, the wet mop brush 100 may control the driving of the heater 250 so that the temperature of the water stored in the heating tank 201 is maintained within a second threshold temperature range corresponding to the high-temperature water. According to an embodiment, the user may adjust a preheating temperature of the heater 250.

According to an embodiment, when detecting, via the water sensor 272, that there is no water in the heating tank 201, the at least one processor 306 may stop driving the heater 250. According to an embodiment, overheating of the heater 250, which may occur when the heater 250 is driven in a state where there is no water in the heating tank 201, may be prevented.

According to an embodiment, the at least one processor 306 may stop driving the heater 250 in response to receiving, via a signal line, a command for turning off the hot water function from the cleaner main body 1000. According to an embodiment, the user may increase the usage time of the battery 1500 by turning off the hot water function.

According to an embodiment, when the operating current of the heater 250 is detected via the current sensing circuit 113 connected to the heater 250 while the driving of the heater 250 is stopped, the at least one processor 306 may transmit information indicating that an abnormal situation has occurred in the heater 250 to the cleaner main body 1000, via a signal line that is different from a power line. According to an embodiment, the wet mop brush 100 includes the brush communication interface 309 to immediately transmit a status of the wet mop brush 100 to the cleaner main body 1000.

According to an embodiment, in response to receiving the information indicating that the abnormal situation has occurred in the heater 250, the cleaner main body 1000 may cut off power supply to the wet mop brush 100. According to an embodiment, the cleaner main body 1000 may prevent burn-out damage to each load by cutting off the power supply to the wet mop brush 100 in response to an abnormal situation in the wet mop brush 100.

According to an embodiment, the at least one processor 306 may measure a battery voltage supplied from the battery 1500 to the wet mop brush 100. According to an embodiment, the at least one processor 306 may control driving time of the heater 250 based on the battery voltage. According to an embodiment, the wet mop brush 100 may efficiently use the battery voltage by controlling the driving time of the heater 250 based on the battery voltage.

According to an embodiment, the wet mop brush 100 may include an output interface for indicating at least one of a state in which there is no water in the heating tank 201, a state in which the hot water function is turned off, a state in which the water in the heating tank 201 is being preheated, or a state in which preheating of the water in the heating tank 201 is completed.

According to an embodiment, the at least one processor 306 may measure the operating current of the motor 180 via the current sensing circuit 112 connected to the motor 180. According to an embodiment, when the operating current of the motor 180 exceeds a reference current set for the motor 180, the at least one processor 306 may decrease the amount of power supplied to the motor 180.

According to an embodiment, the operating current of the motor 180 may vary depending on the amount of moisture in the at least one mop pad 123 or a condition of the surface to be cleaned.

According to an embodiment, the at least one processor 306 may stop driving the motor 180 when the operating current of the motor 180 exceeds the first current threshold for a certain period of time or longer.

According to an embodiment, the at least one processor 306 may receive a water spray command from the cleaner main body 1000 via the signal line different from the power line. According to an embodiment, in response to the water spray command, the at least one processor 306 may drive the pump 160 by controlling the first PWM control switch element 101 connected to the pump 160 so that the water heated by the heater 250 is discharged via the sprayer 140.

According to an embodiment, the at least one processor 306 may drive the pump 160 at a predetermined interval in response to receiving, from the cleaner main body 1000, a signal indicating that an automatic spraying mode is set.

According to an embodiment, the at least one processor 306 may receive, from the cleaner main body 1000, information about a spray intensity set by the user. According to an embodiment, the at least one processor 306 may adjust, based on the spray intensity set by the user, a duty value of the first PWM control switch element 101 connected to the pump 160.

According to an embodiment, the at least one processor 306 may receive, from the cleaner main body 1000, information about a spray amount, a spray time, or a water temperature set by the user. According to an embodiment, the at least one processor 306 may adjust driving time of the pump 160 based on the spray amount or the spray time set by the user. According to an embodiment, the at least one processor 206 may adjust driving time of the heater 250 based on the water temperature set by the user.

In an embodiment, a machine-readable storage medium may be provided in the form of a non-transitory storage medium. In this regard, the term 'non-transitory' only means that the storage medium does not include a signal (e.g., an electromagnetic wave) and is a tangible device, and the term does not differentiate between where data is semipermanently stored in the storage medium and where the data is temporarily stored in the storage medium. For example, the 'non-transitory storage medium' may include a buffer in which data is temporarily stored.

Methods according to various embodiments may be included in a computer program product when provided. The computer program product may be traded, as a product, between a seller and a buyer. The computer program product may be distributed in the form of a machine-readable storage medium (e.g., compact disc-ROM (CD-ROM) or distributed (e.g., downloaded or uploaded) on-line via an application store or directly between two user devices (e.g., smartphones). For online distribution, at least a part of the computer program product (e.g., a downloadable app) may be at least transiently stored or temporally generated in the machine-readable storage medium such as memory of a server of a manufacturer, a server of an application store, or a relay server.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the invention. Moreover, the embodiments or parts of the embodiments may be combined in whole or in part without departing from the scope of the invention.

**Claims**

1. A vacuum cleaner (10) comprising:

   a cleaner main body (1000) including a battery (150); and
   a wet mop brush (100) detachably connected to the cleaner main body (1000) and driven by power supplied from the battery (1500),
   wherein the wet mop brush (100) comprises:

   at least one mop pad (123) provided on a bottom of a brush body (120) to contact a surface to be cleaned;

a motor (180) configured to rotate the at least one mop pad (123);
a heater (250) configured to heat water supplied from a water tank (150) to a heating tank (201);
a sprayer (140) configured to spray the water heated by the heater (250) toward the surface to be cleaned;
a pump (160) configured to provide pressure for moving the water from the water tank (150) to the sprayer (140); and
at least one processor (306) configured to adjust, based on a first current threshold , an amount of power supplied to at least one of the motor (180), the heater (250), or the pump (160).

2. The vacuum cleaner of claim 1, wherein the at least one processor adjusts the amount of power by controlling a duty value of at least one of a first pulse width modulation (PWM) control switch element (101) used for PWM control of the pump, a second PWM control switch element (102) used for PWM control of the motor, or the third PWM control switch element (103) used for PWM control of the heater.

3. The vacuum cleaner of claim 1 or 2, wherein the at least one processor decreases the amount of power supplied to the heater when a total operating current of loads included in the wet mop brush exceeds the first current threshold, wherein the total operating current of the loads includes one of,

   a sum of an operating current of the motor and an operating current of the heater, or
   a sum of the operating current of the motor, the operating current of the heater, and an operating current of the pump.

4. The vacuum cleaner of any one of claims 1 to 3, wherein the at least one processor is stops driving the wet mop brush when the total operating current of the loads exceeds a second current threshold that is greater than the first current threshold.

5. The vacuum cleaner of any one of claims 1 to 4, wherein the at least one processor

   monitors a temperature of water stored in the heating tank via a temperature sensor (271),
   controls driving of the heater so that the temperature of the water stored in the heating tank is maintained within a threshold temperature range,
   in response to receiving, from the cleaner main body, information indicating that lukewarm water has been selected, controls the driving of the heater so that the temperature of the water stored in the heating tank is maintained within a first threshold temperature range corresponding to the lukewarm water, and
   in response to receiving, from the cleaner main body, information indicating that high-temperature water has been selected, controls the driving of the heater so that the temperature of the water stored in the heating tank is maintained within a second threshold temperature range corresponding to the high-temperature water.

6. The vacuum cleaner of any one of claims 1 to 5, wherein the at least one processor stops driving the heater when detecting, via a water sensor (272), that there is no water in the heating tank.

7. The vacuum cleaner of any one of claims 1 to 6, wherein the at least one processor stops driving the heater, in response to receiving, via a signal line, a command for turning off a hot water function from the cleaner main body.

8. The vacuum cleaner of any one of claims 1 to 7, wherein the at least one processor, when the operating current of the heater is detected via a current sensing circuit connected to the heater while the driving of the heater is stopped, transmits information indicating that an abnormal situation has occurred in the heater to the cleaner main body, via a signal line that is different from a power line, and
   wherein the cleaner main body, in response to receiving the information indicating that the abnormal situation has occurred in the heater, cuts off power supply to the wet mop brush.

9. The vacuum cleaner of any one of claims 1 to 8, wherein the at least one processor,

   measures a battery voltage supplied from the battery to the wet mop brush, and
   controls a driving time of the heater, based on the battery voltage.

10. The vacuum cleaner of any one of claims 1 to 9, further comprising an output interface indicating at least one of a state in which there is no water in the heating tank, a state in which the hot water function is turned off, a state in which the water in the heating tank is being preheated, or a state in which preheating of the water in the heating tank is completed.

11. The vacuum cleaner of any one of claims 1 to 10, wherein the at least one processor,

measures the operating current of the motor via a current sensing circuit (112) connected to the motor, and when the operating current of the motor exceeds a reference current set for the motor, decreases an amount of power supplied to the motor,
wherein the operating current of the motor varies depending on an amount of moisture in the at least one mop pad or a condition of the surface to be cleaned.

12. The vacuum cleaner of any one of claims 1 to 11, wherein the at least one processor stops driving the motor when the operating current of the motor exceeds the first current threshold for a certain period of time or longer.

13. The vacuum cleaner of any one of claims 1 to 12, wherein the at least one processor,

receives a water spray command from the cleaner main body, via the signal line different from the power line, and in response to the water spray command, drives the pump by controlling the first PWM control switch element (101) connected to the pump so that the water heated by the heater is discharged via the sprayer (140).

14. The vacuum cleaner of any one of claims 1 to 13, wherein the at least one processor drives the pump at a predetermined interval in response to receiving, from the cleaner main body, a signal indicating an automatic spraying mode is set.

15. The vacuum cleaner of any one of claims 1 to 14, wherein the at least one processor,

receives, from the cleaner main body, information about a spray intensity set by a user,
adjusts, based on the spray intensity set by the user, a duty value of the first PWM control switch element connected to the pump,
receives, from the cleaner main body, information about a spray amount, a spray time, or a water temperature set by the user,
adjusts a driving time of the pump, based on the spray amount or the spray time set by the user, and
adjusts a driving time of the heater, based on the water temperature set by the user.

# FIG. 1

HEAT JET WET BRUSH
51:05

10

1500

1000

SUPPLYING POWER

SIGNAL LINE COMMUNICATION

3000

100

2000

| MULTI-BRUSH | FLOOR BRUSH | WET MOP BRUSH | TURBO (CARPET) BRUSH | BEDDING BRUSH |

2000

DISTRIBUTING POWER

LOAD
PUMP — 160
MOTOR — 180
HEATER — 250

EP 4 678 083 A1

# FIG. 2

EP 4 678 083 A1

## FIG. 3

EP 4 678 083 A1

1000

2000

1100

1131

1500

1800

| BATTERY | UART | MAIN PROCESSOR | UART | FIRST PROCESSOR | SIGNAL LINE COMMUNICATION | SECOND PROCESSOR |

2410

BATTERY VOLTAGE
STATE (NORMAL, ABNORMAL,
FULLY-CHARGE, FULLY-
DISCHARGED, ETC.)

SVM ALGORITHM
ON/OFF BUTTON
+/- SETTING BUTTON
DISPLAY CONTROL
BLE COMMUNICATION

I2C

1400

PRESSURE
SENSOR

FLOW PATH
PRESSURE
(NEGATIVE
PRESSURE)

BRUSH LOAD CURRENT
SUCTION FORCE STRENGTH
BLDC OPERATION RPM
BRUSH TYPE (KIND)
STATE (NORMAL, ABNORMAL, ETC.)
MOISTURE INTRODUCTION DETECTION

BRUSH DRUM RPM
TRIP(OVERLOAD)
 LEVEL ETC.
PWM CONTROL
 FOR EACH LOAD

## FIG. 4

EP 4 678 083 A1

BATTERY (1500)

+30~19V

CLEANER MAIN BODY (1000)

+25.2V

GND

1131

FET

FIRST PROCESSOR

α

Signal

LOAD DETECTION SENSOR (1134)

B

100k

C

EXTENSION PIPE (3000)

+25.2V

GND

Signal

DETECTION OF BRUSH TYPE

BRUSH DEVICE (2000)

+25.2V

MOTOR

GND

2100

A IDENTIFICATION RESISTOR (2500)

Signal

AD PORT INPUT VOLTAGE OF FIRST PROCESSOR =

$$\text{BATTERY SUPPLY VOLTAGE(25.2V)} * \frac{C}{A+B+C}$$

# FIG. 5A

CLEANER MAIN BODY (1000)

BRUSH DEVICE (2000)

MOTOR ASSEMBLY — 1100

1500 BATTERY
- + POWER LINE
- − POWER LINE

POWER SUPPLY CIRCUIT — 1138

1130

FIRST PROCESSOR — 1131

OUTPUT PORT

INPUT PORT

1140

OUTPUT CIRCUIT — 1136

INPUT CIRCUIT — 1135

FIRST SWITCH ELEMENT — 1132

VOLTAGE DIVIDER — 1137

FIRST COMMUNICATION CIRCUIT

+ POWER LINE

− POWER LINE

SIGNAL LINE

2400

2440 POWER SUPPLY CIRCUIT

2110 MOTOR CONTROL CIRCUIT (INVERTER)

U
V
W

MOTOR — 2100

SECOND PROCESSOR — 2410

2500 ID RESISTOR

INPUT PORT

OUTPUT PORT

2425

2420 INPUT CIRCUIT

OUTPUT CIRCUIT — 2430

SECOND SWITCH ELEMENT — 2435

SECOND COMMUNICATION CIRCUIT

EP 4 678 083 A1

# FIG. 5B

CLEANER MAIN BODY (1000)

EXTENSION PIPE(3000)

BRUSH DEVICE (2000)

MOTOR ASSEMBLY —1100

BATTERY —1500

—1130

POWER SUPPLY CIRCUIT

+ POWER LINE

− POWER LINE

1138

FIRST PROCESSOR —1131

PWM CONTROL SWITCH ELEMENT

1133

OUTPUT PORT

INPUT PORT

1140

OUTPUT CIRCUIT —1136

FIRST SWITCH ELEMENT —1132

INPUT CIRCUIT —1135

VOLTAGE DIVIDER —1137

FIRST COMMUNICATION CIRCUIT

+ POWER LINE

− POWER LINE

SIGNAL LINE

POWER CIRCUIT —2440

MOTOR CONTROL CIRCUIT (INVERTER) —2110

MOTOR —2100

U V W

2500

ID RESISTOR

SECOND PROCESSOR —2410

OUTPUT PORT

INPUT PORT

2425

INPUT CIRCUIT —2420

OUTPUT CIRCUIT —2430

SECOND SWITCH ELEMENT —2435

SECOND COMMUNICATION CIRCUIT

EP 4 678 083 A1

# FIG. 6

$$\text{AD PORT INPUT VOLTAGE} = \text{BATTERY SUPPLY VOLTAGE (25.2V)} * \frac{C}{A+B+C}$$

BATTERY (1500)

MOTOR ASSEMBLY (1100)

EXTENSION PIPE (3000)

BRUSH DEVICE (2000)

+30~19V

+25.2V

+25.2V

+25.2V

POWER SUPPLY CIRCUIT (2440)

MOTOR CONTROL CIRCUIT (INVERTER) (2110)

MOTOR (2100)

U V W

2400

GND

GND

GND

1130

FIRST PROCESSOR (1131)

FET(1133)

Signal

Signal

signal

Base

Emitter

A 2500

5V

2425

Output Port

AD Port

α

100k

B

C

1137

SECOND PROCESSOR (2410)

Input Port

Output Port

1132

2435

EP 4 678 083 A1

FIG. 7

FIG. 8

FIG. 9

# FIG. 10

LW : - - - - →

HW : ——→

FIG. 11

# FIG. 12

# FIG. 13

BLDC CIRCUIT

BRUSH CIRCUIT

BATTERY+ (30~18V) — 1500

R

INRUSH CURRENT LIMITING — 301

C — 302

DC/DC (12V) — 303

Regulator (5V) — 304

LED (Light 3EA) — 305

MCU (Abov AC30) — 306

LED (INDICATOR 1EA) — 307

160

Pump

180

Motor

250

Heater

101

PWM FET ① 18V CONSTANT VOLTAGE

Shunt R — 111

102

PWM FET ② 18 V CONSTANT VOLTAGE CURRENT CONTROL

Shunt R — 112

103

PWM FET ③ VOLTAGE CONTROL CURRENT CONTROL

Shunt R — 113

OFF: BATTERY+ ON:GND

1133

ON/OFF

GND — 1140

OPTION RESISTOR (330K) — 308

MAIN BODY COMMUNICATION INTERFACE

Signal

16V~0V

309 — BRUSH COMMUNICATION INTERFACE

ON/OFF

Rx (Pulse)

ON/OFF

E
B
C

Tx (Pulse)

310 — Sensing Heater Temp

311 — Sensing Battery Voltage

312 — Sensing Heater Water

313 — Sensing Current Brush, Heater

EP 4 678 083 A1

50

# FIG. 14

10

1500

1000

3000

100

①BATTERY VOLTAGE
(1401)

②PWM CONTROL
(FET On/OFF)
(1402)

③MOTOR INPUT
VOLTAGE
(1403)

V

t

On duty

Duty = Vref/Vbat

T

t

18V

t

# FIG. 15

```
                                              ┌─────────┐
                                              │  START  │
                                              └────┬────┘
                                                   │
                      No                           │        S1510
          ┌───────────────────────────────────────┤     ┌──────────────────────┐
          │                                        ▼     │ DETECT TOTAL OPERATING│
          │         S1560                    ┌──────────┐│  CURRENT OF LOADS     │
     ╱────────────╲                          └──────────┘└──────────────────────┘
Yes ╱ HAS CERTAIN  ╲                                           │
◄───╲ TIME ELAPSED? ╱                                          ▼         S1520
     ╲────────────╱              S1530                    ╱──────────────╲
          ▲                ┌──────────────────┐   No     ╱     TOTAL      ╲
          │                │ NORMAL OPERATION  │◄────────╲ OPERATING CURRENT>╱
          │                └──────────────────┘          ╲ FIRST CURRENT   ╱
          │                         ▲                      ╲ THRESHOLD?   ╱
          │   ┌──────────────────────┐                      ╲──────────╱
          │   │ ADJUST AMOUNT OF POWER│                         │Yes
          │   │  SUPPLIED TO AT LEAST │  S1550                  ▼         S1540
          └───│   ONE OF MOTOR,       │                   ╱──────────────╲
              │  HEATER, OR PUMP      │        No        ╱     TOTAL      ╲
              └──────────────────────┘◄─────────────────╲ OPERATING CURRENT>╱
                         ▲                               ╲ SECOND CURRENT  ╱
                         │                                ╲ THRESHOLD?   ╱
                         │                                  ╲──────────╱
                         │                                     │Yes    S1570
                         │                          ┌──────────────────────┐
                         └──────────────────────────│TRANSMIT SIGNAL TO CLEANER│
                                                    │MAIN BODY/STOP DRIVING WET│
                                                    │   MOP BRUSH           │
                                                    └──────────────────────┘
                                                            │
                                                            ▼
                                                       ┌─────────┐
                                                       │   END   │
                                                       └─────────┘
```

# FIG. 16

```
        ( START )
           │
           ▼
┌──────────────────────────────┐
│ OBTAIN INFORMATION ABOUT     │
│ REFERENCE CURRENT FOR EACH   │── S1610
│ LOAD                         │
└──────────────────────────────┘
           │
           ▼
┌──────────────────────────────┐
│ MEASURE OPERATING CURRENT OF │── S1620
│ EACH LOAD                    │
└──────────────────────────────┘
           │
           ▼
┌──────────────────────────────┐
│ SELECT LOAD WITH OPERATING   │
│ CURRENT EXCEEDING REFERENCE  │── S1630
│ CURRENT                      │
└──────────────────────────────┘
           │
           ▼
┌──────────────────────────────┐
│ ADJUST AMOUNT OF POWER       │── S1640
│ SUPPLIED TO SELECTED LOAD    │
└──────────────────────────────┘
           │
           ▼
         ( END )
```

# FIG. 17

EP 4 678 083 A1

> FIRST CURRENT THRESHOLD: 5A
>
> REFERENCE CURRENT OF MOTOR: 2A

| | | MOTOR CURRENT | HEATER CURRENT | TOTAL CURRENT | OPERATION |
|---|---|---|---|---|---|
| 1701 | 1 | 1A | 4A | 5A | DEFAULT OPERATION |
| 1702 | 2 | 2.5A | 4A (-> 2.5A) | 6.5A | LOWERING MOTOR VOLTAGE & HEATER VOLTAGE |
| 1703 | 3 | 2A | 4A (->3A) | 6A | LOWERING HEATER VOLTAGE |
| 1704 | 4 | 5A | 0A (NO OPERATION) | 5A | ABNORMALITY IN MOTOR, STOPPING OPERATION OF BRUSH |
| 1705 | 5 | 1A | 5A | 6A | LOWERING HEATER VOLTAGE/ WHEN NOT LOWERING HEATER CURRENT TO DESIRED VALUE, STOPPING OPERATION OF BRUSH |

# FIG. 18

START

MAINTAIN THIRD PWM CONTROL SWITCH ELEMENT IN OFF STATE —S1820

IS HOT WATER FUNCTION ACTIVATED? —S1810

No

Yes

DRIVE HEATER —S1830

MONITOR TEMPERATURE OF WATER STORED IN HEATING TANK —S1840

TEMPERATURE OF WATER > MAXIMUM THRESHOLD TEMPERATURE? —S1850

No

Yes

STOP DRIVING HEATER —S1860

MONITOR TEMPERATURE OF WATER STORED IN HEATING TANK —S1870

TEMPERATURE OF WATER < MINIMUM THRESHOLD TEMPERATURE —S1880

No

Yes

DRIVE HEATER AGAIN —S1890

END

# FIG. 19

<1915>

Press[−]
to turn off
Heat Jet

<1910>

HEAT
JET

<1920>

WET

MODE SWITCHING
PRESSING (−) BUTTON
TO TURN ON/OFF HEATED
WATER CLEANING MODE

MODE SWITCHING
PRESSING (−) BUTTON
TO TURN ON/OFF HEATED
WATER CLEANING MODE

FIG. 20

<2010>                                    <2020>

HEAT
JET
LUKEWARM
WATER

HEAT JET
HIGH-
TEMPERATURE
WATER

MODE SWITCHING              MODE SWITCHING

# FIG. 21

1000

Preheating

<2110>

100

100

ABOUT 55 °C
OR HIGHER

<2120>                    2101

# FIG. 22

```
     ┌─1000                              ┌─100
┌─────────────────────┐        ┌─────────────────────┐
│  CLEANER MAIN BODY  │        │    WET MOP BRUSH    │
└─────────────────────┘        └─────────────────────┘
          │                               │
          │                               ▼
          │              ┌────────────────────────────────┐
          │              │ DETECT THAT THERE IS NO WATER IN│──S2210
          │              │  HEATING TANK VIA WATER SENSOR  │
          │              └────────────────────────────────┘
          │                               │
          │                               ▼
          │              ┌────────────────────────────────┐
          │              │ TRANSMIT, TO CLEANER MAIN BODY, │
          │◀─────────────│ INFORMATION INDICATING THAT THERE│──S2220
          │              │   IS NO WATER IN HEATING TANK   │
          │              └────────────────────────────────┘
          │                               │
          │                               ▼
          │              ┌────────────────────────────────┐
          │              │   STOP DRIVING HEATER/OUTPUT    │──S2240
          │              │         NOTIFICATION            │
          │              └────────────────────────────────┘
          ▼                               │
┌────────────────────────────┐            │
│ OUTPUT NOTIFICATION TO CHECK│──S2230     │
│    STATUS OF WATER TANK     │            │
└────────────────────────────┘            │
          │
          ▼
```

# FIG. 23

START

OBTAIN INFORMATION ABOUT CONDITION CONDITION OF SURFACE TO BE CLEANED —S2301

LOAD ON SURFACE TO BE CLEANED > MAXIMUM THRESHOLD? —S2302

Yes

DECREASE AMOUNT OF POWER SUPPLIED TO MOTOR —S2306

CONTAMINATION LEVEL OF SURFACE TO BE CLEANED > REFERENCE CONTAMINATION LEVEL —S2307

No

Yes —S2309

INCREASE AMOUNT OF POWER SUPPLIED TO MOTOR

IS RAPID HEATING REQUIRED? —S2310

No

MAINTAIN CURRENT STATE —S2308

Yes —S2311

DECREASE AMOUNT OF POWER SUPPLIED TO MOTOR AND INCREASE AMOUNT OF POWER SUPPLIED TO HEATER

No

LOAD ON SURFACE TO BE CLEANED < MINIMUM THRESHOLD? —S2303

MAINTAIN CURRENT STATE —S2304

No

Yes —S2305

INCREASE AMOUNT OF POWER SUPPLIED TO MOTOR

END

EP 4 678 083 A1

FIG. 24

```
                    ┌─────────┐
                    │  START  │
                    └────┬────┘
                         │
            ┌────────────▼────────────────┐
            │ RECEIVE WATER SPRAY COMMAND │──── S2410
            └────────────┬────────────────┘
                         │               S2420
              No        ╱─┴─╲      ╱
    ┌─────────────────◄ PREHEATING WATER? ►
    │                  ╲───┬───╱
    │                     │Yes
    │        ┌────────────▼────────────┐
    │        │    STOP DRIVING HEATER  │──── S2440
    │        └────────────┬────────────┘
    │  S2430             │
    │  ╱                 │
┌───▼──────────┐  ┌──────▼──────────────┐
│ DRIVE PUMP TO│  │ DRIVE PUMP TO SPRAY │──── S2450
│ SPRAY WATER  │  │        WATER        │
└───┬──────────┘  └──────┬──────────────┘
    │             ┌──────▼──────────────┐
    │             │  DRIVE HEATER AGAIN │──── S2460
    │             └──────┬──────────────┘
    │                    │
    └──────────────►─────┤
                         │
                    ┌────▼────┐
                    │   END   │
                    └─────────┘
```

FIG. 25

SIGNAL LINE COMMUNICATION

100

140

1000

1000

2501

Spraying

Press [+]
to spray

<2520>

<2510>

# FIG. 26

```
                    ( START )
                        │
                        ▼
┌──────────────────────────────────────────────────┐
│ RECEIVE SIGNAL FOR SETTING TO AUTOMATIC SPRAYING MODE │── S2610
└──────────────────────────────────────────────────┘
                        │
                        ▼
┌──────────────────────────────────────────────────┐
│ RECEIVE INFORMATION ABOUT SPRAY AMOUNT, SPRAY INTENSITY, │
│ SPRAY TIME, OR WATER TEMPERATURE SELECTED BY USER  │── S2620
└──────────────────────────────────────────────────┘
                        │
                        ▼
┌──────────────────────────────────────────────────┐
│ DRIVE PUMP AT PREDETERMINED INTERVAL BASED ON SPRAY │
│ AMOUNT, SPRAY INTENSITY, SPRAY TIME, OR WATER      │── S2630
│ TEMPERATURE SELECTED BY USER                       │
└──────────────────────────────────────────────────┘
                        │
                        ▼
                    ( END )
```

FIG. 27

STICK VACUUM CLEANER
MY HOUSE: LIVING ROOM

UV LED IS OPERATING... ⓘ
ABOUT 60 MINS LEFT

CLEAN STATION

LAST DUST BIN EMPTIED | LAST UV LED
1 MIN AGO | 58 MINS AGO

EMPTY DUST BIN

AUTO-EMPTY DUST BIN
THE VACUUM CLEANER AUTO-MATICALLY EMPTIES THE DUST BIN WHEN DOCKED TO CLEAN STATION.

RELATED SERVICES

HOME CARE MANAGER | SmartThings ENERGY

SERVER DEVICE

FIG. 28

## INTERNATIONAL SEARCH REPORT

| International application No. |
| --- |
| **PCT/KR2024/006869** |

| **A.** | **CLASSIFICATION OF SUBJECT MATTER** |
| --- | --- |

**A47L 11/40**(2006.01)i; **G05B 11/28**(2006.01)i; **H02P 27/08**(2006.01)i

According to International Patent Classification (IPC) or to both national classification and IPC

| **B.** | **FIELDS SEARCHED** |
| --- | --- |

Minimum documentation searched (classification system followed by classification symbols)

A47L 11/40(2006.01); A47L 11/00(2006.01); A47L 11/20(2006.01); A47L 11/202(2006.01); A47L 11/34(2006.01); A47L 13/22(2006.01); G01B 21/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 스팀(steam), 펄스 폭 변조(pulse width modulation), 듀티(duty), 전류(current) 및 센서(sensor)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| Y | KR 10-2023-0110053 A (LG ELECTRONICS INC.) 21 July 2023 (2023-07-21)<br>See paragraphs [0054]-[0097] and [0137]-[0254] and figures 1-26. | 1-15 |
| Y | KR 10-2019-0125915 A (LG ELECTRONICS INC.) 07 November 2019 (2019-11-07)<br>See paragraphs [0053], [0126]-[0264], [0350], [0367] and [0564] and figures 1-40. | 1-15 |
| Y | KR 10-2016-0116169 A (LEE, Seung Yeon) 07 October 2016 (2016-10-07)<br>See paragraphs [0052] and [0055] and figure 2. | 5,6,10 |
| Y | KR 10-2019-0000234 A (YUN, Yeo Pyo) 02 January 2019 (2019-01-02)<br>See paragraphs [0054] and [0062] and figure 2. | 5,7,15 |
| Y | KR 10-2007-0067784 A (SAMSUNG ELECTRONICS CO., LTD.) 29 June 2007 (2007-06-29)<br>See paragraphs [0033] and [0035] and figures 4-5. | 9 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 August 2024** | **27 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/006869**

| Patent document cited in search report | | | Publication date (day/month/year) | Patent family member(s) | | | Publication date (day/month/year) |
|---|---|---|---|---|---|---|---|
| KR | 10-2023-0110053 | A | 21 July 2023 | AU | 2022-432272 | A1 | 20 July 2023 |
| | | | | WO | 2023-136425 | A1 | 20 July 2023 |
| KR | 10-2019-0125915 | A | 07 November 2019 | AU | 2019-263346 | A1 | 26 November 2020 |
| | | | | AU | 2019-263346 | B2 | 01 September 2022 |
| | | | | CN | 111989019 | A | 24 November 2020 |
| | | | | CN | 111989019 | B | 10 March 2023 |
| | | | | EP | 3788931 | A1 | 10 March 2021 |
| | | | | EP | 3788931 | B1 | 21 June 2023 |
| | | | | KR | 10-2021-0033451 | A | 26 March 2021 |
| | | | | KR | 10-2289205 | B1 | 13 August 2021 |
| | | | | KR | 10-2686981 | B1 | 22 July 2024 |
| | | | | US | 11058278 | B2 | 13 July 2021 |
| | | | | US | 2019-0328201 | A1 | 31 October 2019 |
| | | | | WO | 2019-212189 | A1 | 07 November 2019 |
| KR | 10-2016-0116169 | A | 07 October 2016 | KR | 10-1669066 | B1 | 09 November 2016 |
| KR | 10-2019-0000234 | A | 02 January 2019 | None | | | |
| KR | 10-2007-0067784 | A | 29 June 2007 | KR | 10-0791376 | B1 | 07 January 2008 |

Form PCT/ISA/210 (patent family annex) (July 2022)